# EUROPEAN PATENT APPLICATION

(11) **EP 2 515 245 A1**
(43) Date of publication of application: **24.10.2012**
(21) Application number: 10832837.8
(22) Date of filing: 23.11.2010
(51) Int. Cl.: G06F 17/30

(54) **BIT STREAM RETRIEVAL DEVICE, RETRIEVAL METHOD, AND PROGRAM**

(30) Priority: 30.11.2009 JP 2009272514; 28.02.2010 JP 2010043644; 27.05.2010 JP 2010121153
(71) Applicant: S. Grants Co., Ltd., Chiba-shi, Chiba 261-0004 (JP)
(72) Inventor: SHINJO, Toshio, Chiba-shi Chiba 261-0004 (JP); KOKUBUN, Mitsuhiro, Chiba-shi Chiba 261-0004 (JP)
(74) Representative: Klunker . Schmitt-Nilson . Hirsch
(86) International application number: PCT/JP2010/006834
(87) International publication number: WO 2011/064984

(57) **Abstract**

A branch (813a) node includes a discrimination bit position(803a), and the primary node (822a) of the node pair (821 a) that is its link target is disposed in an array element whose node location number (720), for the array wherein branch nodes are disposed, is twice the node location number (720) of the branch node (813a). Leaf nodes (832a, 833a) include index keys (818a) and are only disposed at the lowest level in the tree (200b). The bit value at the discrimination bit position in the search key (280) is obtained and kept for all branch nodes as branch target information, and the node location numbers of the array elements wherein are disposed the nodes that are their link target are twice the node location numbers of the branch nodes that are the link source, and these can be computed from branch target information.

## Description

### Field of the Invention

This invention is related to bit string retrieval technology, especially to bit string retrieval using a coupled node tree.

### Background Art

In recent years, with advancements in information-based societies, large-scale databases have come to be used in various places. To search such large-scale databases, it is usual to search for a desired record, retrieving the desired record by using as indexes items within records associated with addresses at which each record is stored. Character strings in full-text searches can also be treated as index keys.

Then, because the index keys can be expressed as bit strings, the searching of a database can be reduced to searching for bit string data in the database. Prior art related to a bit string search that searches for bit string data includes the search art using a coupled node tree taught in the patent documents 1, 2, and 3 below.

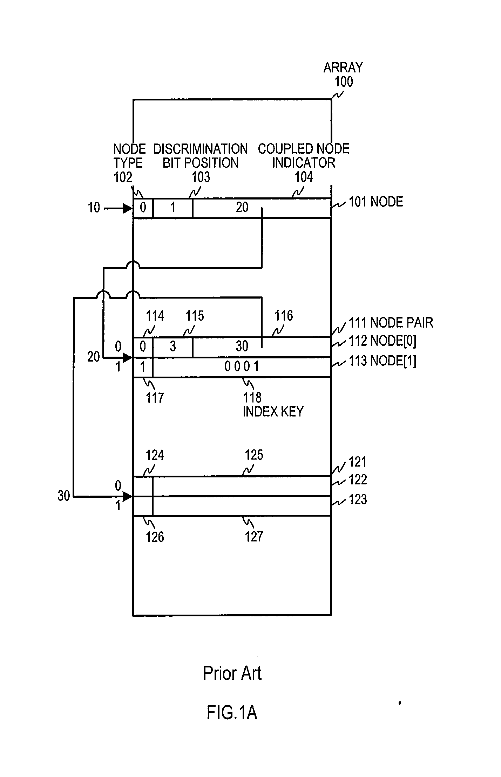

FIG. 1A is a drawing that describes an exemplary configuration of the prior art of a coupled node tree that is disposed in an array.
Referring to FIG. 1A, a node 101 is located at the array element of the array 100 with the array element number 10. The node 101 is formed by a node type 102, a discrimination bit position 103, and a coupled node indicator 104. The node type 102 is 0, which indicates that the node 101 is a branch node. The value 1 is stored in the discrimination bit position 103. The coupled node indicator 104 has stored in it the array element number 20 of the primary node of the node pair of the link target. To simplify notation hereinafter, the array element number stored in a coupled node indicator is sometimes called the coupled node indicator. Also, the array element number stored in a coupled node indicator is sometimes expressed as the code appended to that node or the code attached to a node pair.

The array element having the array element number 20 has stored therein a node [0] 112, which is the primary node of the node pair 111. The non-primary node [1] 113 forming a pair with the primary node is stored into the next, adjacent, array element (array element number 20 + 1). The value 0 is stored in the node type 114 of the node [0] 112, the value 3 is stored in the discrimination bit position 115, and the value 30 is stored in the coupled node indicator 116. The value 1 is stored in the node type 117 of the node [1] 113, thereby indicating that the node 1 [113] is a leaf node. The value "0001" is stored in the index key 118.

Primary nodes are indicated as the node [0], and non-primary nodes that are paired therewith are indicated as the node [1]. Also the node stored in an array element with some array element number is called the node of that array element number and the array element number stored in the array element of that node is also called the array element number of the node.
The contents of the node pair 121 formed by the node 122 and the node 123 that are stored in the array elements having array element numbers 30 and 31 are not described.

The 0 or 1 that is appended to the node [0] 112, the node [1] 113, the node 122, and the node 123 indicates respectively to which node of the node pair linking is to be done when performing a search using a search key. Linking is done to the node having an array element number that is derived by adding to the coupled node indicator of the branch node the 0 or 1, which is the bit value of the search key at the discrimination bit position of the immediately previous branch node.
Therefore, by adding the bit value of the discrimination bit position of the search key to the coupled node indicator of the immediately previous branch node, it is possible to determine the array element number of an array element storing a node at the link target.
Although in the above-noted example the smaller of the array element numbers at which the node pair is located is used as the coupled node indicator, it will be understood that it is also possible to use the larger of the array element numbers in the same manner.

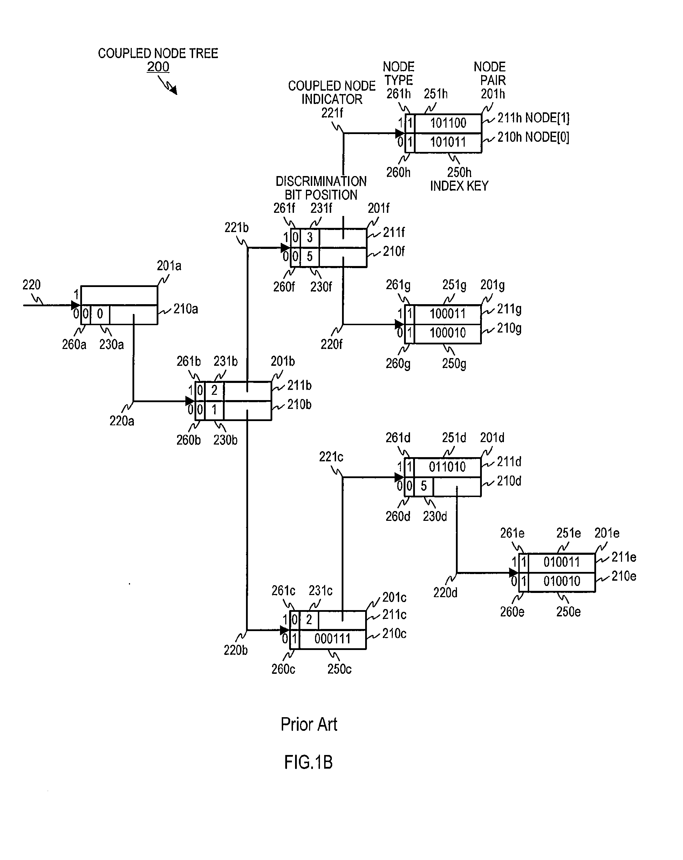

FIG. 1B is a drawing that conceptually describes an embodiment of a tree structure of a coupled node tree in prior art.
The reference numeral 210a shows the root node of the coupled node tree 200 shown in the example in FIG. 1B. In the example in the drawing, the root node 210a is the primary node of the node pair 201 a located at the array element number 220.

In this tree structure, a node pair 201b is located below the root node 210a, and below that are located the node pair 201c and the node pair 201f. Below the node pair 201f are located the node pair 201h and the node pair 201g. Below the node pair 201c is located the node pair 201d, and below the node pair 201 d is located the node pair 201 e.

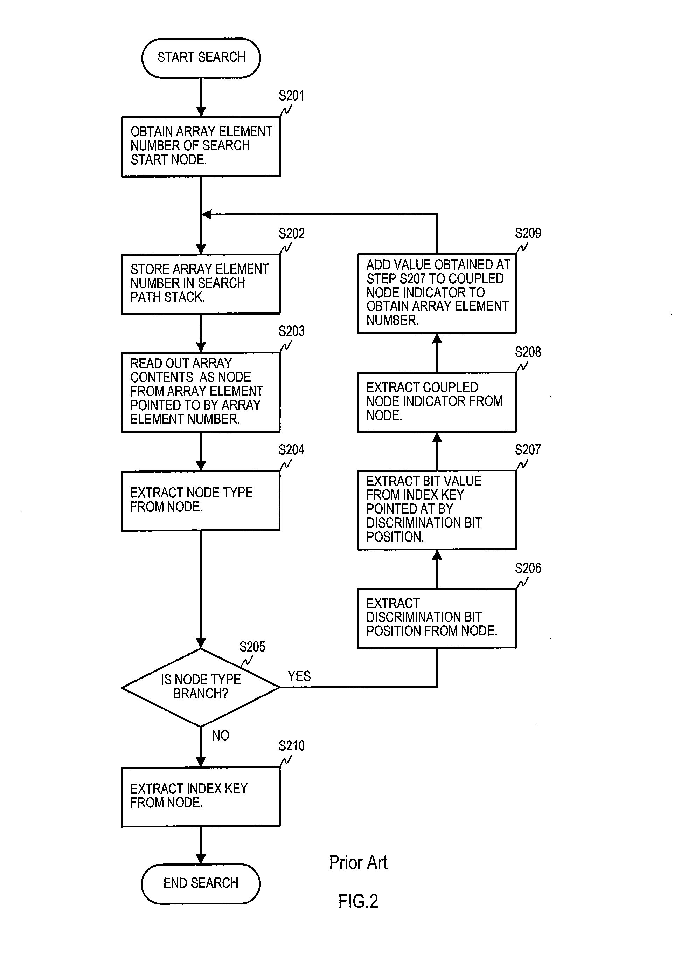

The 0 or 1 code that is appended before each node is the same as the codes that are appended before the array element numbers described in FIG. 2A. The tree is traversed in accordance with the bit values at discrimination bit positions of the search key, so that the leaf node of the sought for item is found.

In the example described, the node type 260a of the root node 210a is 0, thereby indicating that this is a branch node, and the discrimination bit position 230a indicates 0. The coupled node indicator is 220a, which is the array element number of the array element in which the primary node 210b of the node pair 201b is stored.
The node pair 201b is formed by the node 210b and the node 211b, the node types 260b and 261 b thereof both being 0, indicating branch nodes. The discrimination bit position 230b of the node 210b has 1 stored therein, and in the coupled node indicator of the link target is stored the array element number 220b of the array element in which is stored the primary node 210c of the node pair 201c.

Because 1 is stored in the node type 260c of the node 210c, this node is a leaf node, and thus includes an index key. "000111" is stored in the index key 250c. The node type 261 c of the node 211c is 0, the discrimination bit position 231c of the node 211c is 2, and in the coupled node indicator is stored the array element number 221c of an array element in which is stored the primary node 210d of the node pair 201d.
The node type 260d of the node 210d is 0, the discrimination bit position 230d of the node 210d is 5, and in the coupled node indicator is stored the array element number 220d of an array element in which is stored the primary node 210e of the node 201 e. The node type 26 1 d of the node 211 d that is paired with the node 210d is 1, and "011010" is stored in the index key 251d.
The node types 260e and 261e of the nodes 210e and 211e of the node pair 201 e are both 1, indicating that both are leaf nodes. In the index keys 250e and 251e of each are stored "010010" and "010011" respectively as index keys.

The discrimination bit position 231b of the node 211b, which is the other node of the node pair 201 b, has 2 stored therein, and the array element number 221 b of the array element in which is stored the primary node 210f of the node pair 201f is stored in the coupled node indicator of the link target.
The node types 260f and 261f of the nodes 210f and 211f of the node pair 201f are both 0, indicating that both are branch nodes. In the discrimination bit positions 230f and 231f of each are stored 5 and 3, respectively. The array element number 220f of the array element in which is stored the primary node 210g of the node pair 201 g is stored in the coupled node indicator of the node 210f, and the array element number 221f of an array element in which is stored the node [0] 210h, which is the primary node of the node pair 201h, is stored in the coupled node indicator of the node 211f.
The node types 260g and 261g of the nodes 210g and 211g of the node pair 20 1 g are both 1, indicating that both are leaf nodes, and "100010" and "100011" are stored in the index keys 250g and 25 1 g thereof, respectively.
In the same manner, the node types 260h and 261h of the node [0] 210h of the node pair 201h, and the node [1] 211h, which is paired therewith, are both 1, indicating that both are leaf nodes, and "101011" and "101100" are stored in the index keys 250h and 251h thereof, respectively.

Next the basic search processing using the above noted coupled node tree is described. In the following description, although it is not especially illustrated, a temporary storage area is prepared to hold various values obtained during processing so that they can be used in subsequent processing. Also there are cases in the description wherein the label for a data storage area is applied to the data itself stored in a data storage area and wherein the name of the data itself is used as the name of the temporary storage area wherein the data is stored.

FIG. 2 is a drawing describing an example of the processing flow for bit string searches using a coupled node tree in the prior art.
First, in step S201 the array element number of the search start node is acquired. The search start node can be any node configuring the coupled node tree and it is stored in the array position that corresponds to the obtained array element number. The search start node can be specified by input from an operator or from an application program using the processing exemplified in FIG. 2.
Although the acquired array element number of the search start node is set in an unillustrated search start node setting area, this search start node setting area is one of the above noted "temporary memory areas used to enable various values obtained during processing to be used in subsequent processing". In the description hereinbelow, instead of the expression "set in an unillustrated search start node setting area", expressions such as "obtain the array element number of the search start node", "set as the search start node", or "set in the search start node" may be used.

Next, at step S202, the array element number acquired is stored on the search path stack, and at step S203, the array element corresponding to the array element number is read out as a node to be referenced. Then at step S204, the node type is extracted from the read out node, and at step S205, a determination is made as to whether the node type is a branch node or not.
If the determination made at step S205 is that the node type is a branch node, processing proceeds to step S206, wherein the discrimination bit position is extracted from the node, and then at step S207, the bit value of the search key at the discrimination bit position extracted at step S206 is obtained. Next, at step S208, the coupled node indicator is obtained from the node. Then, proceeding to step S209, the bit value obtained at step S207 is added to the coupled node indicator obtained at step S208, thereby obtaining a new array element number, and return is made to step S202.

Thereafter, the processing from step S202 to step S209 is repeated until the determination at step S205 is that the node is a leaf node and processing proceeds to step S210. At step S210, the index key is extracted from the leaf node, and processing ends.

The processing flow in searching for the index key "100010" from the coupled node tree shown in the example in FIG. 1B, using the root node as the search start node, is briefly described below. The discrimination bit positions are numbered 0, 1, 2, ... and so on from the highest bit position.

Because the root node is the search start node, processing is started from the root node 210a using the bit string "100010" as the search key. Because the discrimination bit position 230a of the root node 210a is 0, examining the bit value of the discrimination bit position 0 reveals 1. This being the case, 1 is added to the array element number 220a stored in the coupled node indicator and linking is done to the node 211b stored in the resulting array element number. Because 2 is stored in the discrimination bit position 231b of the node 211b, examination of the bit value of the discrimination bit position 2 reveals 0, resulting in linking to the node 210f stored in the array element having the array element number 221 b stored in the coupled node indicator.
Because 5 is stored in the discrimination bit position 230f of the node 210f, and because examination of the bit value of the discrimination bit position 5 of the search key "100010" reveals 0, linking is done to the node 210g stored in the array element having the array element number 220f stored in the coupled node indicator.
Because the node type 260g of the node 210g is 1, indicating a leaf node, the index key 250g is read out as the search result. Searching is performed in this manner using the coupled node tree. Also when the search result key is compared with the search key, they are found to coincide, both being "100010".

In the flowchart example shown in the above noted FIG. 2 search processing has been terminated by extracting an index key from a node as the search result key, but it is also possible to make a determination of the coincidence of the search result key and the search key and make it a successful search if they coincide and make it a search failure if they do not coincide.

The leaf nodes of the coupled node tree shown in FIG. 1A and FIG. 1B include index keys directly, and the search processing shown in FIG. 2 extracts the index keys from the leaf nodes. This configuration of leaf nodes and the extraction of index keys in the search process is the same as that taught in patent document 1 and patent document 2.

On the other hand, the leaf nodes in the coupled node tree taught in patent document 3 hold, instead of the index key itself, a reference pointer, which is a pointer showing the position in a storage area wherein the index key is stored. And so extracting the index key in search processing is done by extracting the reference pointer from the leaf node and using it to access the storage area pointed to by the reference pointer.
Also, patent document 4 describes the saving of a coupled node tree by successively traversing the nodes in the coupled node tree.
Patent document 1: JP 2008-015872 A
Patent document 2: JP 2008-112240 A
Patent document 3: JP 2008-269503 A
Patent document 4: JP 2008-269197 A

### SUMMARY OF THE INVENTION

A coupled node tree possesses the special characteristic of requiring less storage capacity to store the tree in comparison with the trees used in searches in prior art. However, when the size of the data to be searched increases greatly, it is preferable to have a tree configuration that can be disposed in a storage means with an even smaller capacity.
Whereat, the problem this invention intends to solve is to provide a tree configuration that enables the coupled node tree to be disposed in a storage means with an even smaller capacity.

In accordance with this invention, each of the nodes in a coupled node tree are disposed in array elements in an array corresponding to their position in the tree. The array element number of the array element wherein is disposed the root node is taken to be 1, and the array element number of the array element wherein is disposed the primary node of the node pair that is the link target of a branch node is obtained by doubling the value of the array element number of the array element wherein is disposed the branch node. Thus, in accordance with this invention, the branch nodes need not include a coupled node indicator.

In accordance with preferred embodiment 1 of this invention a branch node includes a node type and a discrimination bit position but does not include a coupled node indicator. Also a leaf node includes a node type and an index key or information for accessing the index key. The information for accessing the index key may be reference pointer showing the position in a storage area wherein the index key is stored described in the above noted patent document 3 but it is not limited to that method and may also be an indexing value for an index that obtains the position in a storage area wherein the index key is stored.

Also, in accordance with preferred embodiment 2 of this invention, a coupled node tree is configured by means of a specific bit value "0" or "1" inserted in a specific bit position in an index key to be searched for, and in the same way, a search is performed by means of the same specific bit value "0" or "1" inserted in the same specific bit position in the search key as in the index key to be searched for. Also, the branch node and leaf node do not include a node type and the branch node includes a discrimination bit position but does not include a coupled node indicator and the leaf node includes an index key or information for accessing the index key.
Then when the maximum number of levels in a coupled node tree is taken to be N, by configuring the tree such that leaf nodes only exist at the N-th level and nothing other than leaf nodes exist at the N-th level, the node types can be discriminated. Thus search processing is done by repeating the link operations from the root node up to the node in the N-th level, which is the last level.

Also, in accordance with preferred embodiment 3 of this invention, a coupled node tree is configured by means of a specific bit value "0" or "1" inserted in a specific bit position in an index key to be searched for, and in the same way, a search is performed by means of the same specific bit value "0" or "1" inserted in the same specific bit position in the search key as in the index key to be searched for. Also, the branch node and leaf node do not include a node type and the branch node includes a discrimination bit position but does not include a coupled node indicator and the leaf node includes an index key or information for accessing the index key.
Then when the maximum number of levels in a coupled node tree is taken to be N, by configuring the tree such that leaf nodes only exist at the N-th level and nothing other than leaf nodes exist at the N-th level, the node types can be discriminated.
In other words the configuration of the coupled node tree in accordance with preferred embodiment 3 of this invention is the same as that of embodiment 2 of this invention.
However in embodiment 3 of this invention, at the start of search processing using a search key, branch target information showing whether to branch to the node position [0] or the node position [1] in the link target of each branch node is obtained by means of the discrimination bit position in a branch node and the bit value in the search key. And so, search processing is implemented by repeating the link operation traversing branch target information at each level from the root node up to the node in the N-th level, which is the last level.

In accordance with this invention, because the branch node, at least, does not include a coupled node indicator that identifies the link target, the size of the nodes can be reduced. For example, when the number of index keys is 16, the number of bits that can express the index keys and prescribe the size of the leaf node is 4. On the other hand, because the number of bits necessary for the discrimination bit position is 2 and the number of bits necessary for the coupled node indicator is 4 (because the number of node pairs that are link targets, including the root node, is 1 + 1 + 2 + 4 + 8 = 16), the number of bits that prescribes the size of branch nodes in the previous art is a total of 6.

Thus the branch nodes in the prior art had to have a larger storage capacity than leaf nodes. This difference in storage capacity increases even further when the numbers of index keys grows larger. However, in accordance with this invention, because a memory area is not necessary for storing the coupled node indicator, the size of the array in which the coupled node tree is disposed can be reduced.

Also, in accordance with embodiment 2 and embodiment 3 of this invention, in addition to reducing the size of the array in which the coupled node tree is disposed, the processing speed can be improved because the branching operation based on a node type determination is eliminated from the search processing.

### BRIEF DESCRIPTION OF THE DRAWINGS

FIG. 1A is a drawing that describes an exemplary configuration of the prior art of a coupled node tree that is disposed in an array.
FIG. 1B is a drawing that conceptually describes an embodiment of a tree structure of a coupled node tree in prior art.
FIG. 2 is a drawing describing an example of the processing flow for bit string searches using a coupled node tree in the prior art.
FIG. 3 is a drawing describing an exemplary hardware configuration in one embodiment of this invention
FIG. 4A is a drawing describing an exemplary configuration of a coupled node tree disposed in an array in embodiment 1 of this invention.
FIG. 4B is a drawing showing conceptually the tree configuration of a coupled node tree related to embodiment 1 of this invention.
FIG. 5 is a drawing describing an example of the function block configuration for a bit string search apparatus in embodiment 1 of this invention.
FIG. 6 is a drawing describing an example of the processing flow to search for a bit string in embodiment 1 of this invention.
FIG. 7 is a drawing showing an example of a search using a coupled node tree in embodiment 1 of this invention.
FIG. 8A is a drawing describing an exemplary configuration of a coupled node tree disposed in an array in embodiment 2 of this invention.
FIG. 8B is a drawing showing conceptually the tree configuration of a coupled node tree related to embodiment 2 of this invention.
FIG. 9 is a drawing describing an example of a function block configuration for a bit string search apparatus in embodiment 2 of this invention.
FIG. 10 is a drawing describing an example of the processing flow to search for a bit string in embodiment 2 of this invention.
FIG. 11 is a drawing describing an example of the processing flow to obtain the array element number of a link target in embodiment 2 of this invention.
FIG. 12 is a drawing showing an example of a search using a coupled node tree in embodiment 2 of this invention.
FIG. 13 is a drawing describing an exemplary configuration of a coupled node tree disposed in an array in a variation of embodiment 1 of this invention.
FIG. 14 is a drawing describing an example of the processing flow to search for a bit string in an example of a variation in embodiment 1 of this invention.
FIG. 15 is a drawing describing an exemplary configuration of a coupled node tree disposed in an array in an example of a variation in embodiment 2 of this invention.
FIG. 16 is a drawing describing an example of the processing flow to search for a bit string in an example of a variation in embodiment 2 of this invention.
FIG. 17 is a drawing describing an example of the processing flow to obtain the array element number of a link target.
FIG. 18A is a drawing describing an example of the processing flow for the prior stage of processing to generate a pointerless tree in embodiment 1 and embodiment 2 of this invention.
FIG. 18B is a drawing describing an example of the processing flow for the latter stage of processing to generate a pointerless tree in embodiment 1 and embodiment 2 of this invention.
FIG. 19 is a drawing describing an example of the processing flow to traverse the tree from the traversal start node and to store a node in the pointerless tree.
FIG. 20A is a drawing describing an example of the processing flow to generate a node in embodiment 1 of this invention.
FIG. 20B is a drawing describing an example of the processing flow to generate a node in embodiment 2 of this invention.
FIG. 21 is a drawing describing an example of the processing flow to obtain the maximum number of levels in the tree before conversion.
FIG. 22 is a drawing showing an example of the processing flow to traverse the tree from the traversal start node, to count the number of node levels, and to obtain the maximum number of node levels.
FIG. 23 is a drawing describing conceptually search processing in embodiment 3 of this invention.
FIG. 24 is a drawing describing an example of the processing flow for search processing in embodiment 3 of this invention.
FIG. 25A is a drawing describing an example of the processing flow to obtain a branch target array from a branch node array by means of a search key.
FIG. 25B is a drawing describing an example of the processing flow to set the branch target information in the branch target array using the discrimination bit position and the search key.
FIG. 26A is a drawing describing an example of the processing flow to obtain a node location number in the leaf node array based on the branch target array.
FIG. 26B is a drawing describing an example of the processing flow to obtain the array element number of a node in the next level using the branch target information.
FIG. 26C is a drawing describing an example of the processing flow to obtain a node location number in the leaf node array using the branch target information.
FIG. 27 is a drawing describing an exemplary function block configuration for a bit string search apparatus in embodiment 3 of this invention.
FIG. 28A is a drawing describing an example of the processing flow of the prior stage of processing to generate a pointerless tree in embodiment 3 of this invention.
FIG. 28B is a drawing describing an example of the processing flow of the latter stage of processing to generate a pointerless tree in embodiment 3 of this invention.
FIG. 29 is a drawing describing an example of the processing flow to generate a branch node in embodiment 3 of this invention.
FIG. 30 is a drawing describing an example of the processing flow to generate a leaf node in embodiment 3 of this invention.
FIG. 31A is a drawing describing an example of the processing flow of the prior stage of processing to obtain the maximum number of levels in a tree before conversion.
FIG. 31B is a drawing describing an example of the processing flow of the latter stage of processing to obtain the maximum number of levels in a tree before conversion.

### Detailed Description Of The Invention

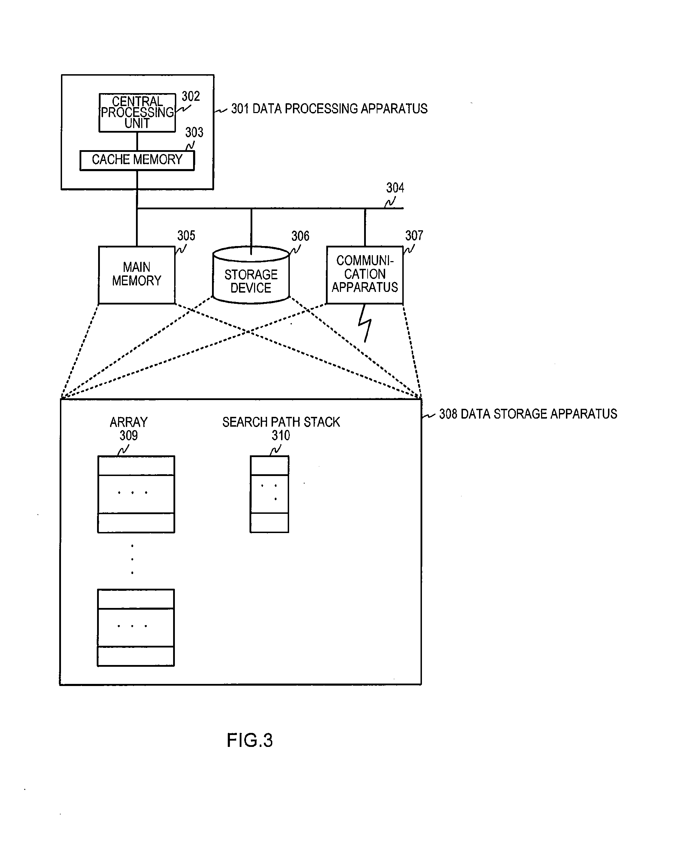

FIG. 3 is a drawing describing an exemplary hardware configuration in one embodiment of this invention. Search processing can be implemented with the searching apparatus of the present invention by a data processing apparatus 301 having at least a central processing unit 302 and a cache memory 303, and a data storage apparatus 308. The data storage apparatus 308, which has an array 309, into which is disposed a coupled node tree, and a search path stack 310 into which are stored array element numbers of nodes which are traversed during the search, can be implemented by a main memory 305 or a storage device 306, or alternatively, by using a remotely disposed apparatus connected via a communication apparatus 307.
Also, if the leaf node holds information for accessing the index key rather than the index key itself, a storage area holding the keys is provided in the data storage apparatus.

In the example described in FIG. 3, although the main memory 305, the storage device 306, and the communication apparatus 307 are connected to the data processing apparatus 301 by a single bus 304, there is no restriction to this connection method. The main memory 305 can be disposed within the data processing apparatus 301, and the search path stack 310 can be implemented as hardware within the central processing unit 302. It will be understood that it is alternatively possible to select appropriate hardware elements in accordance with the usable hardware environment and the size of the index key set, for example, having the array 309 held in the storage device 306 and having the search path stack 310 held in the main memory 305.

Also, although it is not particularly illustrated, a temporary memory area can of course be used to enable various values obtained during processing to be used in subsequent processing.

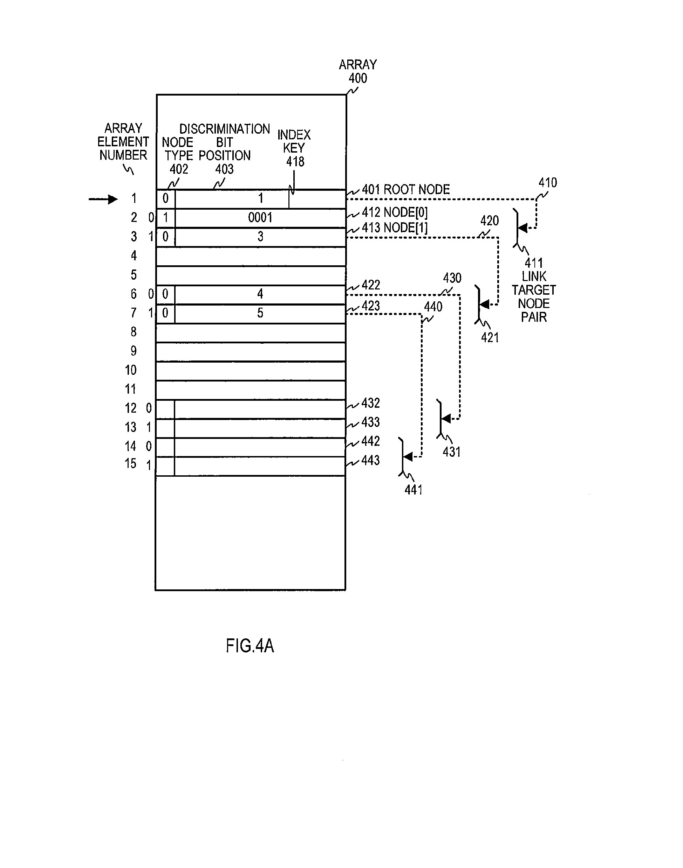

Next embodiment 1 of this invention is described referencing FIG. 4A to FIG. 7.
FIG. 4A is a drawing describing an exemplary configuration of a coupled node tree disposed in an array in embodiment 1 of this invention. When this configuration is compared with the exemplary configuration shown in FIG. 1A, it can be seen that the branch node is lacking an area for storing the coupled node indicator. Also, the consecutive numbers 1 to 15 are depicted as the array element numbers.

Referencing FIG. 4A, the root node 401 is disposed in the array element in array 400 with the array element number 1. Root node 401 is configured from a node type 402 and a discrimination bit position 403. The node type 402 is a 0, thus indicating that root node 401 is a branch node. The discrimination bit position 403 has the value 1 stored therein.

Node [0] 412, which is the primary node of node pair 411, which pair is the link target shown by the dotted-line arrow 410 from the root node 401, whose array element number is 1, is disposed in the array element with array element number 2, which element number is the value double that of array element number 1 for the root node 401, which is the parent node positioned immediately higher in the tree. Then node [1] 413, which is the pair of the primary node, is disposed in the next adjacent array element (array element number 3). A 1 is stored in the node type of node [0] 412, indicating that node [0] 412 is a leaf node. The value "0001" is stored in index key 418. On the other hand a 0 is stored in the node type of node [1] 413, indicating that node [1] 413 is a branch node. The discrimination bit position for branch node 413 has the value 3 stored therein.

The node 422, which is the primary node of link target node pair 421 shown by the dotted-line arrow 420 from branch node 413, for which the array element number is 3, is disposed in the array element with the array element number 6, which value is computed by doubling the array element number 3 for node 413, which is its parent node. And node 423, which is the pair of the primary node, is disposed in the next adjacent array element (array element number 7). The node type of node 422 has a 0 stored therein, indicating that node 422 is a branch node. The discrimination bit position for branch node 422 has a 4 stored therein. The node type of node 423 has a 0 stored therein, indicating that node 423 is a branch node. The discrimination bit position for branch node 423 has a 5 stored therein.

Also, no nodes are disposed in the array elements with array element number 4 and array element number 5.
As is clear from the above example, the array element number of the primary node of the link target node pair is double the value of the array element number of the parent node.

And so the node 432, which is the primary node of link target node pair 431 shown by the dotted-line arrow 430 from branch node 422, for which the array element number is 6, is disposed in the array element with the array element number 12. And node 433, which is the pair of the primary node, is disposed in the next adjacent array element (array element number 13). Depiction of the contents of node 432 and node 433 is omitted.

In the same way, the node 442, which is the primary node of link target node pair 441 shown by the dotted-line arrow 440 from branch node 423, for which the array element number is 7, is disposed in the array element with the array element number 14. And node 443, which is the pair of the primary node, is disposed in the next adjacent array element (array element number 15). Depiction of contents of node 442 and node 443 is omitted.
Also, no nodes are disposed in the array elements from array element number 8 to array element number 11.

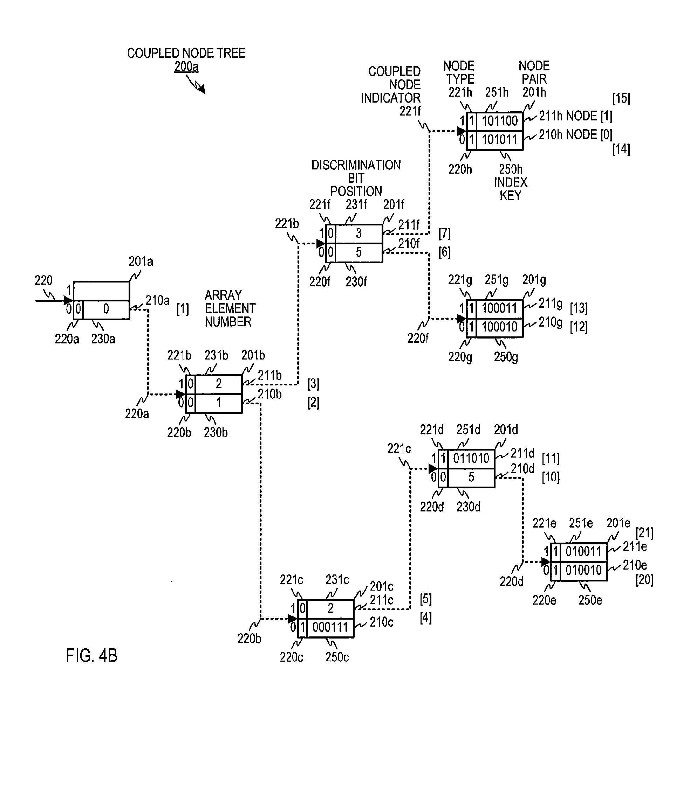

FIG. 4B is a drawing showing conceptually the tree configuration of a coupled node tree related to embodiment 1 of this invention. Because, when this tree configuration is compared to the tree configuration of coupled node tree 200 shown in FIG. 1B, the leaf nodes of coupled node tree 200a shown in FIG. 4B are the same and the values of the discrimination bit positions in the branch nodes are also the same as those shown in FIG. 1B, the branching pattern of the trees themselves are the same. However, the branch node does not include a coupled node indicator, which is the array element number of the primary node of the node pair that is the link target. Because the coupled node indicator can be obtained by doubling the value of array element number of the branch node, the connection to the link target by a coupled node indicator is expressed by a dotted-line arrow labeled with the coupled node indicator. Also, the array element number of the array element wherein each node is disposed is indicated close to the label indicating each node, and for the root node 210a this is shown as [1]. Because, other than the depiction of the coupled node indicators and array element numbers, what is shown here is the same as that depicted in FIG. 1B, further explanation is omitted.

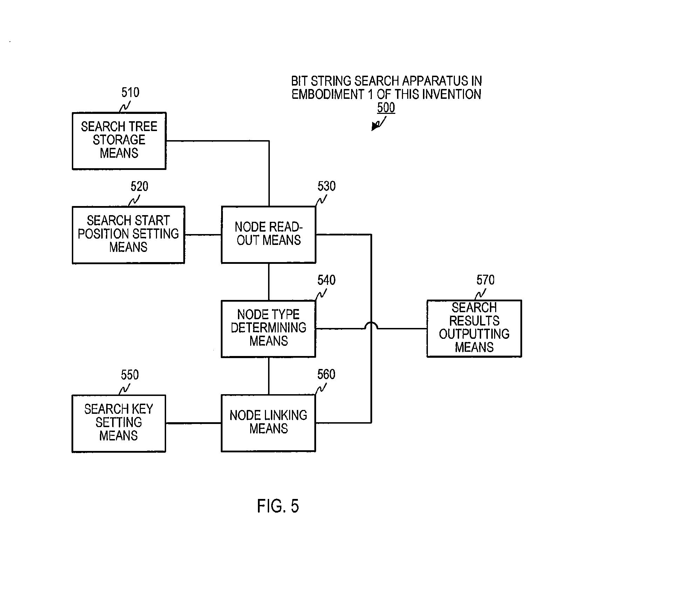

FIG. 5 is a drawing describing an example of the function block configuration for a bit string search apparatus in embodiment 1 of this invention.
The bit string search apparatus 500 shown in the example in FIG. 5 that is related to embodiment 1 of this invention prepares a search tree storage means 510, a search start position setting means 520, a node read-out means 530, a node type determining means 540, a search key setting means 550, a node linking means 560, and a search results outputting means 570.

The array is kept in the storage area in search tree storage means 510, and the coupled node tree is disposed in that array. The array element number of the search start node is set in the search start position setting means 520. If the root node is made the search start node, 1 is set as the array element number. The setting of the search start position can be done by the settings of the user that uses the results of the search process.

The node read-out means 530 reads out the search start node of the array element number set by search start position setting means 520, or the node that is the link target of the array element number set by the node linking means 560. The node type identifying means 540 determines the node type of the node read out by node read-out means 530, and if the node is a leaf node it passes that leaf node to the search results outputting means 570 and if the node is a branch node it passes that branch node to the node linking means 560.

The search key is set in search key setting means 550. The setting of the search key can be done by the settings of the user that uses the results of the search process. The node linking means 560 adds the value of the bit in the search key set by the search key setting means 550 at the discrimination bit position in the branch node passed by the node type determining means 540 to the value which is computed by doubling the array element number of the array element in which is disposed that branch node and sets that resulting value as the array element number of the array element in which is disposed the node to be read out next.

The search results outputting means 570 extracts from the leaf node passed by the node type determining means 540 the index key or the information for accessing the index key. When the item extracted from the leaf node is the index key, that index key is output as the search result key. When the item extracted from the leaf node is the information for accessing the index key, the index key is read out based on the extracted information for accessing the index key and that index key is output as the search result key.
It is also possible to compare the search result key with the search key and if they coincide, take the search to be successful and if they do not coincide take the search to be a failure. The function block configuration described above referencing FIG. 5 is of course only 1 such example and it is clear that various modifications are possible.

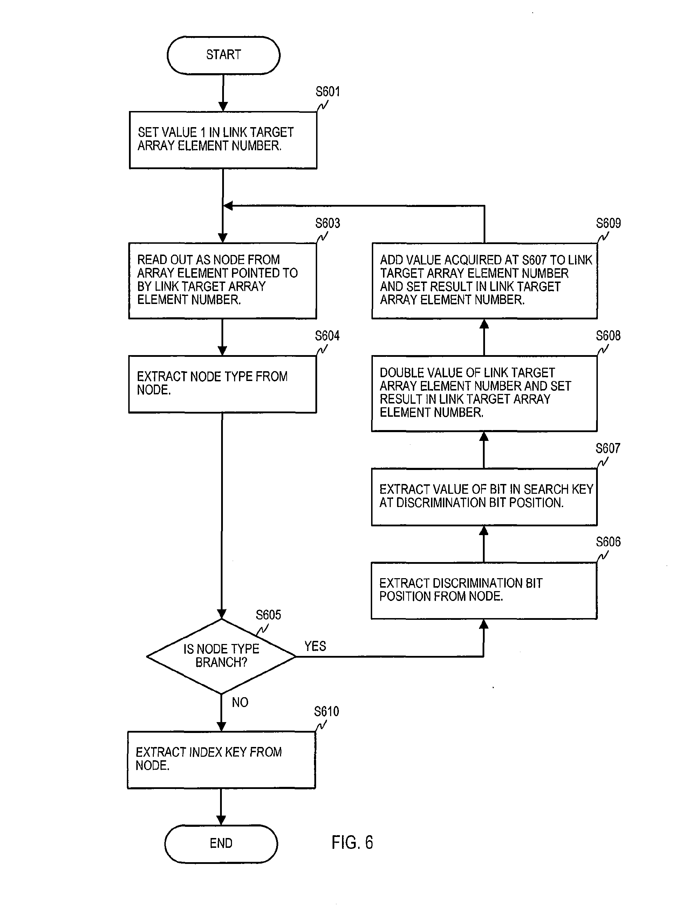

Hereinbelow, the search processing in embodiment 1 of this invention is described referencing FIG. 6. FIG. 6 is a drawing describing an example of the processing flow to search for a bit string in embodiment 1 of this invention.

First, at step S601, 1 is set in the link target array element number. This link target array element number is one of the above noted unillustrated temporary storage areas. The array element number of the search start node or the array element number of the primary node of the link target node pair is set in the link target array element number. In the example shown in FIG. 6, the root node is set as the search start node. Even if the search start node is a node other than the root node, the processing flow hereinbelow is the same.

Next at step S603, the array element for the array element number set in the link target array element number is read out from the array as a node to be referenced. At step S604, the node type is extracted from the read-out node, and at step S605, a determination is made as to whether the node type is a branch node or not.

If the determination made at step S605 is that the node type is a branch node, processing proceeds to step S606, wherein the discrimination bit position is extracted from the node. Next, at step S607, the bit value of the search key at the extracted discrimination bit position is obtained. Then at step S608, the value of the array element number set in the link target array element number is doubled and set in the link target array element number. Then, at step S609, the bit value obtained at step S607 is added to the coupled node indicator obtained at step S608, and the result is set in the link target array element number as the new array element number, and a return is made to step S603.

Thereafter, the processing from step S603 to step S609 is repeated until the determination in step S605 is that of a leaf node, whereby processing proceeds to step S610. At step S610, the index key is extracted from the leaf node and processing is terminated.
Also although the above noted example assumes that the index key is included directly in the leaf node, if the leaf node includes information for accessing the index key, the information for accessing the index key is extracted from the leaf node in step S610, and in an additional step, the index key is extracted using the extracted information for accessing the index key.
Also, after the index keys has been extracted, that index key can also be used by another application as the search result key, and a determination of the coincidence with the search key can also be made and the search can be made a success or failure.

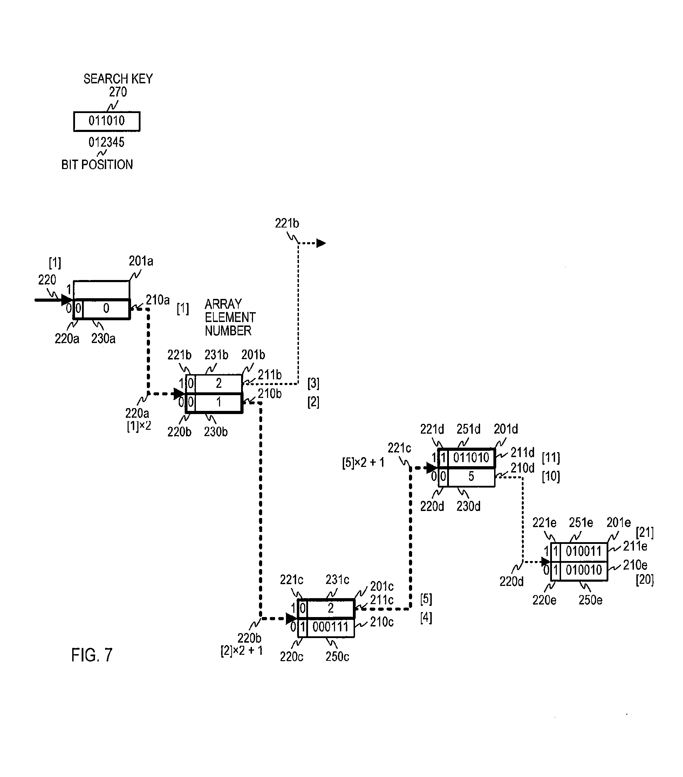

Next, an example of a search using a coupled node tree related to embodiment 1 of this invention is described referencing FIG. 7. Of the items in the coupled node tree shown in the example in FIG. 4B, FIG. 7 only depicts the items necessary to the description and all items in a position lower than node 211b are omitted.
In the example shown in FIG. 7, the bit string "011010" is set in search key setting area 270 as the search key (hereinbelow expressed as search key 270), and the root node 210a is taken as the search start node. Also, the array element number of the link target is also described as being obtained as the sum of the coupled node indicator, which is the doubled value of the array element number of the branch node that is the link source, and the bit value at the discrimination bit position in the search key.

Hereinbelow, the flow of search processing is described in line with what is depicted in FIG. 7.
Because, at the start of the search, the search start node is the root node, 1 is set in the link target array element number and node 210a is read out. Then, because the node type 220b of node 210b is 0, indicating that the node is a branch node, the value 0 is extracted from the discrimination bit position 230a. Because the value at bit position 0 in the search key 270 is 0, the link target array element number becomes 2 by adding that 0 to the coupled node indicator 220a, which is the doubled value of array element number 1, and the node 210b disposed in the array element with array element number 2 is read out next.

The node type 220b of node 210b is 0 and because it indicates that the node is a branch node the value 1 is extracted from the discrimination bit position 230b. Because the value at bit position 1 in the search key 270 is 1, link target array element number becomes 5 by adding that 1 to the coupled node indicator 220b, which is the doubled value of array element number 2, and the node 211c disposed in the array element with array element number 5 is read out next.

The node type 221 c of node 211c is 0 and because it indicates that the node is a branch node the value 2 is extracted from the discrimination bit position 231c. Because the value at bit position 2 in the search key 270 is 1, link target array element number becomes 11 by adding that 1 to the coupled node indicator 221 c, which is the doubled value of array element number 5, and the node 211d disposed in the array element with array element number 11 is read out next.

The node type 221d of node 211d is 1, and because it indicates that the node is a leaf node, the index key "011010" is extracted from the index key 251 and search processing is terminated.

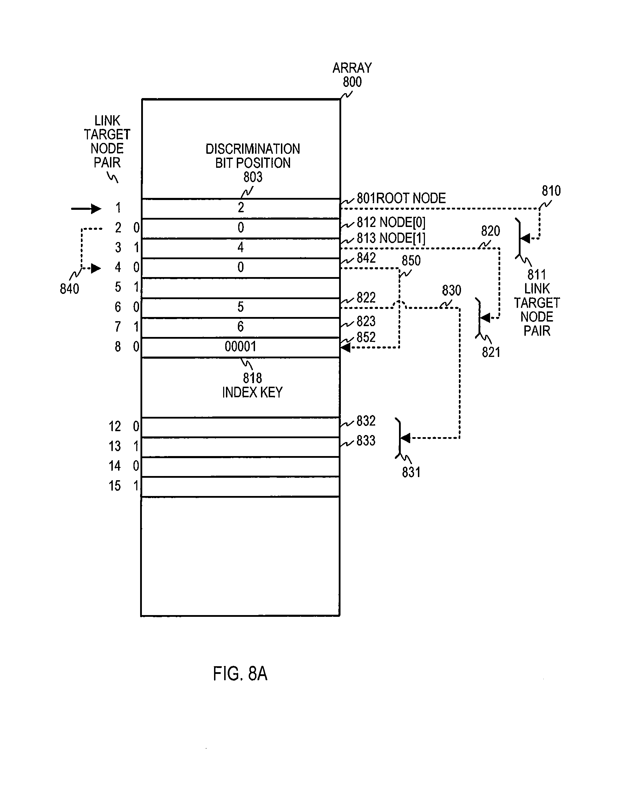

Next embodiment 2 of this invention is described, referencing FIG. 8A to FIG. 12.
FIG. 8A is a drawing describing an exemplary configuration of a coupled node tree disposed in an array in embodiment 2 of this invention. This embodiment of the present invention deletes the node type from the leaf node and branch node and disposes the leaf nodes only in the lowest level of the tree. Furthermore, the index keys and the search key have a bit "0" inserted in a special bit position, the highest level bit position, relative to the original index keys and the original search key. The way the array element number of the link target is obtained is the same as in embodiment 1. Also the bit value appended to the highest level bit position can also be a 1 rather than a 0. The point is that it is sufficient that the same bit value is appended as the highest bit. Further, the special bit position in which is inserted the special bit value is not limited to the highest level bit position and can be made any freely chosen bit position. The bit position in which the same bit value is inserted does not appear in the discrimination bit position in prior-art branch nodes in the coupled node tree. Then this bit position can be used as the discrimination bit position for dummy branch nodes, described hereinbelow, and by' inserting dummy branch nodes the leaf nodes can be disposed only in the lowest level of the tree.

FIG. 8A shows root node 801 disposed in the array element with array element number 1 in array 800. The root node 801 is configured by the discrimination bit position 803. The discrimination bit position 803 has the value 2 stored therein.

Node [0] 812, which is the primary node of node pair 811, which pair is the link target shown by the dotted-line arrow 810 from the root node 801, whose array element number is 1, is disposed in the array element with array element number 2, which array element number is the value double that of array element number 1 of the root node 801, which is the parent node positioned immediately higher in the tree. And node [1] 813, which is the pair of the primary node, is disposed in the next adjacent array element with array element number 3.

The discrimination bit position for node [0] 812 has a 0 stored therein, and the link target of that node, as shown by the dotted-line arrow 840, is the node 842 stored in the array element whose array element number 4 is double that of the array element number 2 of node [0] 812. Also, the discrimination bit position for node 842 has a 0 stored therein, and the link target of that node, as shown by the dotted-line arrow 850, is the node 852 stored in the array element whose array element number 8 is double that of the array element number 4 of node 842.

Because node 852 is positioned in the lowest level in the coupled node tree shown in the example in FIG. 8A, it is a leaf node, and its index key 818 has the index key "00001", which has a 0 inserted in its highest bit position, stored therein. In the example shown in FIG. 8A, the index key "00001" is already discriminated from the index keys stored in the other array elements by the bit value 0 at its bit position 2, which position is set in discrimination bit position 803 for the root node 801. Thus, just as for the embodiment 1 shown in FIG. 4A, the node stored in the array element with the array element number 2, which is the array element immediately below the root node, is the position for a leaf node in prior art, but because a node type, which identifies the fact that it is a leaf node, is not used in this embodiment, the dummy branch nodes 812 and 842, whose discrimination bit positions are the highest bit position 0, are inserted and the leaf node is positioned in the lowest level. Also, in order to make the array element with array element number 5, shown in FIG. 8A, to be empty, the node that is a pair to the second-level dummy branch node 842 and which does not actually exist is made an empty node.

Also, the discrimination bit position for node [1] 813 has a 4 stored therein. Node 822, which is the primary node of node pair 821, which pair is the link target shown by the dotted-line arrow 820 from the branch node 813, whose array element number is 3, is disposed in the array element with array element number 6, which array element number is the value double that of array element number 3 of the branch node 813, which is its parent node. Then node 823, which is the pair of the primary node, is disposed in the next adjacent array element with array element number 7. In the discrimination bit position for node 822 is stored the value 5. The discrimination bit position for node 822 has the value 5 stored therein. Also, the discrimination bit position for node 823 has the value 6 stored therein.

Node 832, which is the primary node of node pair 831, which pair is the link target shown by the dotted-line arrow 830 from the branch node 822, whose array element number is 6, is disposed in the array element with array element number 12. Then node 833, which is the pair of the primary node, is disposed in the next adjacent array element with array element number 13. Depiction of the contents of node 832 and node 833 is omitted. Also depiction of the link target for branch node 823 is omitted.

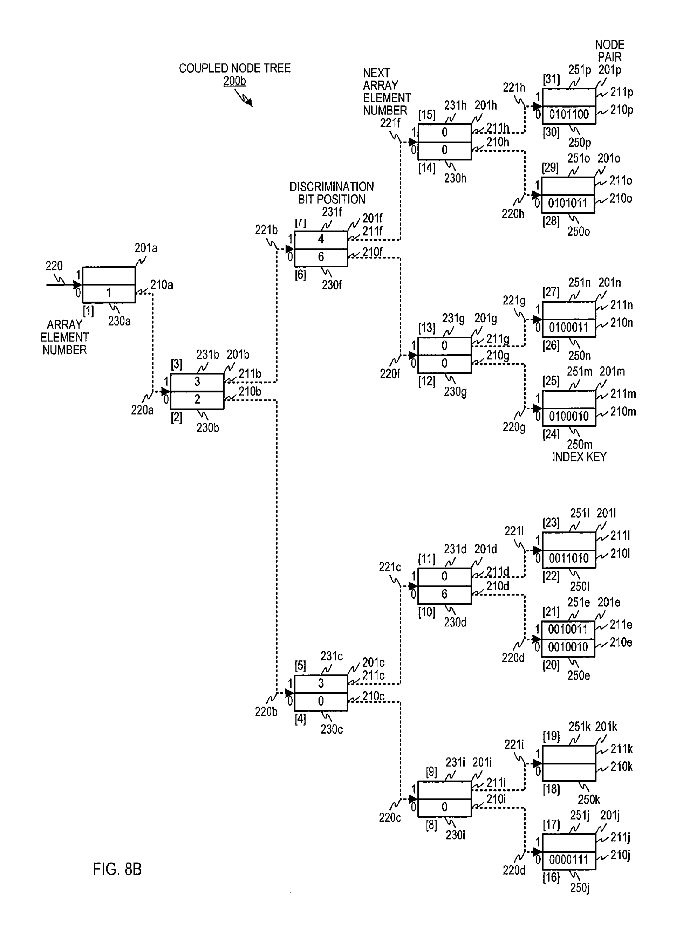

FIG. 8B is a drawing showing conceptually the tree configuration of a coupled node tree related to embodiment 2 of this invention. In the tree configuration shown in FIG. 8B, a 0 is appended to the highest bit position of each of the index keys stored in the tree configuration shown in FIG. 4B and the bit length of the keys becomes 7 rather than 6. In accordance with that change, the discrimination bit positions in the branch nodes with the same labels as those shown FIG. 4B have been shifted 1 bit position and their values are increased by 1.

Also because the number of levels in the tree configuration shown in FIG. 4B is 5 levels, the leaf nodes in the tree configuration shown in FIG. 8B are only positioned at the 5th level. And the leaf nodes positioned at levels higher than the 5th level in the tree configuration shown in FIG. 4B have become dummy branch nodes whose discrimination bit position is 0. And dummy branch nodes are inserted until the node immediately below a dummy branch node is a 5th level node. The method for computing the coupled node indicator, which is the array element number of an array element wherein is disposed the primary node of the node pair at the immediately lower level, is the same as that in embodiment 1.

Because a 0 is appended as the highest level bit of an index key in the example shown in FIG. 4B, for example, to the original index key "000111" in the prior art, that key is stored in leaf node 210j, but it is clear that if a 1 is appended as the highest level bit, that node would be stored in leaf node 211j.

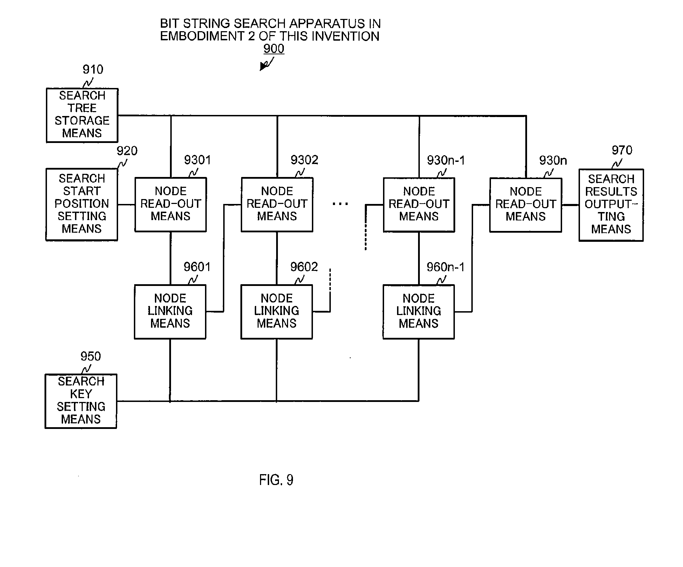

FIG. 9 is a drawing describing an example of a function block configuration for a bit string search apparatus in embodiment 2 of this invention.
The bit string search apparatus 900 shown in the example in FIG. 9 that is related to embodiment 2 of this invention prepares a search tree storage means 910, a search start position setting means 920, node read-out means 9301 to 930n, a search key setting means 950, node linking means 9601 to 960n-1, and a search results outputting means 970. In this regard, n is the number of levels in the coupled node tree.

Just as for the embodiment 1 described above, the array is kept in the storage area in search tree storage means 910, and the coupled node tree related to embodiment 2 of this invention is disposed in that array. Also, the 1 that is the array element number of the root node is set in search start position setting means 920 as the array element number of the search start node.

Node read-out means 9301 reads out the root node with array element number 1 which is set in search start position setting means.
The search key is set in the search key setting means 950. The setting of the search key can be done by the settings of the user that uses the results of the search process. The node linking means 960 adds the value of the bit in the search key set by the search key setting means 950 at the discrimination bit position in the branch node read out by the node read-out means 9601 to the value which is computed by doubling the array element number 1 of the root node and sets that resulting value as the array element number of the array element in which is disposed the node to be read out next.

Thereafter, the node linking means 9602 to 960n-1 add the value of the bit in the search key set in the search key setting means 950 at the discrimination bit positions in the branch nodes read out by the node read-out means 9302 to 930n-1 to the value which is computed by doubling the array element numbers of the array elements in which is disposed those branch nodes and set those resulting values as the array element numbers of the array elements in which is disposed the nodes to be read-out next.

The node read-out means 9302 to 930n-1 read out the branch nodes with the array element numbers set by node linking means 9601 to 960n-2 at the previous level. The node read-out means 930n reads out the leaf node with the array element number set by node linking means 960n-1 and passes that node to the search results outputting means 970.

The search results outputting means 970 extracts from the leaf node passed by the node read-out means 930 the index key or the information for accessing the index key, the same as for embodiment 1. When the item extracted from the leaf node is the index key, that index key is output as the search result key. When the item extracted from the leaf node is the information for accessing the index key, the index key is read out based on the extracted information for accessing the index key and that index key is output as the search result key.
It is also possible to compare the search result key with the search key and if they coincide, take the search to be successful and if they do not coincide take the search to be a failure, the same as for embodiment 1.

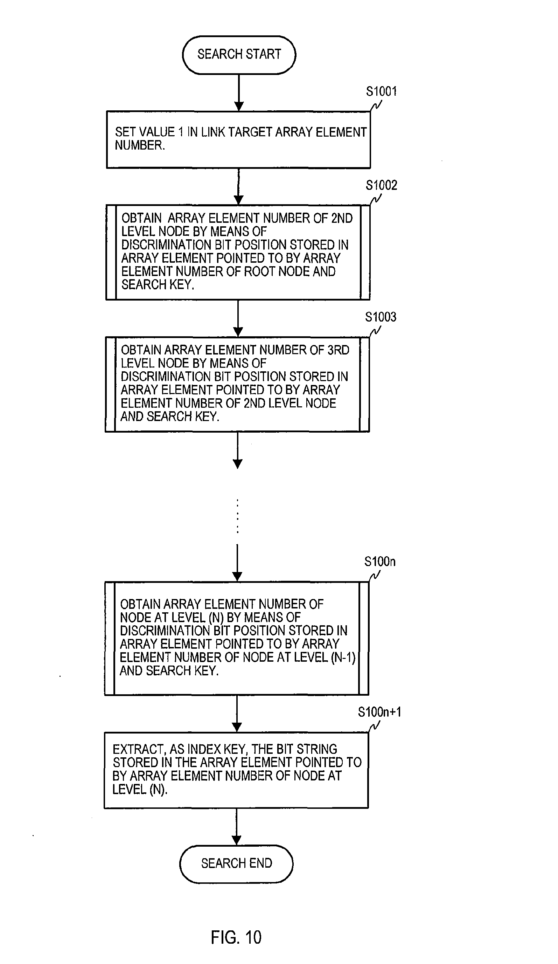

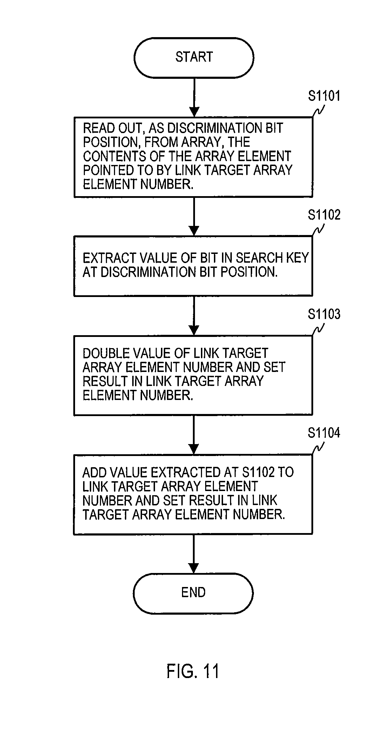

Next, the search processing in embodiment 2 of this invention is described referencing FIG. 10 and FIG. 11.
FIG. 10 is a drawing describing an example of the processing flow to search for a bit string in embodiment 2 of this invention. In the example shown in FIG. 10, the number of levels in the coupled node tree is taken to be n.

First, at step S 1001, 1 is set in the link target array element number.
Next, in step S1002 using the discrimination bit position stored in the array element pointed to by the link target array element number (the array element number of the root node) and the search key, the array element number of a node at the 2nd level is obtained.

Continuing, in step S1003, using the discrimination bit position stored in the array element pointed to by the array element number of the node at the 2nd level and the search key, the array element number of a node at the 3rd level is obtained.
Thereafter, in the same way, using the discrimination bit positions stored in the array elements pointed to by the array element numbers of the nodes at the 3rd to (n-1) th levels and the search key, the array element numbers of a node at the 4th to n-th levels are obtained. Details of the processing of steps S1002 to S100n are described later referencing FIG. 11.

Finally, the bit string stored in the array element pointed to by the array element number of the node at the n-th level is extracted as the index key and processing is terminated.
Also, although the example of the processing flow shown in FIG. 10 is one that uses a coupled node tree in embodiment 2 of this invention having a specific number of levels n, it is possible to prepare the processing flow for implementing the search processing using a coupled node tree with any number of levels in an embodiment of this invention, by means of an assembler macro taking n-levels as a parameter or other implementation techniques.

FIG. 11 is a drawing describing an example of the processing flow to obtain the array element number of a link target in embodiment 2 of this invention. It shows details of the processing of steps S1002 to S100n shown in FIG. 10.

First, in step S1101, the contents stored in the array element pointed to by the link target array element number is read out as the discrimination bit position from the array and, in step S1102, the bit value pointed to by the read-out discrimination bit position is extracted from the search key.

Next, in step S1103, the value of the array element number set in the link target array element number is doubled and the result is set in the link target array element number. Furthermore, at step S1104, the bit value extracted at step S1102 is added to the value of the array element number set in the link target array element number at step S1103, the result is set in the link target array element number, and processing is terminated.

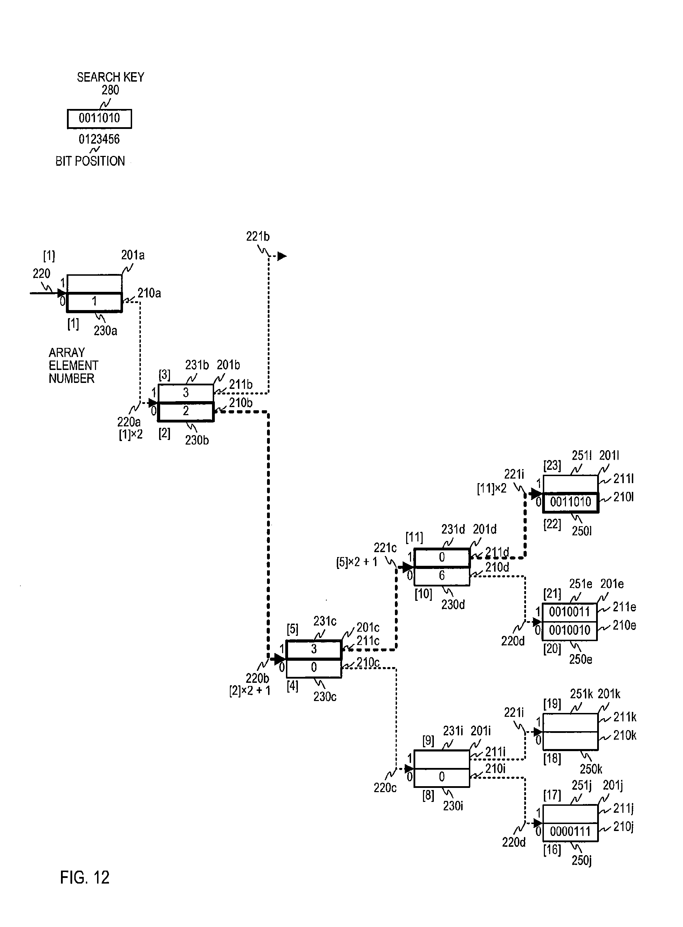

Next an example of a search using a coupled node tree related to embodiment 2 of this invention is described referencing FIG. 12. Of the items in the coupled node tree shown in the example in FIG. 8B, FIG. 12 only depicts the items necessary to the description and all items in a position lower than node 211b are omitted.
In the example shown in FIG. 12, the bit string "0011010" is set in search key setting area 280 as the search key (hereinbelow expressed as search key 280). The search key 280 is one wherein a 0 is appended as a highest level bit to the search key 270 in the search example using a coupled node tree related to embodiment 1 of this invention shown in FIG. 4B. The root node 210a is taken as the search start node. Also, just as in the search example shown in FIG. 4B, the array element number of the link target is also described as being obtained as the sum of the coupled node indicator, which is the doubled value of the array element number of the branch node that is the link source, and the bit value at the discrimination bit position in the search key.

Hereinbelow, the flow of search processing is described in line with what is depicted in FIG. 12.
Because, at the start of the search, the search start node is the root node, 1 is set in the link target array element number and node 210a is read out. Then the value 1 is extracted from the discrimination bit position 230a of node 210a. Because the value at bit position 1 in the search key 280 is 0, the link target array element number becomes 2 by adding that 0 to the coupled node indicator 220a, which is the doubled value of array element number 1, and the node 210b disposed in the array element with array element number 2 is read out next.

Then the value 2 is extracted from the discrimination bit position 230b of node 210b. Because the value at bit position 2 in the search key 280 is 1, link target array element number becomes 5 by adding that 1 to the coupled node indicator 220b, which is the doubled value of array element number 2, and the node 211c disposed in the array element with array element number 5 is read out next.

Then the value 3 is extracted from the discrimination bit position 231c of node 211c. Because the value at bit position 3 in the search key 280 is 1, link target array element number becomes 11 by adding that 1 to the coupled node indicator 22 1 c, which is the doubled value of array element number 5, and the node 211d disposed in the array element with array element number 11 is read out next.

Then the value 0 is extracted from the discrimination bit position 231d of node 211d. Because the value at bit position 0 in the search key 280 is 0, the link target array element number becomes 22 by adding that 0 to the coupled node indicator 221i, which is the doubled value of array element number 11, and the node 2101 disposed in the array element with array element number 22 is read out next.

Because node 2101 is positioned at the lowest level in the coupled node tree, the index key "0011010" is extracted from index key 2501 as a search result key and search processing is terminated.

Next, examples of variations of the above noted embodiment 1 and embodiment 2 are described. These variations enable flexible disposition in the areas of the storage device of the array wherein the tree is stored or enable disposition of the tree in an array existing in any area in the storage device.

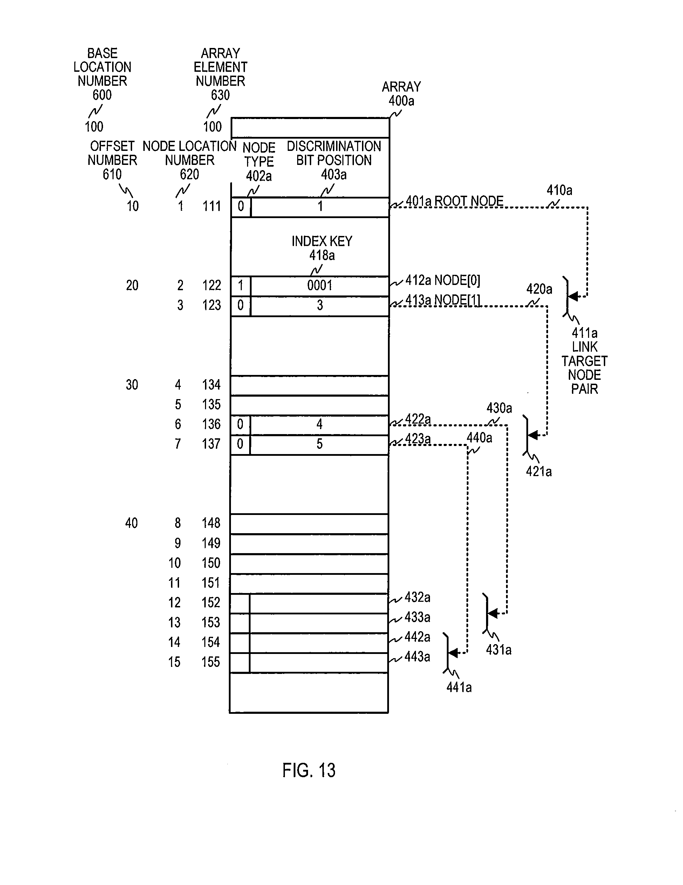

FIG. 13 is a drawing describing an example configuration of a coupled node tree disposed in an array in a variation of embodiment 1 of this invention. Compared to the exemplary configuration shown in FIG. 4A, the base location number 600 and offset number 610 are added. Also, instead of the array element numbers 1 to 15 in FIG. 4A, the values 1 to 15 for the node location numbers 620 are depicted. In FIG. 13, the values for the array element numbers 630 are depicted as 100, 111, 122, 123, 134 to 137, and 148 to 155.
Also, in FIG. 13, the value for the base location number 600 is shown to be 100, and 10, 20, 30, and 40 are illustrated as the values for offset number 610.
As for the other labels, the labels used are those shown in FIG. 4A, with an "a" appended.

The base location number is a number that, in combination with the offset number, described below, of the 1st level in the tree, fixes the position of the root node of the tree. By using the base location number, the restriction that the array element number of the root node be 1, as shown in the example in FIG. 4A and FIG. 4B, is no longer necessary.
The offset number is a number that fixes the starting position of nodes stored in each level of a tree. By using the offset number, the nodes in a tree can be disposed in each of the number of levels in the tree wherein those nodes are positioned. The offset numbers are set in an offset number table for each of the level numbers.
The node location number is a number fixed in the sequence of the nodes, and it corresponds to the array element number shown in the example in FIG. 4A and FIG. 4B.
The array element number can be obtained by the sum of the base location number, the offset number, and the node location number.
In this exemplary variation, when the base location number is taken to be 0, and the offset numbers for each level are taken to be 0, the node location number is identical to the array element number shown in the example in FIG. 4A and FIG. 4B, and the coupled node tree in this exemplary variation is identical to the coupled node tree in embodiment 1 shown in the example in FIG. 4A and FIG. 4B.

Referencing FIG. 13, because the base location number 600 is 100 (hereinbelow called base location number 100), the offset number 610 (for the 1st level) is 10 (hereinbelow called offset number 10), and node location number 620 is 1 (hereinbelow called node location number 1), the root node 401a is disposed in the array element whose array element number 630 in array 400a is 111 (hereinbelow called array element number 111). The root node 401a is configured from the node type 402a and the discrimination bit position 403a. The node type 402a is 0, indicating that the root node 401 a is a branch node. The discrimination bit position 403a has the value 1 stored therein.

The node [0] 412a, which is the primary node of the link target node pair 411a, shown by the dotted-line arrow 410a from the root node 401a, whose node location number is 1, is disposed in the array element whose array element number 122 is computed by adding the sum of the base location number 100 and offset number 20 to the node location number 2, which has the value doubled of that of node location number 1 for the root node 401 a, which is its parent node positioned immediately above in the tree. And node [1] 413, which is the pair of the primary node, is disposed in the next adjacent array element (node location number 3, array element number 123). The node type of node [0] 412a has a 1 stored therein, indicating that node [0] 412a is a leaf node. The index key 418a has "0001" stored therein. In contrast, the node type of node [1] 413a has a 0 stored therein, indicating that node [1] 413a is a branch node. The discrimination bit position of branch node 413a has a 3 stored therein.

The node 422a, which is the primary node of the link target node pair 421 a, shown by the dotted-line arrow 420a from the branch node 413a, whose node location number is 3, is disposed in the array element whose array element number 136 is computed by adding the sum of the base location number 100 and offset number 30 to the node location number 6. And node 423a, which is the pair of the primary node, is disposed in the next adjacent array element (node location number 7, array element number 137). The node type of node 422a has a 0 stored therein, indicating that node 422a is a branch node. The discrimination bit position of branch node 422a has a 4 stored therein. Also, the node type of node 423a has a 0 stored therein, indicating that node 423a is a branch node. The discrimination bit position of branch node 423 a has a 5 stored therein.

And no nodes are disposed in the array elements with array element number 134 and array element number 135.
As is clear from the example described above, the node location number of the primary node of the link target node pair is double the value of the node location number of its parent node.

Also, the node 432a, which is the primary node of the link target node pair 431a, shown by the dotted-line arrow 430a from the branch node 422a, whose node location number is 6, is disposed in the array element whose array element number 152 is computed by adding the sum of the base location number 100 and offset number 40 to the node location number 12. And node 433a, which is the pair of the primary node, is disposed in the next adjacent array element (node location number 13, array element number 153). Depiction of the contents of node 432a and node 433a is omitted.

In the same way, the node 442a, which is the primary node of the link target node pair 441a, shown by the dotted-line arrow 440a from the branch node 423a, whose node location number is 7, is disposed in the array element whose array element number 154 is computed by adding the sum of the base location number 100 and offset number 40 to the node location number 14. And node 443a, which is the pair of the primary node, is disposed in the next adjacent array element (node location number 15, array element number 155). Depiction of the contents of node 442a and node 443a is omitted.
Also no nodes are disposed in the array elements with array element numbers 148 to 151.

Even in this exemplary variation, the tree configuration of the coupled node tree itself is the same as that shown in FIG. 4B. The point of difference is that whereas the position of the nodes on the tree shown in FIG. 4A and FIG. 4B is prescribed by the array element numbers that connect them to the array, in this exemplary variation, their position is prescribed by a node location number that is independent of the array.
And so, nodes can be accessed by a combination of the node location number and the base location number and offset number.

Thus, by appropriately selecting the offset number, the highest n-levels in the tree can, for example, be disposed in the main memory, and the nodes lower than the n-th level can be disposed in an external storage device.

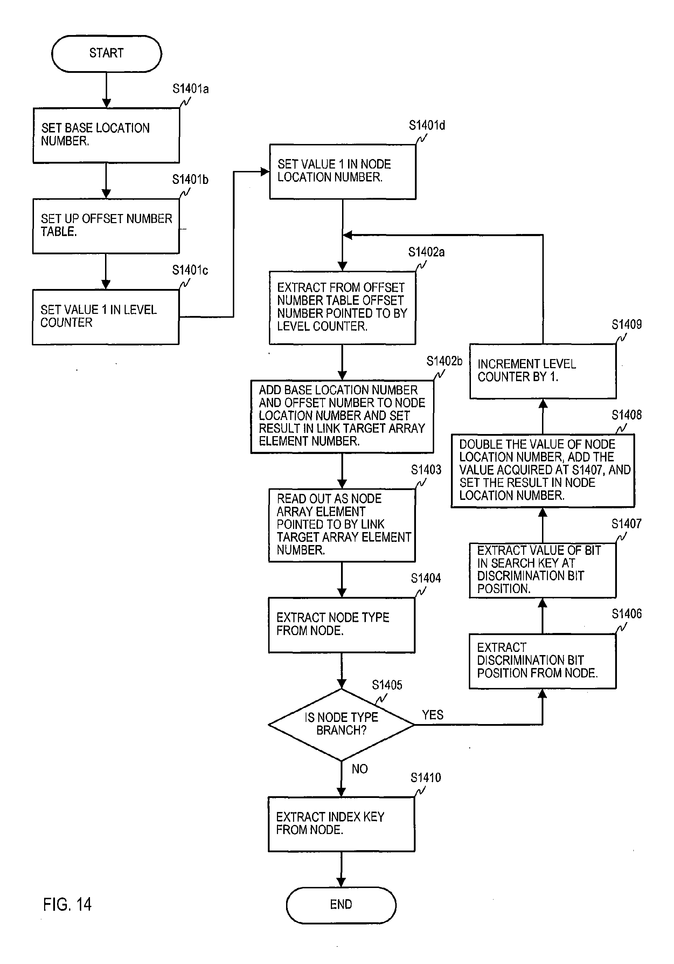

Next, the search processing in an example of a variation in embodiment 1 of this invention is described referencing FIG. 14. FIG. 14 is a drawing describing an example of the processing flow to search for a bit string in an example of a variation in embodiment 1 of this invention. Compared with the example of the processing flow shown in FIG. 6, the differences lie in the addition of the handling of the node location number, the base location number, and the offset number, and the obtaining of an array element number using these numbers.

First, at step S1401a, the base location number is set, and at step S1401b, the offset number table is set. Furthermore, at step S 1401 c, the value 1 is set in the level counter, and at step S1401d, the value 1 is set in the node location number. In the example shown in FIG. 14, although the search start node is taken to be the root node, even if the level counter and the node location number are specified with a number other than 1 and the search start node is taken to be other than the root node, the processing hereinbelow is the same.

Next, as step S1402a, the offset number pointed to by the level counter is extracted from the offset number table, and at step S 1402b, the value computed by adding the base location number and offset number to the node location number is set in the link target array element number.
Next, at step S1403, the array element with the array element number set in the link target array element number is read out from the array as the node that should be referenced. Then, at step S1404, the node type is extracted from the read-out node, node type, and at step S1405, a determination is made whether the node type is a branch node.

If the determination in step S1405 is that the read-out node is a branch node, processing proceeds to step S 1406, wherein information regarding the discrimination bit position is extracted from the node, and furthermore, at step S1407, the bit value at the position corresponding to the extracted discrimination bit position is extracted from the search key. Then, at step S1408, the value computed by adding the value obtained at step S1407 to the value that is double that of the node location number is set in the node location number, and at step S 1409, the level counter is incremented by 1, and a return is made to step S 1402a.

Thereinafter, the processing from step S 1402a to step S1409 is repeated until the determination in step S 1405 is that of a leaf node, whereby processing proceeds to step S1410.
At step S 1410, the index key is extracted from the leaf node and processing is terminated.
Also although the above noted example assumes that the index key is included directly in the leaf node, if the leaf node includes information for accessing the index key, the information for accessing the index key is extracted from the leaf node in step S1410, and in an additional step, the index key is extracted using the extracted information for accessing the index key.
Also, after the index keys has been extracted, that index key can also be used by another application as the search result key, and a determination of the coincidence with the search key can also be made and the search can be made a success or failure.

Next, an exemplary variation of embodiment 2 of this invention is described. The technical meaning of the base location number, the offset number, and the node location number, and their relation to the array element number is the same as that in the exemplary variation of embodiment 1 of this invention.

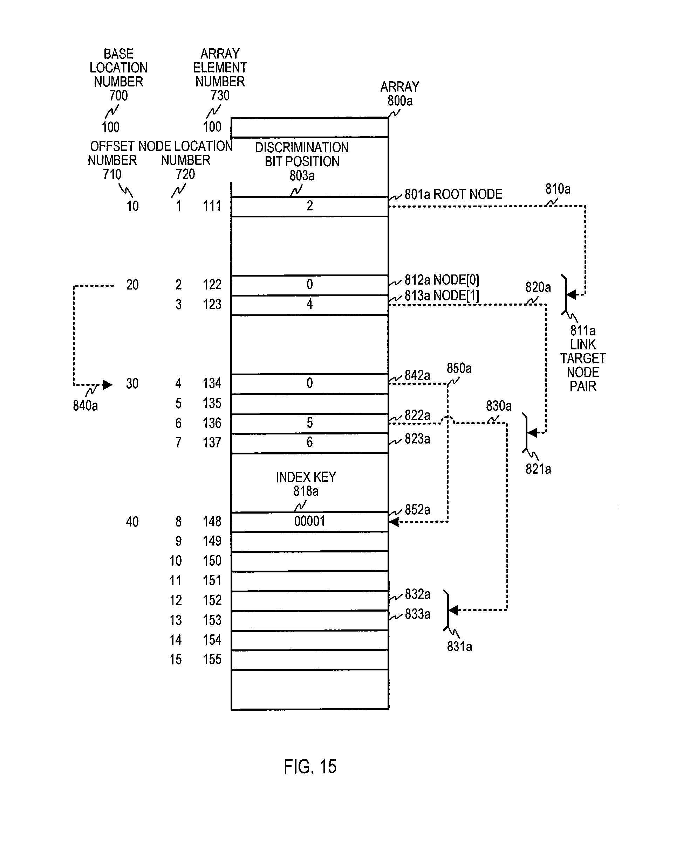

FIG. 15 is a drawing describing an exemplary configuration of a coupled node tree stored in an array in an example of a variation in embodiment 2 of this invention. Compared to the exemplary configuration shown in FIG. 8A, the base location number 700 and the offset number 710 have been added. Also, instead of the array element numbers 1 to 15 shown in FIG. 8A, the values 1 to 15 for the node location numbers 720 are depicted. In FIG. 15, the values for the array element numbers 730 are depicted as 100, 111, 122, 123, 134 to 137, and 148 to 155.
Also, in FIG. 15, the value for the base location number 700 is shown to be 100, and 10, 20, 30, and 40 are illustrated as the values for offset number 710.
As for the other labels, the labels used are those shown in FIG. 8A, with an "a" appended.
In this exemplary variation, just as in the exemplary variation for embodiment 1, when the base location number is taken to be 0, and the offset numbers for each level are taken to be 0, the node location number is identical to the array element number shown in the example in FIG. 8A and FIG. 8B, and the coupled node tree in this exemplary variation is identical to the coupled node tree in embodiment 2 shown in the example in FIG. 8A and FIG. 8B.

Referencing FIG. 15, because the base location number is 100, the offset number is 10, and the node location number is 1, the root node 801a is disposed in the array element with array element number 111 in array 800a. The root node 801a is configured from the discrimination bit position 803a. The discrimination bit position 803a has the value 2 stored therein.

The node [0] 812a, which is the primary node of the link target node pair 811a, shown by the dotted-line arrow 810a from the root node 801 a, whose node location number is 1, is disposed in the array element whose array element number 122 is computed by adding the sum of the base location number 100 and offset number 20 to the node location number 2, which has the value doubled of that of node location number 1 for the root node 401 a, which is its parent node positioned immediately above in the tree. And node [1] 813, which is the pair of the primary node, is disposed in the next adjacent array element (node location number 3, array element number 123).

The discrimination bit position for node [0] 812a has a 0 stored therein, and its link target is the node 842a stored in the array element whose array element number 134, as shown by the dotted-line arrow 840a, is computed by adding the sum of the base location number 100 and offset number 30 to the node location number 4, which has the value doubled of that of node location number 2 for the node [0] 812a. Also the discrimination bit position for node 842a has a 0 stored therein, and its link target is the node 852a stored in the array element whose the array element number 148, as shown by the dotted-line arrow 850a, is computed by adding the sum of the base location number 100 and offset number 40 to the node location number 8, which has the value doubled of that of node location number 4 for the node 842a.

Because node 852a is positioned at the lowest level in the coupled node tree shown in the example in FIG. 15, it is a leaf node and the index key 818a has stored therein the index key "00001", which has a 0 inserted in its highest level bit.

On the other hand, the discrimination bit position for node [1] 813a has a 4 stored therein. The node 822a, which is the primary node of the link target node pair 821a, shown by the dotted-line arrow 820a from the branch node 813a with node location number 3, is disposed in the array element whose array element number 136 is computed by adding the sum of the base location number 100 and offset number 30 to the node location number 6, which has the value doubled of that of node location number 3 for node 813a, which is its parent node. And node 823a, which is the pair of the primary node, is disposed in the next adjacent array element (node location number 7, array element number 137). The discrimination bit position of node 822a has a 5 stored therein. Also the discrimination bit position of node 823a has a 6 stored therein.

The node 832a, which is the primary node of the link target node pair 831a, shown by the dotted-line arrow 830a from the branch node 822a with node location number 6, is disposed in the array element whose array element number 152 is computed by adding the sum of the base location number 100 and offset number 40 to the node location number 12, which has the value doubled of that of node location number 6. And node 833a, which is the pair of the primary node, is disposed in the next adjacent array element (node location number 13, array element number 153). Depiction of the contents of node 832 and node 833 is omitted. Also, depiction of the link target for branch node 823a is omitted.

Even in this exemplary variation, the tree configuration of the coupled node tree itself is the same as that shown in FIG. 8B. The point of difference is that whereas the position of the nodes on the tree shown in FIG. 8A and FIG. 8B is prescribed by the array element numbers that connect them to the array, in this exemplary variation, their position is prescribed by a node location number that is independent of the array, just as for the exemplary variation for embodiment 1. And so, nodes can be accessed by a combination of the node location number and the base location number and offset number.

Thus, by appropriately selecting the offset number, the highest n-levels in the tree can, for example, be disposed in the main memory and the nodes lower than the n-th level can be disposed in an external storage device.

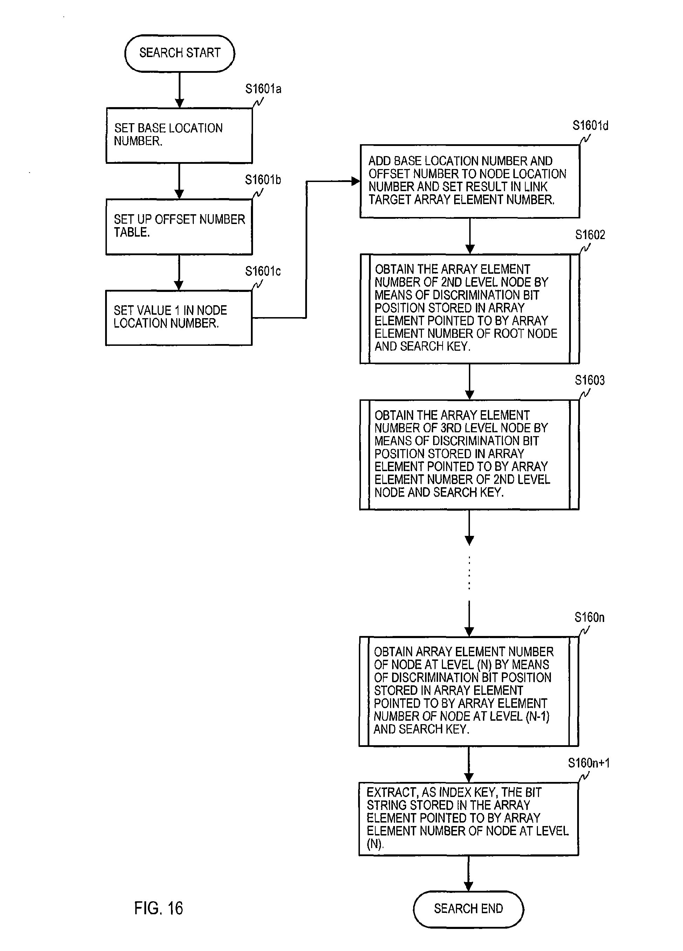

Next, search processing in a variation of embodiment 2 of this invention is described referencing FIG. 16. FIG. 16 is a drawing describing an example of the processing flow to search for a bit string in an example of a variation in embodiment 2 of this invention. Compared with the example of the processing flow shown in FIG. 10, the differences lie in the addition of the handling of the node location number, the base location number, and the offset number and the obtaining of an array element number using these numbers.

First, at step S 1601 a, the base location number is set, and at step S1601b, the offset number table is set. Then, at step S1601c, 1 is set in the node location number. Furthermore, in step S1601d, the value computed by adding the base location number and offset number to the node location number is set in the link target array element number. The processing in step S 1601 d sets the array element number of the root node in the link target array element number.

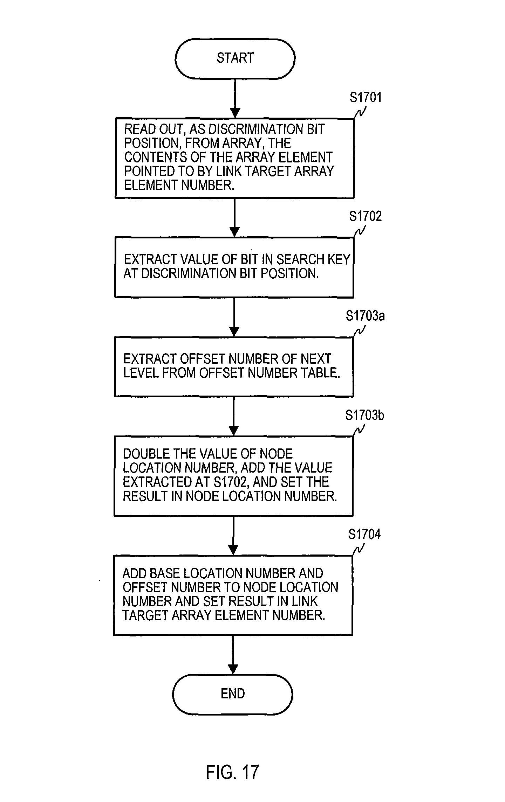

Next, in step S1602 using the discrimination bit position stored in the array element pointed to by the link target array element number (the array element number of the root node) and the search key, the array element number of a node at the 2nd level is obtained.
Continuing, in step S1603, using the discrimination bit position stored in the array element pointed to by the array element number of the node at the 2nd level and the search key, the array element number of a node at the 3rd level is obtained.
In the same way, in steps S1604 to S160n, using the discrimination bit positions stored in the array elements pointed to by the array element numbers of the nodes at the 3rd to (n-1) th levels and the search key, the array element numbers of a node at the 4th to n-th levels are obtained. Details of the processing of steps S1602 to S 160n are described later referencing FIG. 17.

Finally, the bit string stored in the array element pointed to by the array element number of the node at the n-th level is extracted as the index key and processing is terminated.
Also, although the example of the processing flow shown in FIG. 16, the same as for the example of the processing flow shown in FIG. 10, is one that uses a coupled node tree in embodiment 2 of this invention having a specific number of levels n, it is possible to prepare the processing flow for implementing the search processing using a coupled node tree with any number of levels in an embodiment of this invention, by means of an assembler macro taking n-levels as a parameter or other implementation techniques.

FIG. 17 is a drawing describing an example of the processing flow to obtain the array element number of a link target. It shows details of the process in steps S1602 to S160n shown in FIG. 16.

First, in step S 1701, the contents stored in the array element pointed to by the link target array element number is read out as the discrimination bit position from the array and, in step S 1702, the bit value pointed to by the read-out discrimination bit position is extracted from the search key.

Next, in step S1703a, the offset number for the next level is extracted from the offset number table, and, in step S1703b, the value computed by doubling the value of the node location number and adding to it the value extracted in step S1702 is set in the node location number. Furthermore, at step S1704, the base location number and the offset number are added to the node location number, and the result is set in the link target array element number, and processing is terminated.

Next, the generation of a coupled node tree in embodiment 1 and embodiment 2 of this invention is described. Also, in the description hereinbelow, the tree in embodiment 1 and embodiment 2 of this invention may at times be called a pointerless tree and the coupled node tree of prior art may at times be called simply a tree or a tree before conversion.
The generation of a pointerless tree in this invention can, for example, be implemented in the following way. Assume that when generating a pointerless tree the tree with the configuration shown in the example in FIG. 1A and FIG. 1B is already generated by the index keys to be stored in the pointerless tree. Then the generation of a pointerless tree can be implemented by successively traversing the nodes in the tree from the root node and converting the nodes into nodes in embodiment 1 or embodiment 2 of this invention.
Although this traversal of the nodes is described in detail hereinbelow, it is analogous to the process used for saving nodes shown in FIG. 10A to FIG. 12 of JP 2008-269197 A cited above as patent document 4 and taught in the descriptions in its related specification. Because the generation of a tree is disclosed in the descriptions in FIG. 5 to FIG. 8 of JP 2008-015872 A cited above as patent document 1 and in the descriptions in its related specification, their description hereinbelow is omitted.

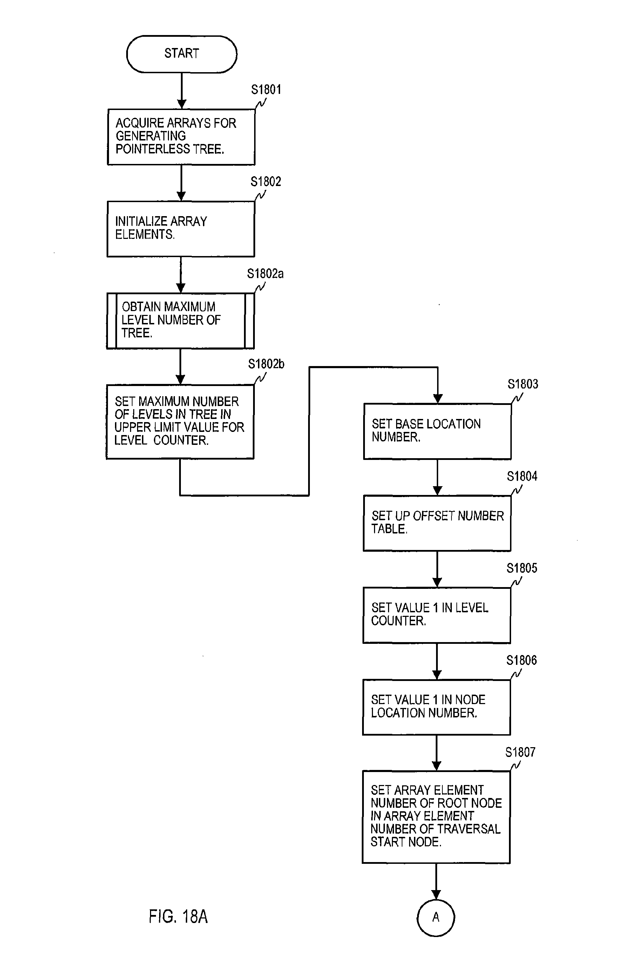

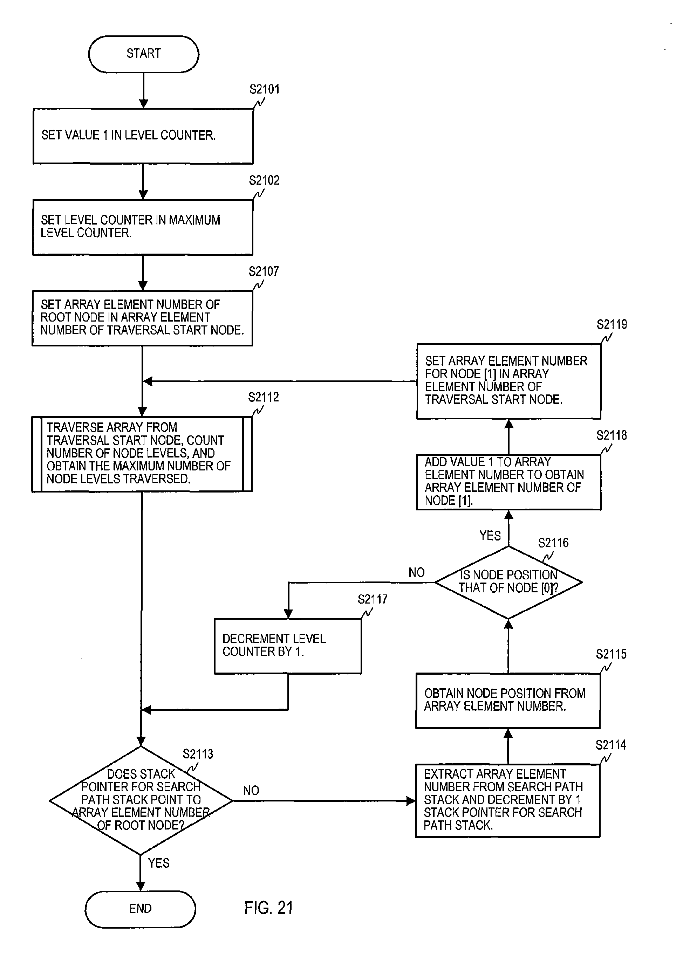

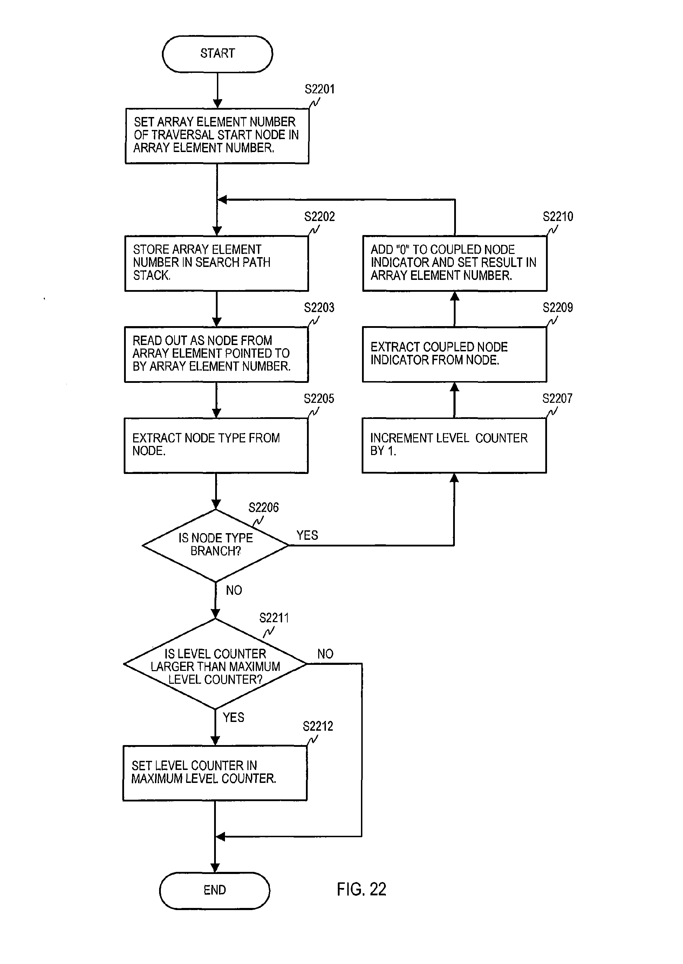

FIG. 18A is a drawing describing an example of the processing flow for the prior stage of processing to generate a pointerless tree in embodiment 1 and embodiment 2 of this invention. As shown in FIG. 18A, first in step S1801, an array is obtained for generating the pointerless tree, and in step S1802, its array elements are initialized. The processing of step S 1802 is necessary for the processing example in embodiment 2 using dummy branch nodes, and this processing can be omitted in embodiment 1.
Next, in step S1802a, the maximum number of levels in the tree before conversion is obtained, and in step S 1802b, that maximum number of levels is set in the upper limit value for the level counter. The upper limit value for the level counter is used to dispose the leaf nodes in the lowest level in the pointerless tree in embodiment 2. Thus, it can be omitted in embodiment 1 just as for the processing in step S1802. Details of the processing in step S 1802a are described hereinafter referencing FIG. 21 and FIG. 22.

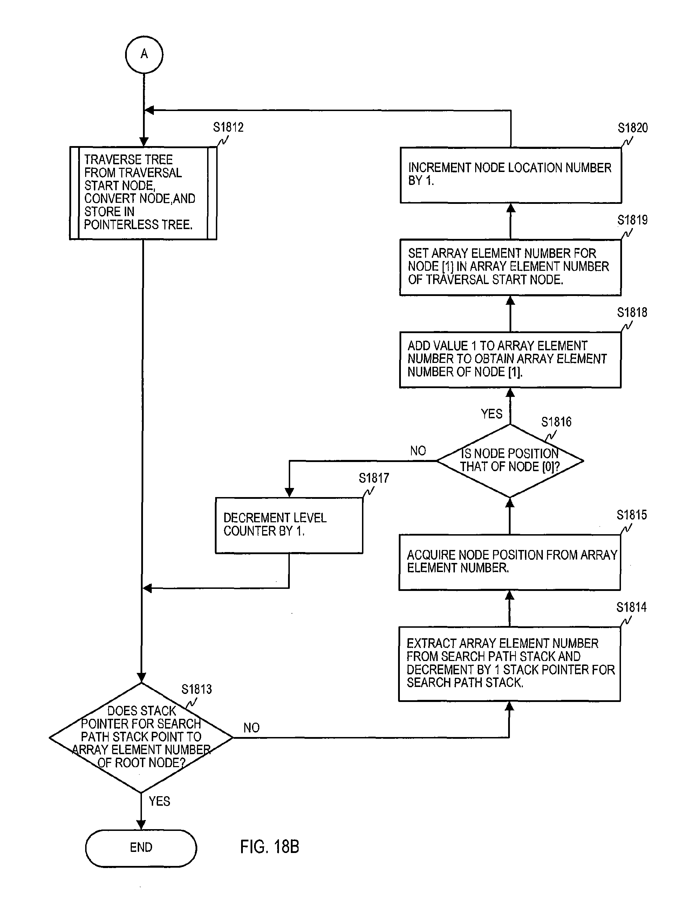

Next, in step S1803, the base location number is set, and in step S1804, the offset number table is set.
Also, in step S1805, 1 is set in the level counter, and in step S 1806, 1 is set in the node location number, and in step S1807, the array element number of the root node for the tree is set in the array element number for the traversal start node, and processing proceeds to step S 1812 shown in FIG. 18B.

Also the processing flow exemplified in the drawings of the above noted FIG. 18A and thereafter corresponds to the flow in the exemplary variations shown in FIG. 13 or FIG. 15. However, in these exemplary variations, if the base location number is taken to be 0, the offset numbers for each level are taken to be 0, and the node location number is taken to be the array element number, the processing is analogous to the processing to generate a tree with the configuration shown in FIG. 4A or FIG. 8A. Thus, processing flow exemplified in the drawings of FIG. 18A and thereafter is that which describes the processing to generate the pointerless tree of embodiment 1 and embodiment 2, including their exemplary variations.

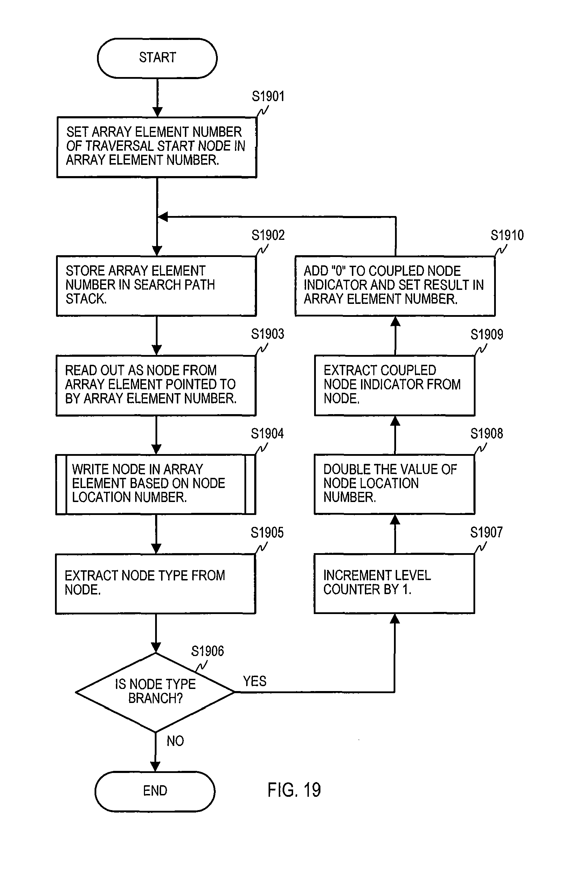

FIG. 18B is a drawing describing an example of the processing flow for the latter stage of processing to generate a pointerless tree in embodiment 1 and embodiment 2 of this invention. As shown in FIG. 18B, in step S 1812, the tree is traversed from the traversal start node, and the node that is the target of the traversal is converted and stored in the pointerless tree. Details of the processing in step S 1812 is described hereinbelow referencing FIG. 19.

Next, in step S 1813, a determination is made whether the stack pointer of the search path stack points to the array element number of the root node of the tree. Storing array element numbers in the search path stack is done in the processing in step S1812.
If the stack pointer of the search path stack points to the array element number of the root node of the tree, the processing of all the nodes in the tree is completed and processing is terminated. If it does not, processing proceeds to step S 1814.

At step S1814, the array element number is extracted from the search path stack and the stack pointer of the search path stack is decremented by 1. Next, in step S 1815, a node position is obtained from the array element number extracted at step S 1814, and in step S 1816, a determination is made whether that node position is that of a node [0]. If the node position is not that of a node [0], at step S1817 the level counter is decremented by 1, and a return is made to step S 1813. If the node position is that of a node [0], processing proceeds to step S 1818.

At step S1818, the array element number extracted at step S1814 is incremented by 1, and the array element number of a node [1] is acquired. Then, at step S1819, the array element number of the node [1] acquired at step S1818 is set in the array element number of the traversal start node, and at step S1820, the node location number is incremented by 1 and a return is made to step S 1812.
By repeating the processing loop of the above noted steps S 1812 to S1820 until the determination in step S 1813 is that the stack pointer of the search path stack points to the array element number of the root node of the tree, all the nodes on the tree are traversed, and each node is converted into a node in the pointerless tree, and a pointerless tree is generated.

FIG. 19 is a drawing describing an example of the processing flow to traverse the tree from the traversal start node and to store a node in the pointerless tree. It describes the details of the processing in step S 1812 in FIG. 18B.
As shown in the drawing, first, in step S1901, the array element number of the traversal start node is set in the array element number. The array element number of the traversal start node is set in step S 1807 in FIG. 18A for the first-time processing of the processing loop of steps S 1812 to S 1820 shown in FIG. 18B, and for processing thereafter it is set in step S 1819 shown FIG. 18B.

Next, in step S1902, the array element number is stored in the search path stack. This array element number is that which was set in step S1901 or in the step S 1910 described later.

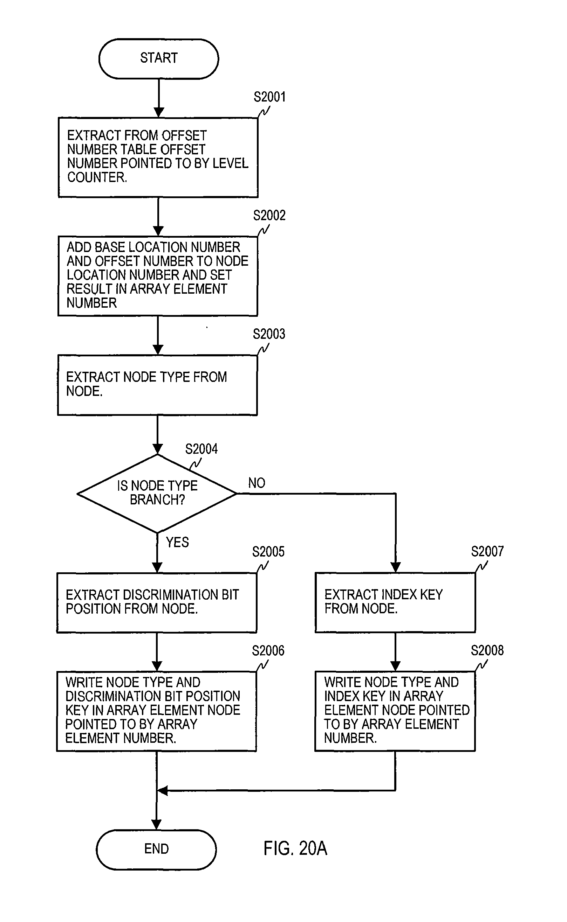

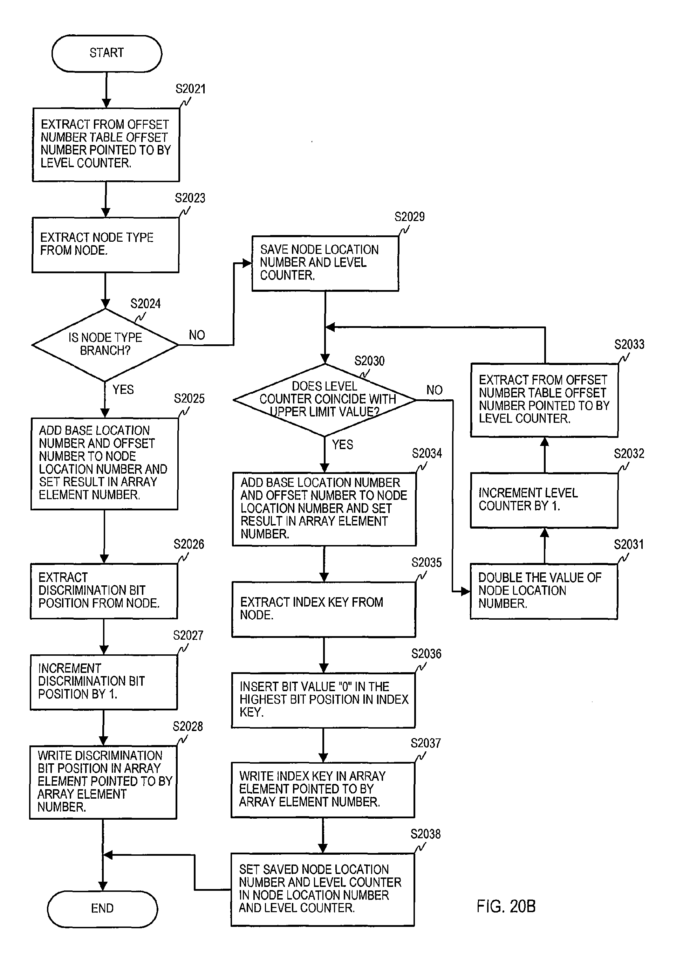

Next, in step S1903, the array element pointed to by the array element number is read out, as a node, from the array wherein is stored the tree before conversion, and in step S1904, by writing that node into an array element in the array acquired at step S1801 in FIG. 18A, based on the node location number, a node in the pointerless tree is generated. Details of the processing in step S1904 is described hereinbelow referencing FIG. 20A and FIG. 20B. FIG. 20A applies to embodiment 1, and FIG. 20B applies to embodiment 2.

Next, in step S1905, the node type is extracted from the node read-out at step S 1903, and at step S 1906, a determination is made whether the extracted node type is that of a branch node. If the determination in step S1906 is that the node type indicates a leaf node rather than a branch node, processing is terminated, and if it indicates a branch node, processing proceeds to step S1907.

At step S1907, the level counter is incremented by 1, and, proceeding to step S1908, the value of the node location number is doubled. Furthermore, in step S1909, the coupled node indicator is extracted from the node read-out at step S1903, and at step S1910, the value 0 is added to the extracted coupled node indicator and the result is set in the array element number, and a return is made to step S 1902.

The processing loop of the above noted steps S1902 to S1910 is repeated until the node type in step S 1906 indicates a leaf node type. In other words, one block of processing is to traverse from the traversal start node to the first leaf node, to read out those nodes, to convert them, and to write them as nodes in the pointerless tree. Although in the example of processing flow shown in FIG. 19 the node traversal is done giving priority to the node [0] side because the value 0 is added to coupled node indicator in step S1910 and is set in the array element number, it is clear to one skilled in the art, from the above description, that the traversal can also be made giving priority to the node [1] side.

FIG. 20A is a drawing describing an example of the processing flow to generate a node in embodiment 1 of this invention. It describes details of the processing of step S 1904 shown in FIG. 19, for embodiment 1.

As shown in the drawing, first, in step S2001 the offset number pointed to by the level counter is extracted from the offset number table, and in step S2002, the value computed by adding the base location number and offset number to the node location number is set in the array element number. Here, the array element number is a temporary storage area for setting the array element number of an array element in the array wherein is stored the pointerless tree, and it differs from the temporary storage area for setting the array element number of an array element in the array wherein is stored the tree before conversion, the latter array element number being set in step S1901 or step S 1910 in FIG. 19.

Next, in step S2003, the node type is extracted from the node read-out at step S1903 in FIG. 19, and in step S2004, a determination is made whether the extracted node type is that of a branch node. If the result of the determination is positive, processing proceeds to step S2005, and if it is negative, processing proceeds to step S2007.

At step S2005, the discrimination bit position is extracted from the node, and in step S2006, the node type and the discrimination bit position is written into the array element pointed to by the array element number set at step S2002, and a branch node is generated, and processing is terminated.
At step S2007, the index key is extracted from the node, and in step S2008, the node type and the index key is written into the array element pointed to by the array element number set at step S2002, and a leaf node is generated, and processing is terminated.

FIG. 20B is a drawing describing an example of the processing flow to generate a node in embodiment 2 of this invention. It describes details of the processing of step S 1904 shown in FIG. 19, for embodiment 2.

As shown in the drawing, first, in step S2021 the offset number pointed to by the level counter is extracted from the offset number table, and in step S2023, the node type is extracted from the node read-out at step S1903 in FIG. 19, and processing proceeds to step S2024.

At step S2024, a determination is made whether the extracted node type extracted at step S2023 is that of a branch node. If the result of the determination is positive, processing proceeds to step S2025, and if it is negative, processing proceeds to step S2029.

At step S2025, the value computed by adding the base location number and offset number to the node location number is set in the array element number. Then, at step S2026, the discrimination bit position is extracted from the node, and at step S2027, the discrimination bit position is incremented by 1, and in step S2028, the discrimination bit position is written into the array element pointed to by the array element number set at step S2025, and a branch node is generated, and processing is terminated.

Conversely, when the determination at step S2024 is negative and the node type extracted at step S2023 is that of a leaf node, processing proceeds to step S2029, wherein the node location number and level counter are saved, and processing proceeds to step S2030.

At step S2030, a determination is made whether the value in the level counter is the same as the value in the upper limit value, and if it is not the same as upper limit value, at step S2031, the value in the node location number is doubled, and at step S2032, the level counter is incremented by 1, and at step S2033, the offset number pointed to by the level counter is extracted from the offset number table, and a return is made to step S2030.

The processing loop of the above noted steps S2030 to S2033 is that to dispose a leaf node in the lowest level of the pointerless tree in embodiment 2. In the examples shown in FIG. 1B and FIG. 8B, for example, the leaf node 210c at the 3rd level in the tree before conversion in FIG. 1B is converted to the node 210j at the 5th level in FIG. 8B. Then, the position information for node 210c in FIG. 8B is saved by the processing of step S2029 in FIG. 20B.

Also although the upper limit value for the level counter is set in step S1802b shown in FIG. 18A, instead of doing that, when generating the tree before conversion, for each leaf node being inserted, the number of levels to that leaf node can be counted, and the maximum value of those levels can be stored as a characteristic of the tree, and when a pointerless tree is generated in embodiment 2, that maximum value can be made the upper limit value for the level counter.

At the above noted step S2030, when the determination is made that the value in the level counter is the same as the value in the upper limit value, processing proceeds to step S2034, wherein the value computed by adding the base location number and offset number to the node location number is set in the array element number. Then at step S2035, the index key is extracted from the node, and at step S2036, the bit value "0" is inserted in the highest level bit position in the key, and in step S2037 the index key is written into the array element pointed to by the array element number set at step S2034, and a leaf node is generated, and processing proceeds to step S2038.
At step S2038, the node location number and level counter saved at step S2029 are set respectively in the node location number and level counter, and processing is terminated.

Next the processing to obtain the maximum number of levels in the tree before conversion is described.
FIG. 21 is a drawing describing an example of the processing flow to obtain the maximum number of levels in the tree before conversion. It describes the details of the processing in step S 1802a of FIG. 18A.

As shown in FIG. 21, first, in step S2101, the value 1 is set in the level counter, and in step S2102, the value set in the level counter is set in the maximum level counter. In other words, level counter and maximum level counter both have the value 1 set therein as their initial value.

Next, in step S2112, the tree is traversed from the traversal start node, and the number of levels to the nodes that are targets of the traversal are counted, and the maximum number of levels of the traversed nodes is obtained. Details of the processing in step S2112 are described hereinbelow referencing FIG. 22.

Next, in step S2113, a determination is made whether the stack pointer of the search path stack points to the array element number of the root node of the tree. Storing array element numbers in the search path stack is done in the processing in step S2112.
If the stack pointer of the search path stack points to the array element number of the root node of the tree, the processing of all the nodes in the tree is completed and processing is terminated. If it does not, processing proceeds to step S2114.

At step S2114, the array element number is extracted from the search path stack and the stack pointer of the search path stack is decremented by 1. Next, in step S2115, a node position is obtained from the array element number extracted at step S2114, and in step S2116, a determination is made whether that node position is that of a node [0]. If the node position is not that of a node [0], at step S2117 the level counter is decremented by 1, and a return is made to step S2113. If the node position is that of a node [0], processing proceeds to step S2118.

At step S2118, the array element number extracted at step S2114 is incremented by 1, and the array element number of a node [1] is acquired. Then, at step S2119, the array element number of the node [1] acquired at step S2118 is set in the array element number of the traversal start node, and a return is made to step S2112.
By repeating the processing loop of the above noted steps S2112 to step S2119 until the determination in step S2113 is that the stack pointer of the search path stack points to the array element number of the root node of the tree, all the nodes on the tree are traversed, and the maximum number of levels of the traversed nodes, in other words, the maximum number of levels in the tree before conversion is obtained.

FIG. 22 is a drawing showing an example of the processing flow to traverse the tree from the traversal start node, to count the number of node levels, and to obtain the maximum number of node levels. It describes the details of the processing in step S2112 of FIG. 21.
As shown in the drawing, first, in step S2201, the array element number of the traversal start node is set in the array element number. The array element number of the traversal start node is set in step S2107 in FIG. 21 for the first-time processing of the processing loop of steps S2112 to S2119 shown in FIG. 21, and for processing thereafter it is set in step S2119 shown FIG. 21.

Next, in step S2202, the array element number is stored in the search path stack. This array element number is that which was set in step S2201 or in the step S2210 described later.

Next, in step S2203, the array element pointed to by the array element number is read out, as a node, from the array wherein is stored the tree before conversion, and next, in step S2205, the node type is extracted from the read-out node.

Next, at step S2206, a determination is made whether the extracted node type is that of a branch node. If the determination in step S2206 is that the node type indicates a branch node, processing proceeds to S2207, and if the determination is that the node type indicates a leaf node rather than a branch node, processing proceeds to S2210.

At step S2207, the level counter is incremented by 1, and in step S2209, the coupled node indicator is extracted from the node read-out at step S2203, and at step S2210, the value 0 is added to the extracted coupled node indicator and the result is set in the array element number, and a return is made to step S2202.

The processing loop of the above noted steps S2202 to S2210 is repeated until the node type in step S2206 indicates a leaf node type. Also, although in the example of processing flow shown in FIG. 22 the node traversal is done giving priority to the node [0] side because the value 0 is added to coupled node indicator in step S2210 and is set in the array element number, it is clear to one skilled in the art, from the above description, that the traversal can also be made giving priority to the node [1] side.

When the determination in the above noted step S2206 is that the node type indicates a leaf node, processing proceeds to step S2211, and a determination is made whether the value in the level counter is larger than the value set in the maximum level counter, and if it is not larger the processing terminates as is and if it is larger the value of the level counter is set in the maximum level counter at step S2212, and processing terminates.

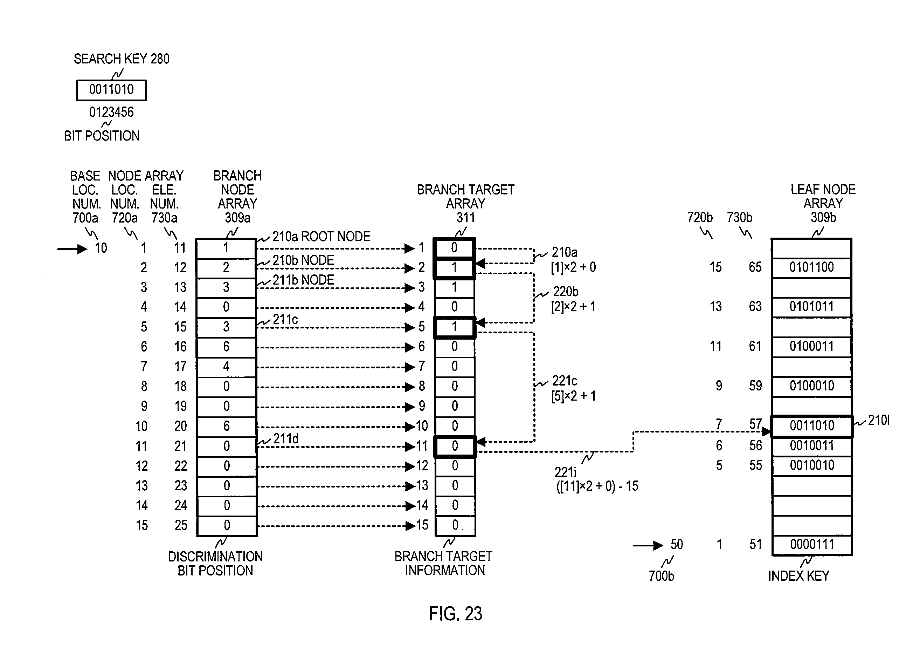

Next, embodiment 3 of this invention is described, referencing FIG. 23 to FIG. 31A. As was described above, the configuration of the coupled node tree related to embodiment 3 of this invention is the same as that for embodiment 2. Thus the description hereinbelow of embodiment 3 of this invention references the descriptions in FIG. 8A and FIG. 8B.
FIG. 23 is a drawing describing conceptually search processing in embodiment 3 of this invention.
The array 309 wherein is stored the coupled node tree shown in FIG. 3 is, in the example shown in FIG. 23, divided into the branch node array 309a wherein is stored the branch nodes and the leaf node array 309b wherein is stored the leaf nodes. In each of these arrays are stored the branch nodes and leaf nodes of the coupled node tree 200b shown in FIG. 8B.

Node location numbers 720a and 720b in addition to array element numbers 730a and array element numbers 730b are appended to the array elements in branch node array 309a and leaf node array 309b, respectively. Further, base location number 700a and 700b are affixed to branch node array 309a and leaf node array 309b, respectively. The node location number is, as it were, a virtual or logical array element number and it is a set of consecutive numbers starting from 1.

The base location number is set in such a way that the node location numbers of the array elements in the array start from the number 1. The sum of the base location number and the node location number becomes the array element number. In the example in FIG. 23, because the value for the top array element number in array element number 730a for branch node array 309a is 11, by making the value for the base location number 700a to be 10, the values for the node location number 720a are enabled to start from 1. Because the value for the top array element number in array element number 730b for leaf node array 309b is 51, by making the value for the base location number 700b to be 50, the values for the node location number 720b are enabled to start from 1, the same as for node location number 720a.
The introduction of base location numbers and node location numbers enables greater freedom in disposing the branch node array 309a and leaf node array 309b in the array. Also, the freedom for selecting the storage means wherein the branch node array 309a and leaf node array 309b are stored can also be increased.
Furthermore, when the base location number is set to be 0, the node location number and array element number coincide. An exemplary configuration of a coupled node tree stored in an array wherein the branch node array and the leaf node array are not separated out and the base location number set to be 0 is shown in the example FIG. 8A. Also, the tree configuration of a coupled node tree stored in an array wherein the branch node array and the leaf node array are not separated out and the base location number set to be 0 is shown conceptually in the example FIG. 8B.

In FIG. 23, a search key 280 and a branch target array 311 are also depicted. The search key 280 has the bit string "0011010" stored therein.
The array element whose node location number 720a in branch node array 309a has the value 1 (hereinbelow called the array element with node location number 1) has the discrimination bit position with the value 1 (hereinbelow called discrimination bit position 1) of the root node 210a stored therein, and because the bit value at bit position 1 in the bit string stored in search key 280 is a 0, a 0 is stored in the array element with array element number 1 in the branch target array 311.
This branch target information 0 stored in the array element with array element number 1 in the branch target array 311 indicates that when the coupled node tree shown in FIG. 2B is searched using search key 280 the search path branches to the node 210b whose node position is 0 in the node pair 210b immediately below the root node 210a.

Next, the array element with node location number 2 in branch node array 309a has the discrimination bit position 2 for node 210b stored therein, and because the bit value at bit position 2 in the bit string stored in search key 280 is a 1, a 1 is stored in the array element with array element number 2 in the branch target array 311.
In the same way thereinbelow, the array element with node location number 3 in branch node array 309a has the discrimination bit position for node 211b stored therein, and because the bit value at bit position 3 in the bit string stored in search key 280 is a 1, a 1 is stored in the array element with array element number 3 in the branch target array 311.

The array element with node location number 5 in branch node array 309a has the discrimination bit position 3 for node 211c stored therein, and because the bit value at bit position 3 in the bit string stored in search key 280 is a 1, a 1 is stored in the array element with array element number 5 in the branch target array.
The array element with node location number 6 in branch node array 309a has the discrimination bit position 6 stored therein, and because the bit value at bit position 6 in the bit string stored in search key 280 is a 0, a 0 is stored in the array element with array element number 6 in the branch target array 311.

The array element with node location number 7 in branch node array 309a has the discrimination bit position 4 stored therein, and because the bit value at bit position 4 in the bit string stored in search key 280 is a 0, a 0 is stored in the array element with array element number 7 in the branch target array 311.
The array element with node location number 10 in branch node array 309a has the discrimination bit position 6 stored therein, and because the bit value at bit position 6 in the bit string stored in search key 280 is a 0, a 0 is stored in the array element with array element number 10 in the branch target array 311.

The array element with node location number 11 in branch node array 309a has the discrimination bit position 0 for node 211d stored therein, and because the bit value at bit position 0 in the bit string stored in search key 280 is a 0, a 0 is stored in the array element with array element number 11 in the branch target array 311. In the same way, a 0 is stored in the remaining array elements in branch target array 311 pointed to by an array element number with the same value as the node location number for array elements in branch node array 309a that have a discrimination bit position 0 stored therein.

In embodiment 3 of this invention, a branch node array 309a and a leaf node array 309b are generated from the set of bit strings that are the object of a bit string search, and when a search key 280 is specified, the branch target array 311 is generated by means of the search key 280 and the branch node array.
Then, by means of the branch target array 311, an array element number in the leaf node array for the leaf node wherein is stored the index key that is the search result is obtained.

First, the branch target information stored in the array element number 1 enclosed in thick lines in branch target array 311 (hereinbelow called the branch target information with array element number 1) is read out and by adding the read out branch target information to double the array element number, the array element number of the array element that contains the branch target information next to be read out is obtained. In the example shown in FIG. 23, in the same way as that depicted in FIG. 8B, as shown by the dotted-line arrow 220a with an appended label, the array element number 2, computed by doubling the array element number 1 and adding a 0, is obtained.

Next, as shown by the dotted-line arrow 220b, the value 1 for the branch target information stored in the array element with array element number 2, enclosed in thick lines, is read out and the array element number 5, computed by doubling the array element number 2 and adding the read-out value, is obtained.
Then, as shown by the dotted-line arrow 221c, the value 1 for the branch target information stored in the array element with array element number 5, enclosed in thick lines, is read out and the array element number 11, computed by doubling the array element number 2 and adding the read-out value, is obtained.

The target of the next branch is at the lowest level in the coupled node tree. As shown by the dotted-line arrow 221i, the value 0 for the branch target information stored in the array element with array element number 11, enclosed in thick lines, is read out and that value is added to the value computed by doubling the array element number 11, and from the resulting value is subtracted the value 15, which is the largest node location number for the branch node array 309a, and the node location number 7 in the leaf node array 309b is acquired. The index key "0011010" is extracted from the leaf node 210i stored in the array element with node location number 7 in leaf node array 309b, enclosed in thick lines, and search processing is terminated.

Although in the example shown above in FIG. 23, the description was one wherein the branch node array 309a and the leaf node array 309b are separate and in order to obtain the node location number 7 in the leaf node array 309b, the value 15, which is the largest node location number for the branch node array 309a, is subtracted from the value compound by doubling the array element number 11 in the branch target array 311 and then adding the branch target information, if the branch nodes and leaf nodes are stored in a single array, there is no need to subtract the node location number for the last array element containing a branch node when obtaining the node location number of an array element containing a leaf node because the node location numbers are consecutive numbers.

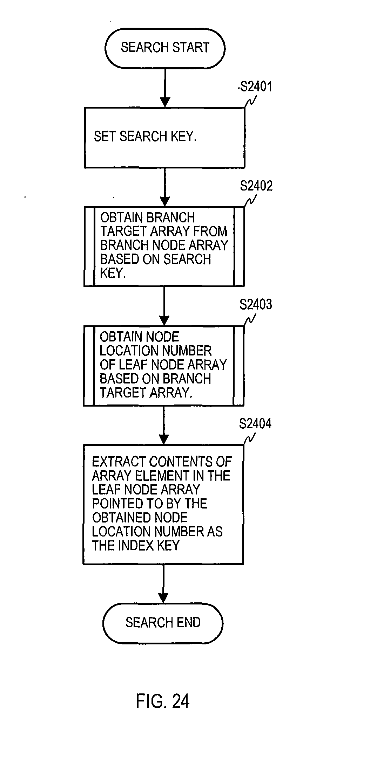

Next, details of the search processing in embodiment 3 of this invention are described, referencing FIG. 24 to FIG. 26.
FIG. 24 is a drawing describing an example of the processing flow for search processing in embodiment 3 of this invention.

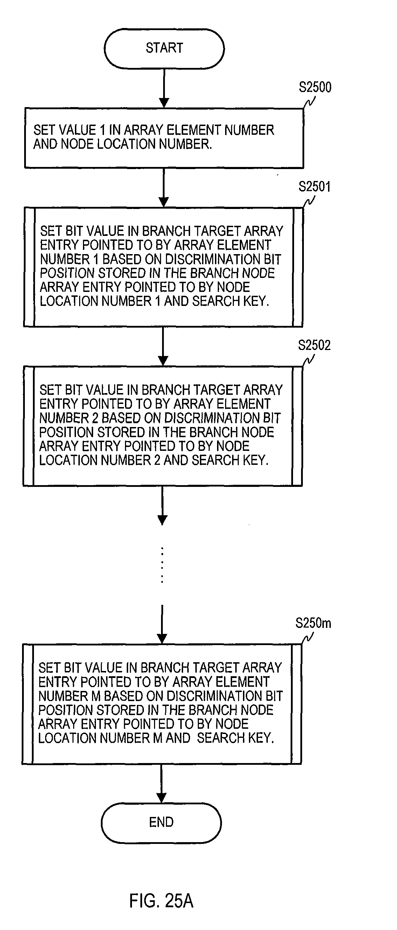

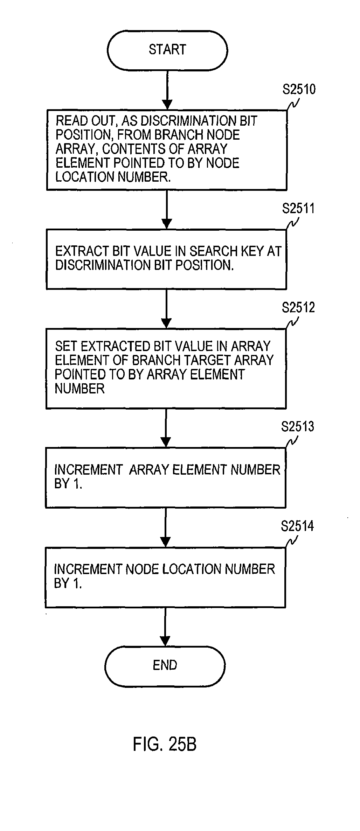

As shown in FIG. 24, first, in step S2401, the search key is set. In the example shown in FIG. 23, this setting of the search key corresponds to the setting of bit string "0011010" in search key 280.
Next, in step S2402, the branch target array 311 is obtained from the branch node array based on the search key. This processing corresponds, in the example shown in FIG. 23, to the processing to generate branch target array 311 from branch node array 309a using search key 280 described above. The detailed processing flow in step S2402 is described hereinbelow referencing FIG. 25A and FIG. 25B.

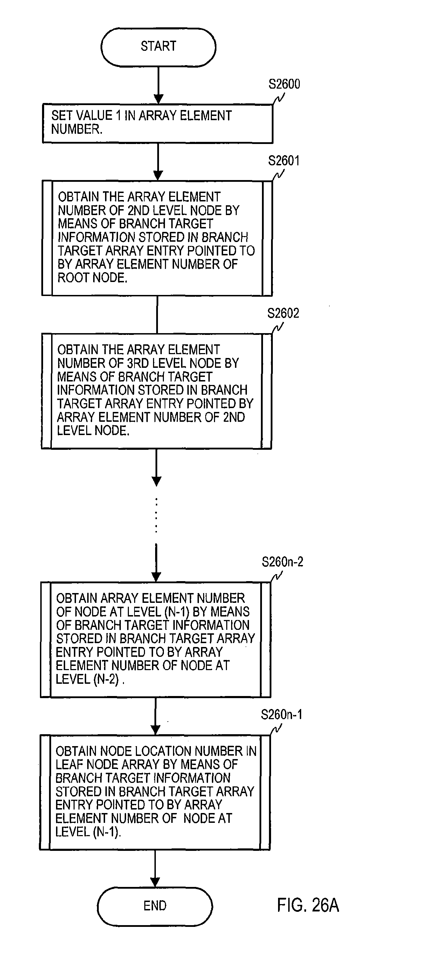

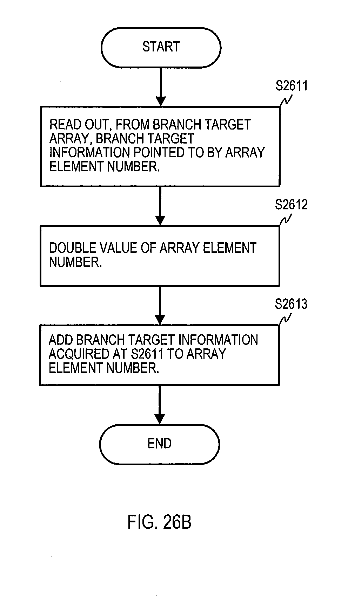

Next, in step S2403, a node location number in the leaf node array is obtained based on the branch target array 311. This processing corresponds, in the example shown in FIG. 23, to the processing of successively reading out the branch target information stored in array elements from the branch target information stored in the array element with array element number 1 up to that with array element number 11 in the branch target array 311 described previously and, based on the branch target information stored in the array element with array element number 11 and the maximum value of the node location numbers in the branch node array, obtaining a node location number in the leaf node array. The detailed processing flow in step S2403 is described hereinbelow referencing FIG. 26A and FIG. 26B.

Finally, in step S2404, the contents of the array element in the leaf node array pointed to by the node location number obtained at step S2403 is extracted as the index key and processing is terminated. At this point, the index key extracted at step S2404 can be made the search result key and the search result key can be compared with the search key and if they coincide, the search can be taken to be successful and if they do not coincide the search can be taken to be a failure.

FIG. 25A is a drawing describing an example of the processing flow to obtain a branch target array 311 from a branch node array by means of a search key. It describes the detailed processing flow of step S2402 shown in FIG. 24. In the example shown in FIG. 25A, the number of branch nodes disposed in the branch node array is taken to be "m".

First, in step S2500, the value 1 is set in the array element number and node location number. Next, in step S2501, by using the discrimination bit position stored in the array element in the branch node array pointed to by node location number 1 and the search key, the bit value indicating the branch target information is set in the array element in the branch target array 311 pointed to by array element number 1.

Continuing, in step S2502, by using the discrimination bit position stored in the array element in the branch node array pointed to by node location number 2 and the search key, the bit value indicating the branch target information is set in the array element in the branch target array 311 pointed to by array element number 2.

In the same way, thereinafter, in steps S2503 to S250m, by using the discrimination bit position stored in the array elements in the branch node array pointed to by node location numbers 3 to m and the search key, the bit values indicating the branch target information are set in the array elements in the branch target array 311 pointed to by array element numbers 3 to m, successively.

Although the example of processing flow shown in FIG. 25A is one whereby the branch target array 311 is generated by means of a branch node array wherein is disposed a specific number "m" of branch nodes, it is possible to create the processing flow for implementing the generating of the branch target array 311 using a branch node array wherein is disposed any number of branch nodes, by means of an assembler macro taking the number m of branch nodes as a parameter or by other implementation techniques.

Also, in the example shown in FIG. 25A, it is clear that instead of a processing flow that, for each discrimination bit position disposed in the branch node array, executes one by one in sequence the processing using that discrimination bit position, the same processing results can be obtained by setting up a determination processing that determines whether the processing for each discrimination bit position disposed in the branch node array has been completely finished, and if the processing is not finished, using a processing flow that includes a processing loop repeating the processing using the next discrimination bit position. Next, details of the processing in step S2501 to step S250m is described referencing FIG. 25B.

FIG. 25B is a drawing describing an example of the processing flow to set the branch target information in the branch target array 311 using the discrimination bit position and the search key.

First, in step S2510, the contents of the array element pointed to by the node location number are read out from branch node array as the discrimination bit position. The first time step S2510 is processed, the value 1 is set in the node location number by the processing of step S2500 in FIG. 25A.

Next, in step S2511, the bit value pointed by the discrimination bit position read out at step S2510 is extracted from the search key, and in step S2512, the extracted bit value is set in the array element in the branch target array 311 pointed to by the array element number as branch target information. The first time step S2512 is processed, the value 1 is set in the array element number by the processing of step S2500 in FIG. 25A.

Next, in step S2513, the array element number is incremented by 1, and in step S2514, the node location number is incremented by 1, and processing is terminated. By executing successively the processing in steps S2510 to S2514 described above for each array element in the branch node array branch target information can be set successively in the array elements in the branch target array 311.

FIG. 26A is a drawing describing an example of the processing flow to obtain a node location number in the leaf node array based on the branch target array 311. It describes the detailed processing flow of step S2403 shown in FIG. 24. In the example shown in FIG. 26A, the number of levels in the coupled node tree is taken to be "n".

First, at step S2600, the value 1 is set in the array element number. Next, in step S2601, an array element number of a 2nd level node is obtained by means of the branch target information stored in the branch target array 311 element pointed to by the array element number corresponding to the node at the 1st level (root node) (hereinbelow called the array element number of a 1st level node), in other words, the branch target array 311 element pointed by array element number 1.

Continuing, in step S2602, an array element number of a 3rd level node is obtained by means of the branch target information stored in the branch target array 311 element pointed to by the array element number of the node at the 2nd level.
In the same way, thereinafter, in steps S2603 to S260n-2, the array element numbers of the nodes at the 4th to (n-1) th level are obtained by using the branch target information stored in the array elements in the branch target array 311 pointed to by array element numbers of the 3rd level to the n-2th level nodes, successively. Details of the processing in steps S2601 to S260n-2 are described hereinbelow referencing FIG. 26B.

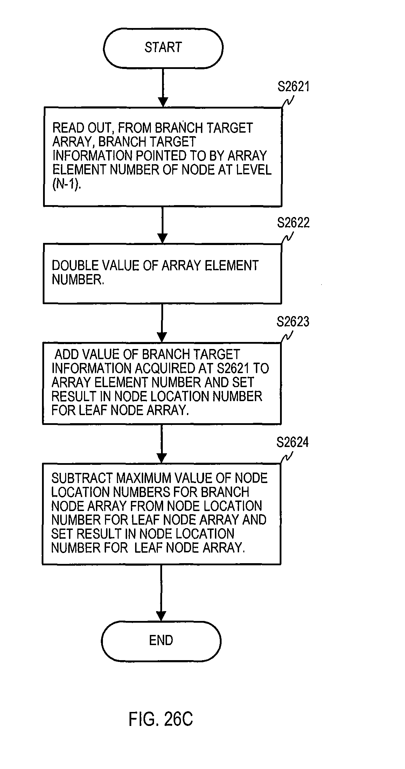

Finally, in step S260n-1, a node location number for the leaf node array is obtained by means of the branch target information stored in the branch target array 311 element pointed to by the array element number of the node at the (n-1) th level. Details of the processing in step S260n-1 are described hereinbelow referencing FIG. 26C.
Also, although the example of processing flow shown in FIG. 26A is one using a coupled node tree, in embodiment 3 of this invention, wherein the tree has a specific number of levels "n", it is possible to create the processing for implementing search processing using a coupled node tree with any number of levels, in an embodiment of this invention, by means of an assembler macro taking the number of levels as a parameter or by other implementation techniques.

Also, in the example shown in FIG. 26A, it is clear that instead of a processing flow that, for the branch target information in a node at each level in the coupled node tree wherein is disposed the branch target array 311, executes one by one in sequence the processing using that branch target information, the same processing results can be obtained by setting up a determination processing that determines whether the processing for the branch target information in the node at 1 level higher than the lowest level has been finished, and if the processing is not finished, using a processing flow that includes a processing loop repeating the processing using the branch target information at the node in the next level.

FIG. 26B is a drawing describing an example of the processing flow to obtain the array element number of a node in the next level using the branch target information. It describes the detailed processing flow of the processing of steps S2602 to S260n-2 shown in FIG. 26A.

As shown in the drawing first, in step S2611, the branch target information pointed to by the array element number is read out from the branch target array 311. When the first time step S2611 is processed, the value 1 is set in the array element number by the processing in step S2600 in FIG. 26A.

Next, in step S2612, the value of the array element number is doubled, and, in step S2613, the branch target information acquired at step S2611 is added to the array element number and processing is terminated.
The processing in FIG. 26B described above is the processing shown by the dotted-line arrow 220a, 220b, and 221 c in the example shown in FIG. 23. For example, as shown by the dotted-line arrow 220b, it is the processing to read out the value 1 for the branch target information stored in the array element with array element number 2, enclosed in thick lines, and to add that value to the value which is double the value of array element number 2 and then to obtain the array element number 5.

FIG. 26C is a drawing describing an example of the processing flow to obtain a node location number in the leaf node array using the branch target information. It describes the detailed processing flow of step S260n-1 shown FIG. 26A.

As shown in the drawing, first, in step S2621, the branch target information pointed to by the array element number for the node at the (n-1) level is read out from the branch target array 311. The array element number for the node at the (n-1) level is set in the processing of step S260n-2 in FIG. 26A.

Next, in step S2622, the value of the array element number is doubled, and in step S2623, the branch target information acquired at step S2611 is added to the array element number and the result is set in the node location number for the leaf node array.

Then, also, in step S2624, the maximum value of the node location numbers in the branch node array is subtracted from the node location number for the leaf node array set at step S2623 and the result is set as the node location number for the leaf node array and processing is terminated.

The processing in the above noted FIG. 26C is the processing shown by the dotted-line arrow 221i in the example shown in FIG. 23.
As was described above, if the branch nodes and leaf nodes are stored in a single array, there is no need to subtract the node location number for the last array element containing a branch node when obtaining the node location number of an array element containing a leaf node because the node location numbers are consecutive numbers. Thus, in that case, the processing in step S2624 shown in FIG. 26C can be deleted from the processing flow.

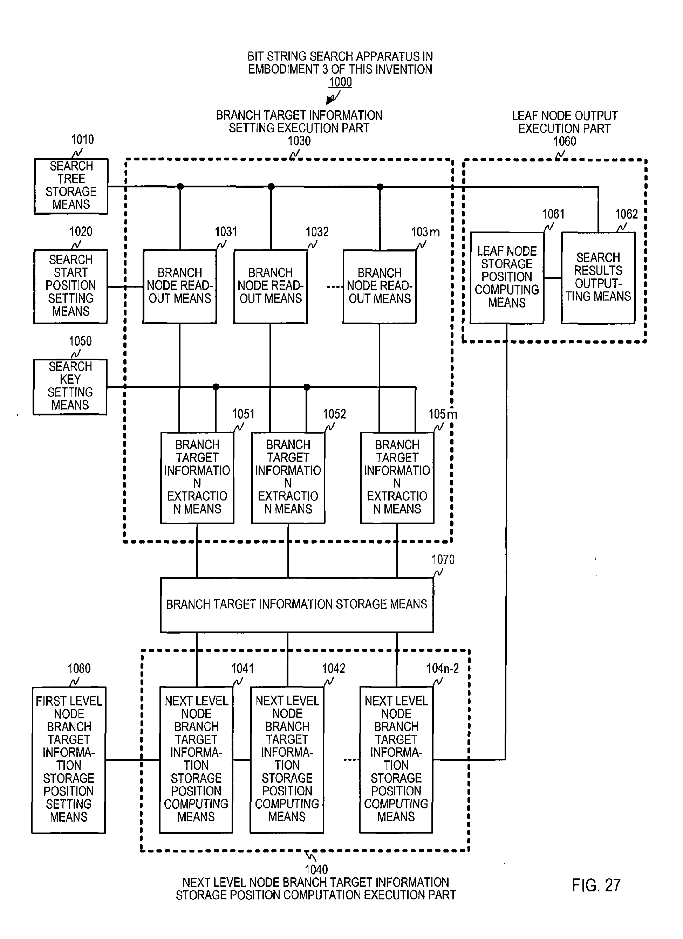

FIG. 27 is a drawing describing an exemplary function block configuration for a bit string search apparatus in embodiment 3 of this invention.
The bit string search apparatus 1000 shown in the example in FIG. 27 that is related to embodiment 3 of this invention prepares a search tree storage means 1010, a search start position setting means 1020, a search key setting means 1050, a branch target information setting execution part 1030, a branch target information storage means 1070, a first level node branch target information storage position setting means 1080, a next level node branch target information storage position computation execution part 1040, and a leaf node output execution part 1060.

An array is kept in a storage area in search tree storage means 1010 and a coupled node tree related to embodiment 3 of this invention is disposed in that array. The coupled node tree can be, as shown in the example in FIG. 23, divided into a branch node array wherein branch nodes are stored and a leaf node array wherein leaf nodes are stored and the tree can be disposed therein.

The search start position setting means 1020 sets the value 1, which is the node location number of the root node, in the node location number of the search start node, and sets the value 1 in the array element number for the branch target array 311 wherein is stored branch target information. The function of the search start position setting means 1020 corresponds to the processing in step S2500 shown in FIG. 25A. Also, the search key is set in the search key setting means 1050.

The branch target information setting execution part 1030 includes the branch node read-out means 1031 to 103m and the branch target information extraction means 1051 to 105m. The "m" expresses the number of branch nodes stored in the search tree storage means 1010. In the example shown in FIG. 23, m = 15.

The branch node read-out means 1031 to 103m read out, from the branch node array disposed in search tree storage means 1010, the contents of array elements pointed to by node location numbers, as discrimination bit positions, and output them and the array element numbers in the branch target array 311 to the branch target information extraction means. Then the array element number for the branch target array 311 and the node location number for the branch node array are both incremented by 1 and those values are output to the next branch node read-out means.

The branch target information extraction means 1051 to 105m extract, from the search key set in the search key setting means 1050, the bit values pointed to by the discrimination bit positions output by the branch node read-out means 1031 to 103m, and set those bit values in the array elements in the branch target array 311 pointed to by the array element numbers output by the branch node read-out means 1031 to 103m as branch target information. The functions of the branch node read-out means 1031 and branch target information extraction means 1051 correspond to the processing of step S2501 shown in FIG. 25A. In the same way, the functions of each of the branch node read-out means and branch target information extraction means up to branch node read-out means 103m and branch target information extraction means 105m correspond to each of the processing up to step S250m shown in FIG. 25A. The branch target array 311 is kept in a storage area in branch target information storage means 1070.

The first level node branch target information storage position setting means 1080 sets the value 1 in the array element number for the branch target array 311. The function of the first level node branch target information storage position setting means 1080 corresponds to the processing in step S2600 shown in FIG. 26A.

The next level node branch target information storage position computing part 1040 includes the next level node branch target information storage position computing means 1041 to 104n-2. "n" is the number of levels in the coupled node tree.

The next level node branch target information storage position computing means 1041 to 104n-2 read out from the branch target array 311 the branch target information pointed to by the array element number and double the value of the array element number, and add the branch target information to the doubled array element number, and obtain that value as the array element number of an array element in the branch target array 311 wherein is stored the branch target information corresponding to a node at the next level. The functions of the next level node branch target information storage position computing means 1041 to 104n-2 correspond to the processing of steps S2601 to S260n-2, respectively, shown in FIG. 26A.

The array element number for reading out the branch target information used by the next level node branch target information storage position computing means 1041 is the one set by the first level node branch target information storage position setting means 1080. The array element numbers for reading out the branch target information used by the next level node branch target information storage position computing means 1042 to 104n-2 are the array element numbers obtained, respectively, by the next level node branch target information storage position computing means at the previous level.
The array element number obtained by the next level node branch target information storage position computing means 104n-2 is input to the leaf node output execution part 1060 described next and is used to read out the leaf node.

The leaf node output execution part 1060 includes the leaf node storage position computing means 1061 and the search results outputting means 1062. The leaf node storage position computing means 1061 reads out the branch target information pointed to by the array element number obtained from the next level node branch target information storage position computing means 104n-2, doubles the value of array element number, adds the branch target information to the doubled value, and obtains the result as the provisional node location number of an array element in the leaf node array. Then, the maximum value of the node location numbers for the branch node array, in other words, the number "m" of the branch nodes stored in search tree storage means 1010, is subtracted from the provisional node location number and the result is obtained as the node location number of an array element in the leaf node array. The function of the leaf node storage position computing means 1061 corresponds to the processing shown in step S260n-1 in FIG. 26A, in other words, the processing in FIG. 26C.

The search results outputting means 1062 reads out a leaf node from the search tree storage means 1010 using the node location number for an array element in the leaf node array obtained by the leaf node storage position computing means 1061 and extracts an index key or information for accessing an index key. When that which is extracted from the leaf node is an index key that index key is output as the search result key. When that which is extracted from the leaf node is information for accessing an index key, the index key is read out based on the read-out information for accessing the index key and is output as the search result key.
It is also possible to compare the search result key with the search key and if they coincide, output success as a search result, and if they do not coincide, output failure as a search result.

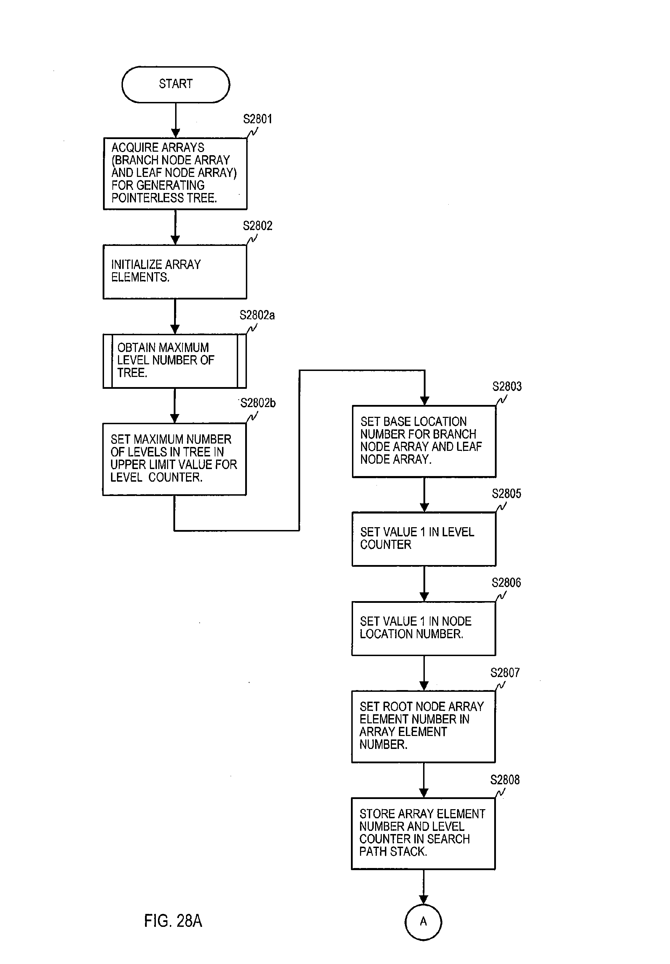

Next, the generation of a coupled node tree related to embodiment 3 of this invention is described referencing FIG. 28A to FIG. 31B. As was noted hereinabove, because the configuration of a coupled node tree related to embodiment 3 of this invention is the same as the configuration of a coupled node tree related to embodiment 2, a coupled node tree related to embodiment 3 can be generated using the example of processing flow depicted in FIG. 18A and FIG. 18B. Thus the generation processing of coupled node tree related to embodiment 3 described hereinbelow can be said to be a variation of the generation processing of coupled node tree related to embodiment 2.
Also, in the description hereinbelow, just as in the description for embodiment 2, the coupled node tree related to embodiment 3 of this invention is called a pointerless tree and the coupled node tree of prior art may at times be called simply a tree or the tree before conversion.
The generation of a pointerless tree in embodiment 3 of this invention, just as for the generation of a pointerless tree in embodiment 2, can be implemented, for example, in the following way. In other words, when generating a pointerless tree, the tree with the configuration shown in the example in FIG. 1A and FIG. 1B is taken to be generated by the index keys to be stored in the pointerless tree. Then the generation of the pointerless tree is implemented by successively traversing the nodes of the tree from the root node and converting them into the nodes of embodiment 3 of this invention.

FIG. 28A is a drawing describing an example of the processing flow of the prior stage of processing to generate a pointerless tree in embodiment 3 of this invention. As shown in FIG. 28A, first in step S2801, the arrays (branch node array and leaf node array) for generating a pointerless tree are acquired, and in step S2802, the array elements are initialized. The processing of this step S2802 is necessary for using dummy branch nodes.

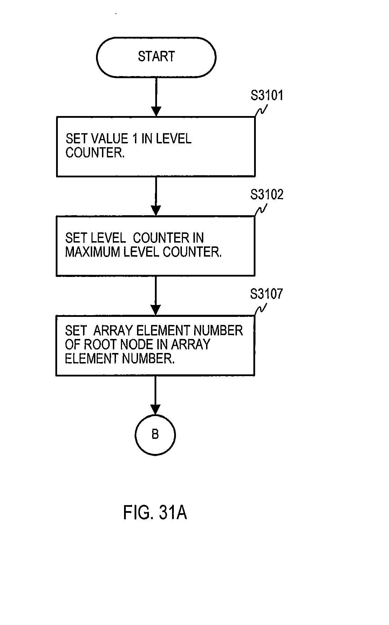

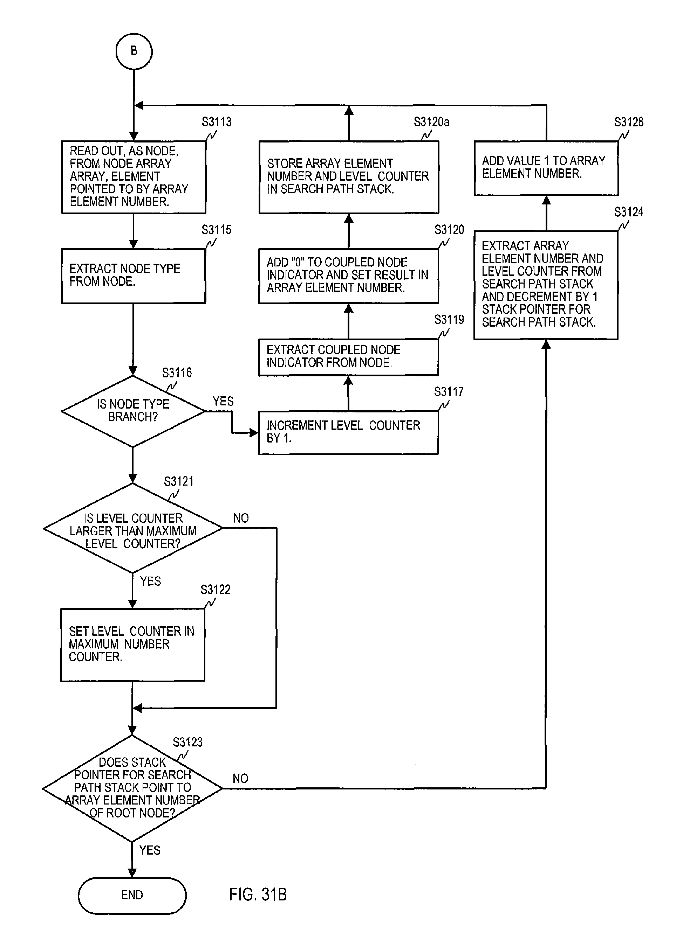

Next, in step S2802a, the maximum number of levels in the tree before conversion is obtained, and in step S2802b, that maximum number of levels is set in the upper limit value for the level counter. Details of the processing in step S2802a is described hereinafter referencing FIG. 31A and FIG. 31B.

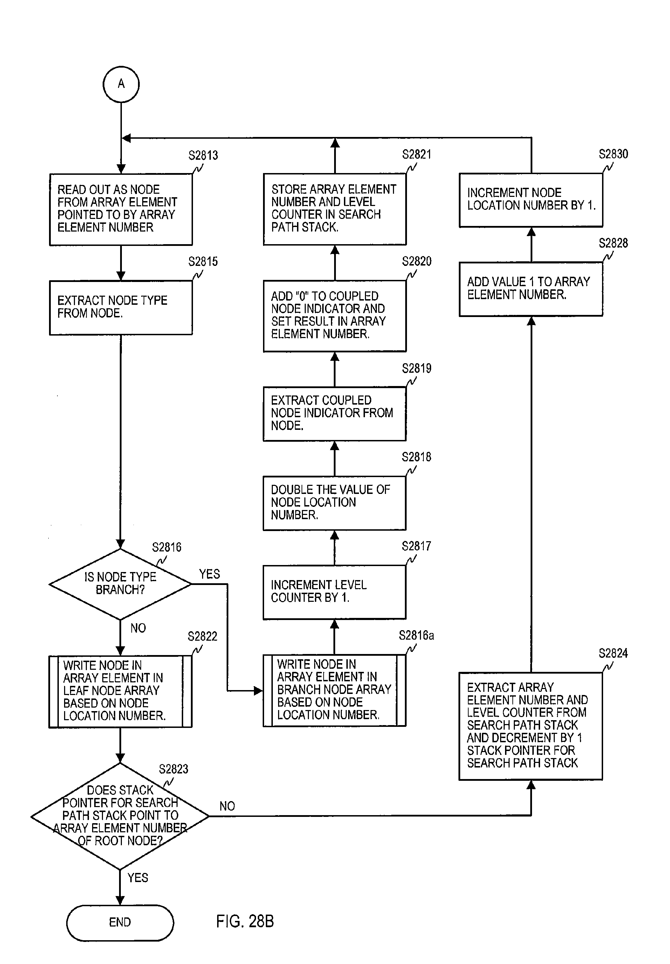

Next, in step S2803, the base location numbers for the branch node array and the leaf node array are set, and in step S2805, the value 1 is set in the level counter. Next, in step S2806, the value 1 is set in the node location number, and in step S2807, the array element number for the root node of the tree is set in the array element number. Also, in step S2808, the array element number and the counter value in the level counter are stored in the search path stack and processing proceeds to step S2813 shown in FIG. 28B.

FIG. 28B is a drawing describing an example of the processing flow of the latter stage of processing to generate a pointerless tree in embodiment 3 of this invention. As shown in FIG. 28B, in step S2813, the array element pointed to by the array element number is read out as a node from the array wherein is stored the tree before conversion. The first time step S2813 is processed, the array element number of the root is set in the array element number at step S2807. In the second and thereafter processing, the array element number is set in step S2828 described below. In the description hereinbelow, the node read out at step S2813 may at times be called the traversal start node.

Next, in step S2815, the node type is extracted from the node read out at step S2813, and at step S2816, a determination is made whether the extracted node type is a branch node. If the determination in step S2816 is that the node type indicates a leaf node rather than a branch node, processing proceeds to step S2822, and if it indicates a branch node, processing proceeds to step S2816a.

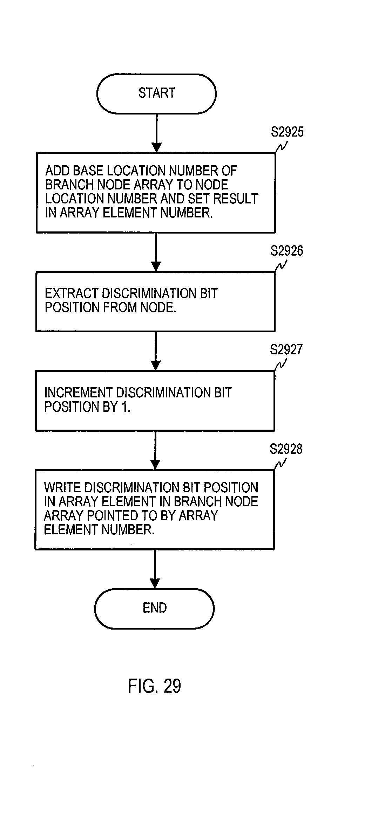

At step S2816a, the node is written into an array element in the branch node array based on the node location number. Details of the processing in step S2816a are described hereinbelow referencing FIG. 29.

Next, in step S2817, the level counter is incremented by 1, and proceeding to step S2818, wherein the value in the node location number is doubled. Furthermore, in step S2819, the coupled node indicator is extracted from the node read out at step S2813, and at step S2820, the value 0 is added to the extracted coupled node indicator and the result is set in the array element number.
Then, in step S2821, the array element number and the counter value in the level counter are stored in the search path stack and a return is made to step S2813. Here, because the array element number stored in the search path stack is the value to which the value 0 was added to the coupled node indicator at step S2820, it is the array element number of a node [0].

The above noted processing loop of steps S2813 to S2821 is repeated until, in step S2816, the node type indicates a leaf node. In other words, one block of processing is to traverse from the traversal start node to the first leaf node, to read out that node, to convert it, and to write it as a node in the pointerless tree. In the example of the processing flow shown in FIG. 28B, the node traversal is done giving priority to the node [0] side because the value 0 is added to coupled node indicator in step S2820 and is set in the array element number, but it is clear to one skilled in the art, from the above description, that the traversal can also be made giving priority to the node [1] side.

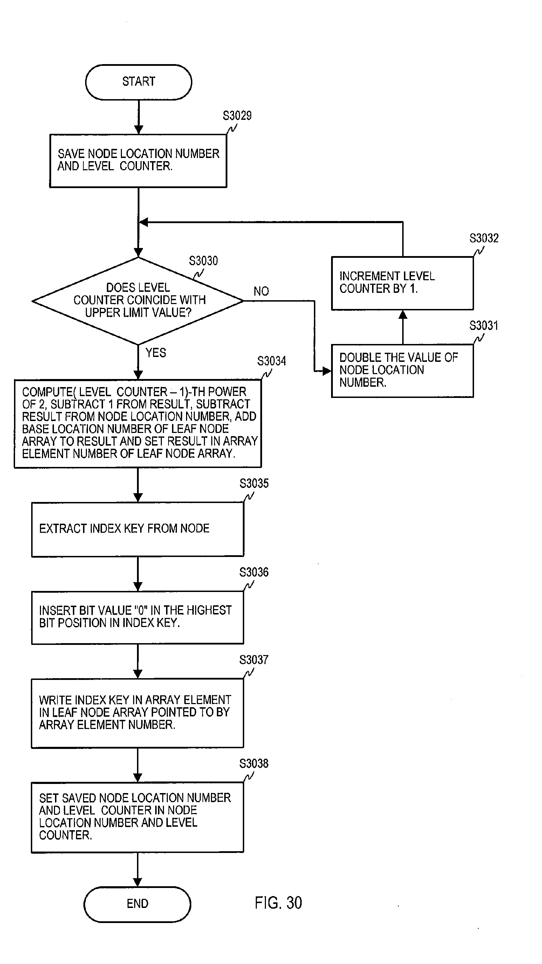

Conversely, when the determination in step S2816 is that the node type indicates a leaf node rather than a branch node and processing proceeds to step S2822, the node is written in the array element in the leaf node array based on the node location number. Details of the processing in step S2822 are described hereinbelow referencing FIG. 30.

Next, in step S2823, a determination is made whether the stack pointer of the search path stack points to the array element number of the root node of the tree. If the stack pointer of the search path stack points to the array element number of the root node of the tree, the processing of all the nodes in the tree is completed and processing is terminated. Otherwise, the processing proceeds to step S2824.

At step S2824, the array element number and the counter value in the level counter are extracted from the search path stack, and the stack pointer of the search path stack is decremented by 1. Next, in step S2828, the array element number extracted at step S2824 is incremented by 1, and the array element number for a node [1] is acquired as the array element number for the traversal start node. Then, at step S2830, the node location number is incremented by 1 and a return is made to step S2813.

By repeating the processing loop of the above noted steps S2813 to S2830 until the stack pointer of the search path stack points to the array element number of the root node of the tree in step S2823, all of the nodes on the tree are traversed and each node is converted into a node in the pointerless tree and the pointerless tree is generated.

FIG. 29 is a drawing describing an example of the processing flow to generate a branch node in embodiment 3 of this invention. It describes details of the processing in step S2816a shown in FIG. 28B.

As shown in the drawing, first, in step S1025, the base location number of the branch node array is added to the node location number and the result is set in the array element number. Then at step S1026, the discrimination bit position is extracted from the node, and at step S1027, that discrimination bit position is incremented by 1, and in step S1028, the discrimination bit position is written into the array element in the branch node array pointed to by the array element number set at step S1025, and a branch node is generated, and processing is terminated.

FIG. 30 is a drawing describing an example of the processing flow to generate a leaf node in embodiment 3 of this invention. It describes details of the processing in step S2822 shown in FIG. 28B.

As shown in the drawing, first, in step S3029, the node location number and level counter are saved and processing proceeds to step S3030.
At step S3030, a determination is made whether the level counter coincides with the upper limit value, and if it does not coincide with upper limit value, at step S3031, the value of node location number is doubled, and at step S3032, the level counter is incremented by 1, and a return is made to step S3030.

The above noted processing loop of step S3030 to S3032 disposes the leaf node in the lowest level in the pointerless tree. In the examples shown in FIG. 1B and
FIG. 2B, for example, the leaf node 210c which is at the 3rd level in the tree before conversion in FIG. 1B is converted to node 210j at the 5th level in FIG. 2B. Then, the position information for node 210c in FIG. 2B is saved by the processing of step S3029 in FIG. 30.

Also, although the upper limit value for the level counter was set at step S2802b shown in FIG. 28A, instead of doing that, when generating the tree before conversion, each time a leaf node is inserted, the number of levels to that leaf node can be counted, and the maximum value of those can be stored as a characteristic of the tree, and when a pointerless tree is generated in embodiment 3 of this invention, that maximum value can be made the upper limit value for the level counter.

When the determination at the above noted step S3030 is that the level counter coincides with the upper limit value, processing proceeds to step S3034. At step S3034, the upper limit value for the level counter is decremented by 1, that result is squared, that result is decremented by 1, that result is subtracted from the node location number, and the sum of that result and the base location number of the leaf node array is set in the array element number for the leaf node array. In the example shown in FIG. 8B, the upper limit value for the level counter is 5, and the value obtained by decrementing that upper limit value by 1 gives 4 which when raised to the power of two gives 16. The value 15, which is the above value decremented by 1, gives the number of branch nodes disposed in the branch node array. Because the node location number here is the node location number for the branch node array, the value obtained by subtracting the value 15 from this node location number is the node location number for the leaf node array, as was described in the example in FIG. 23. Then by summing the node location number and the base location number, the array element number is obtained.

Then at step S3035, the index key is extracted from the node read out at step S2813 shown in FIG. 28B, and at step S3036, the bit value "0" is inserted in the highest level bit position in the index key, and in step S3037 the index key is written into the array element pointed to by the array element number set at step S3034, and a leaf node is generated, and processing proceeds to step S3038.
At step S3038, the node location number and level counter saved at step S3029 are set respectively in the node location number and level counter and processing is terminated.

Next, the processing to obtain the maximum number of levels in a tree before conversion is described referencing FIG. 31A and FIG. 31B. The example of the processing flow shown in FIG. 31A and FIG. 31B describes details of the processing shown step S2802a of FIG. 28A.
FIG. 31A is a drawing describing an example of the processing flow of the prior stage of processing to obtain the maximum number of levels in a tree before conversion.

As shown in FIG. 31A, first, in step S3101, the value 1 is set in the level counter, and in step S3102, the value set in the level counter is set in the maximum level counter. In other words the level counter and the maximum level counter are initialized with the value 1.
Next, in step S3107, the array element number of the root node for the tree is set in the array element number, and processing proceeds to step S3113 shown in FIG. 31B.

FIG. 31B is a drawing describing an example of the processing flow of the latter stage of processing to obtain the maximum number of levels in a tree before conversion. As shown in FIG. 31B, in step S3113, the array element pointed to by the array element number is read out as a node from the array stored in the tree before conversion. The first time step S3113 is processed, the array element number of the root node has been set in the array element number at step S3107. In the second and thereafter processing, the array element number is set at step S3128 described later. In the description hereinbelow, just as for the description for FIG. 28B, the node read out at step S3113 may at times be called the traversal start node.

Next, in step S3115, the node type is extracted from the node read-out at step S3113, and at step S3116, a determination is made whether the read-out node type indicates a branch node. If the determination in step S3116 is that the node type indicates a leaf node rather than a branch node, processing proceeds to step S3121, and if it indicates a branch node processing proceeds to step S3117.

At step S3117, the level counter is incremented by the value 1, and processing proceeds to step S3119, wherein the coupled node indicator is extracted from the node read-out at step S3113, and at step S3120, the value 0 is added to the extracted coupled node indicator and the result is set in the array element number.
Then, in step S3120a, the array element number and the counter value in the level counter are stored in the search path stack, and a return is made to step S3113. Here, because the array element number stored in the search path stack is the value for which the value 0 is added to the extracted coupled node indicator at step S3120, it is the array element number for node [0].

The above noted processing loop of step S3113 to step S3120a is repeated until the node type in step S3116 indicates a leaf node. In other words, as a processing block, it traverses the nodes from the traversal start node until the first leaf node and acquires the level number for the leaf node. Because, in the example of the processing flow shown in FIG. 31B, in step S3120 the coupled node indicator is incremented by the value 0 and the result is set in the array element number, the nodes are traversed giving priority to the node [0] side, but it is clear to one skilled in the art that it is also possible to traverse the nodes giving priority to the node [1] side.

Conversely, when the determination in step S3116 is that the node type indicates a leaf node rather than a branch node, processing proceeds to step S3121 and a determination is made whether the counter value in the level counter is larger than the value set in the maximum level counter. If the result of the determination in step S3116 is that the counter value in the level counter is larger than the value set in the maximum level counter, at step S3122, the counter value in the level counter is set in the maximum level counter and processing proceeds to step S3123. If the result of the determination in step S3116 is that the counter value in the level counter is not larger than the value set in the maximum level counter, processing proceeds to step S3123.

At step S3123, a determination is made whether the stack pointer of the search path stack points to the array element number of the root node of the tree.
If the stack pointer of the search path stack points to the array element number of the root node of the tree, the processing of the level number for all the leaf nodes in the tree has been completed and processing is terminated. If it does not, processing proceeds to step S3124.

At step S3124, the array element number and the counter value of the level counter are extracted from the search path stack and the stack pointer of the search path stack is decremented by 1. Next, in step S3128, the value 1 is added to the array element number extracted at step S3124, and the array element number of node [1] is acquired as the array element number of the traversal start node, and a return is made to step S3113.

By repeating the above noted processing loop of step S3113 to step S3128 until a determination in step S3123 is made that the stack pointer for the search path stack points to the array element number of the root node for the tree, all of the nodes in the tree are traversed and the maximum number of levels in the tree is obtained.

Although the preferred embodiments for implementing this invention were described above in detail, it is clear to one skilled in the art that the embodiments implementing this invention are not limited to the ones described and that various modifications are possible.
Also it clear that the bit string search apparatus related to embodiment 1, embodiment 2, and embodiment 3 of this invention can be constructed on a computer by a program that executes on a computer the processing shown in the examples in FIG. 6, FIG. 10 and FIG. 11, FIG. 14, FIG. 16 and FIG. 17, or FIG. 24 to FIG. 26C. Therefore, the above-noted programs, and a computer-readable storage medium into which the programs are stored are encompassed by the embodiments of the present invention. Furthermore, the data configuration of the coupled node tree in this invention is also encompassed by the embodiments of the present invention.

## Claims

1. A bit string search apparatus (500) for searching for index keys based on a tree data structure that holds index keys composed of bit strings or information for accessing those index keys by means of a search key composed of a bit string, comprising:
a coupled node tree (200a) being stored in an array (400, 510) and having
a root node (401, 210a) stored in the array in the array element with array element number 1 which is the starting point of the tree and
node pairs (411, 201b, 201c) that are the elements configuring the tree, with two nodes, a primary node (412, 210b, 210c) and a non-primary node (413, 211b, 211c), arranged in adjacent areas of storage,
wherein the nodes have an area that holds the node type (402, 220b, 220c), which indicates whether the node is a branch node or a leaf node, and
the branch node (413, 210b) having, in addition to the node type, an area that holds a discrimination bit position of the search key (403, 230b) but not having an area that holds the array element number of an array element wherein is stored the primary node of the node pair at an immediately lower level that is a link target nor having an area wherein is stored the index key composed of bit string that is the object of searches or information for accessing the index key, and
the leaf node (412, 210c) having, in addition to the node type, an area (418, 250c) wherein is stored the index key composed of bit string that is the object of searches or information for accessing that index key but not having an area that holds a discrimination bit position of the search key, and
wherein each primary node is disposed in the coupled node tree in an array element with an array element number whose value is twice that of the array element number for the array element wherein is disposed the branch node at the level immediately above the primary node;
a search start position setting means (520) that acquires the array element number of the array element wherein is disposed the node for starting the search and sets the acquired array element number as an array element number of the link target node;
a node read-out means (530) that reads out the node disposed in the array element with the array element number set as the array element number of the link target node by the search start position setting means or by a linking means;
a node type determining means (540) that reads out the node type from the area wherein is stored the node type of the node read out by the node read-out means and determines whether the node type is that indicating a leaf node or that indicating a branch node;
an index key read-out means (570) that directly reads out the index key from the area in the leaf node holding the index key or reads out the index key based on information for accessing the index key;
a linking means (560) that, when the node type determined by the node type determining means (540) is that indicating a branch node, reads out the discrimination bit position from the area in the branch node holding the discrimination bit position and sets a sum of double the value of the array element number for the array element wherein is disposed the branch node and the bit value at the read-out discrimination bit position in the search key as an array element number of the link target node; and
wherein
the node type of the node read out by the node read-out means (530) is determined by the node type determining means (540) and, if the node type indicates a leaf node, the index key is read out by the index key read-out means (570), and
if the node type indicates a branch node,
the process is repeated of
setting the array element number of the link target node by the linking means (560) and
reading out, by the node read-out means (530), the node disposed in the array element with the array element number that has been set as that of the link target node and
determining the node type of the read-out node by the node type determining means (540)
until the node type indicates a leaf node, and
when the node type indicates a leaf node, the index key is read out by the index key read-out means (570).

2. A bit string search method that is executed by the bit string search apparatus (500) according to claim 1, comprising:
a search start position setting step (S601) that acquires the array element number of the array element wherein is disposed the node for starting the search and sets the acquired array element number as an array element number of the link target node;
a node read-out step (S603) that reads out the node disposed in the array element with the array element number set as the array element number of the link target node by the search start position setting step (S601) or by a linking step (S606-S609);
a node type determining (S605) step that reads out the node type from the area wherein is stored the node type of the node read out by the node read-out step and determines whether the node type is that indicating a leaf node or that indicating a branch node;
an index key read-out step (S610) that directly reads out the index key from the area in the leaf node holding the index key or reads out the index key based on information for accessing the index key;
a linking step (S606-S609) that, when the node type determined by the node type determining step (S605) is that indicating a branch node, reads out the discrimination bit position from the area in the branch node holding the discrimination bit position and sets a sum of double the value of the array element number for the array element wherein is disposed the branch node and the bit value at the read-out discrimination bit position in the search key as an array element number of the link target node; and
wherein
the node type of the node read out by the node read-out step (S603) is determined by node type determining step (S605) and, if the node type indicates a leaf node, the index key is read out by the index key read-out step (S610), and
if the node type indicates a branch node,
the process is repeated of
setting the array element number of the link target node by the linking step (S606-S609) and
reading out, by the node read-out step (S603), the node disposed in the array element with the array element number that has been set as that of the link target node and
determining the node type of the read-out node by the node type determining step (S605)
until the node type indicates a leaf node, and
when the node type indicates a leaf node, the index key is read out by the index key read-out step (S610).

3. A program for executing on a computer the bit string search method according to claim 2.

4. A computer readable storage medium storing the program that executes on a computer the bit string search method according to claim 2.

5. A tree data structure, for the use of bit string searching by a search key composed of a bit string, that holds index keys consisting of bit strings that are the object of searches or information for accessing the index keys, comprising:
a tree (200a) being stored in an array (400, 510) and having
a root node (401, 210a) stored in the array in the array element with array element number 1 which is the starting point of the tree and
node pairs (411, 201b, 201c) that are the elements configuring the tree, with two nodes, a primary node (412, 210b, 210c) and a non-primary node (413, 211 b, 211c), arranged in adjacent areas of storage,
wherein the nodes have an area that holds the node type (402, 220b, 220c), which indicates whether the node is a branch node or a leaf node, and
the branch node (413, 210b) having, in addition to the node type, an area that holds a discrimination bit position of the search key (403, 230b) but not having an area that holds the array element number of an array element wherein is stored the primary node of the node pair at an immediately lower level that is the link target nor having an area wherein is stored the index key consisting of bit string that is the object of searches or information for accessing that index key, and
the leaf node (412, 210c) having, in addition to the node type, an area (418, 250c) wherein is stored the index key consisting of bit string that is the object of searches or information for accessing that index key but not having an area that holds a discrimination bit position of the search key, and
wherein each primary node is disposed in the tree in an array element with an array element number whose value is twice that of the array element number for the array element wherein is disposed the branch node at the level immediately above the primary node; and
wherein by a bit string search apparatus with a storing means for the tree, a search method by the search key is enabled such that
a search start position setting step (S601) that acquires the array element number of the array element wherein is disposed the node for starting the search and sets the acquired array element number as an array element number of the link target node, and
a node read-out step (S603) that reads out the node disposed in the array element with the array element number set as the array element number of the link target node by the search start position setting step (S601) or by a linking step (S606-S609), and
a node type determining step (S605) that reads out the node type from the area wherein is stored the node type of the node read out by the node read-out step and determines whether the node type is that indicating a leaf node or that indicating a branch node, and
an index key read-out step (S610) that directly reads out the index key from the area in the leaf node holding the index key or reads out the index key based on information for accessing the index key, and
a linking step S606-S609) that, when the node type determined by the node type determining step (S605) is that indicating a branch node, reads out the discrimination bit position from the area in the branch node holding the discrimination bit position and sets a sum of double the value of the array element number for the array element wherein is disposed the branch node and the bit value at the read-out discrimination bit position in the search key as an array element number of the link target node, and
wherein
the node type of the node read out by the node read-out step is determined by node type determining step (S605) and, if the node type indicates a leaf node, the index key is read out by the index key read-out step (S610), and if the node type indicates a branch node,
the process is repeated of setting the array element number of the link target node by the linking step (S606-S609) and
reading out, by the node read-out step (S603), the node disposed in the array element with the array element number that has been set as that of the link target node and
determining the node type of the read-out node by the node type determining step (S605)
until the node type indicates a leaf node, and
when the node type indicates a leaf node, the index key is read out by the index key read-out step (S610).

6. A computer readable storage medium storing the tree data structure according to claim 5.

7. A bit string search apparatus (500) for searching for index keys based on a tree data structure that holds index keys composed of bit strings or information for accessing those index keys by means of a search key composed of a bit string, comprising:
a coupled node tree (200a) being stored in an array (400a, 510) and having
a root node (401a, 210a), which is the starting point of the tree, stored in the array in the array element with the array element number (630) computed by adding a base location number (600), which is the array element number determining the position of the root node, and an offset number (610), which is the location of the starting position of nodes at each level in the tree, to value 1 of a node location number (620), and
node pairs (411 a, 201b, 201c) that are the elements configuring the tree, with two nodes, a primary node (412a, 210b, 210c) and a non-primary node (413a, 211b, 211c), arranged in adjacent areas of storage,
wherein the nodes have an area that holds the node type (402a, 220b, 220c), which indicates whether the node is a branch node or a leaf node, and
the branch node (413a, 210b) having, in addition to the node type, an area that holds a discrimination bit position of the search key (403a, 230b) but not having an area that holds the array element number of an array element wherein is stored the primary node of the node pair at an immediately lower level that is the link target nor having an area wherein is stored the index key consisting of bit string that is the object of searches or information for accessing the index key, and
the leaf node (412a, 210c) having, in addition to the node type, an area (418a, 250c) wherein is stored the index key consisting of bit string that is the object of searches or information for accessing the index key but not having an area that holds a discrimination bit position of the search key, and
wherein each primary node is disposed in the coupled node tree in an array element with an array element number whose value is computed by adding a sum of the base location number and the offset number for the next level of the level of the branch node immediately above the primary node to twice that of the node location number for the array element wherein is disposed the branch node immediately above the primary node;
a search start position setting means (520) that, based on the node location number for a node for starting the search, an offset number for a level of the node for starting the search, and the base location number, acquires the array element number of the array element wherein is disposed the node for starting the search and sets the acquired array element number as an array element number of the link target node;
a node read-out means (530) that reads out the node disposed in the array element with the array element number set as the array element number of the link target node by the search start position setting means or by a linking means;
a node type determining means (540) that reads out the node type from the area wherein is stored the node type of the node read out by the node read-out means and determines whether the node type is that indicating a leaf node or that indicating a branch node;
an index key read-out means (570) that directly reads out the index key from the area in the leaf node holding the index key or reads out the index key based on information for accessing the index key;
a linking means (560) that, when the node type determined by the node type determining means (540) is that indicating a branch node,
reads out the discrimination bit position from the area in the branch node holding the discrimination bit position and
obtains a node location number of the link target node by computing a sum of double the value of the node location number for the array element wherein is disposed the branch node and the bit value at the read-out discrimination bit position in the search key and
sets a sum of the node location number of the link target, the base location number, and the offset number for the next level of the level of the branch node as an array element number of the link target node; and
wherein
the node type of the node read out by the node read-out means (530) is determined by the node type determining means (540) and, if the node type indicates a leaf node, the index key is read out by the index key read-out means (570), and
if the node type indicates a branch node,
the process is repeated of
setting the array element number of the link target node by the linking means (560) and
reading out, by the node read-out means (530), the node disposed in the array element with the array element number that has been set as that of the link target node and
determining the node type of the read-out node by the node type determining means (540)
until the node type indicates a leaf node, and
when the node type indicates a leaf node, the index key is read out by the index key read-out means (570).

8. A bit string search method that is executed by the bit string search apparatus according to claim 7, comprising:
a search start position setting step (S 1401a-S1402d) that acquires the array element number (630) of the array element wherein is disposed the node for starting the search based on the node location number (620) of a node for starting the search and an offset number (610) for a level of the node for starting the search and the base location number (600) and sets the acquired array element number as an array element number of the link target node;
a node read-out step (S1403) that reads out the node disposed in the array element with the array element number set as the array element number of the link target node by the search start position setting step (S1401a-S1402d) or by a linking step (S 1406-S 1402b);
a node type determining step (S1404, S 1405) that reads out the node type from the area wherein is stored the node type of the node read out by the node read-out step (S1403) and determines whether the node type is that indicating a leaf node or that indicating a branch node;
an index key read-out step (S 1410) that directly reads out the index key from the area in the leaf node holding the index key or reads out the index key based on information for accessing the index key;
a linking step (S1406-S1402b) that, when the node type determined by the node type determining step is that indicating a branch node,
reads out (S 1406) the discrimination bit position from the area in the branch node holding the discrimination bit position and
obtains (S1408) a node location number of the link target node by computing a sum of double the value of the node location number for the array element wherein is disposed the branch node and the bit value at the read-out discrimination bit position in the search key and
sets (S1409-S1402b) a sum of the node location number of the link target, the base location number, and the offset number for the next level of the level of the branch node as an array element number of the link target node; and
wherein
the node type of the node read out by the node read-out step (S 1403) is determined by node type determining step (S1404,S1405) and, if the node type indicates a leaf node, the index key is read out by the index key read-out step (S 1410), and if the node type indicates a branch node,
the process is repeated of
setting the array element number of the link target node by the linking step (S1406-S1402b) and
reading out, by the node read-out step (S1403), the node disposed in the array element with the array element number that has been set as that of the link target node and
determining the node type of the read-out node by the node type determining step (S1404,S1405)
until the node type indicates a leaf node, and
when the node type indicates a leaf node, the index key is read out by the index key read-out step (S1410).

9. A program for executing on a computer the bit string search method according to claim 8.

10. A computer readable storage medium storing a program that executes on a computer the bit string search method according to claim 8.

11. A tree data structure, for the use of bit string searching by a search key composed of a bit string, that holds index keys consisting of bit strings that are the object of searches or information for accessing the index keys, comprising:
a tree (200a) being stored in an array (400a, 510) and having a root node (401a, 210a), which is the starting point of the tree, stored in the
array in the array element with the array element number (630) computed by adding the base location number (600), which is the array element number determining the position of the root node, and an offset number, which is the location of the starting position of nodes at each level in the tree, to value 1 of a node location number (620), and
node pairs (411a, 201 b, 20 1 c) that are the elements configuring the tree, with two nodes, a primary node (412a, 210b, 210c) and a non-primary node (413a, 211b, 211c), arranged in adjacent areas of storage,
wherein the nodes have an area that holds the node type (402a, 220b, 220c), which indicates whether the node is a branch node or a leaf node, and
the branch node (413a, 210b) having, in addition to the node type, an area that holds a discrimination bit position of the search key (403a, 230b) but not having an area that holds the array element number of an array element wherein is stored the primary node of the node pair at an immediately lower level that is the link target nor having an area wherein is stored the index key consisting of bit string that is the object of searches or information for accessing the index key, and
the leaf node (412a, 210c) having, in addition to the node type, an area (418a, 250c) wherein is stored the index key consisting of bit string that is the object of searches or information for accessing the index key but not having an area that holds a discrimination bit position of the search key, and
wherein each primary node is disposed in the tree in an array element with an array element number whose value is computed by adding a sum of the base location number and the offset number for the next level of the level of the branch node immediately above the primary node to twice that of the node location number for the array element wherein is disposed the branch node immediately above the primary node; and
wherein by a bit string search apparatus with a storing means for the tree, a search
method by the search key is enabled such that
a search start position setting step (S1401a-S1402d) that acquires the array element number (630) of the array element wherein is disposed the node for starting the search based on the node location number (620) of a node for starting the search and an offset number (610) for a level of the node for starting the search and the base location number (600) and sets the acquired array element number as an array element number of the link target node, and
a node read-out step (S1403) that reads out the node disposed in the array element with the array element number set as the array element number of the link target node by the search start position setting step (S1401a-S1402d) or by a linking step (S 1406-S 1402b), and
a node type determining step (S 1404, S1405) that reads out the node type from the area wherein is stored the node type of the node read out by the node read-out step (S1403) and determines whether the node type is that indicating a leaf node or that indicating a branch node, and
an index key read-out step (S1410) that directly reads out the index key from the area in the leaf node holding the index key or reads out the index key based on information for accessing the index key, and
a linking step (S1406-S1402b) that, when the node type determined by the node type determining step is that indicating a branch node,
reads out (S 1406) the discrimination bit position from the area in the branch node holding the discrimination bit position and
obtains (S1408) a node location number of the link target node by computing a sum of double the value of the node location number for the array element wherein is disposed the branch node and the bit value at the read-out discrimination bit position in the search key and
sets (S1409-S1402b) a sum of the node location number of the link target, the base location number, and the offset number for the next level of the level of the branch node as an array element number of the link target node; and
wherein
the node type of the node read out by the node read-out step (S1403) is determined by node type determining step (S1404,S1405) and, if the node type indicates a leaf node, the index key is read out by the index key read-out step (S 1410), and
if the node type indicates a branch node,
the process is repeated of
setting the array element number of the link target node by the linking step (S1406-S1402b) and
reading out, by the node read-out step (S1403), the node disposed in the array element with the array element number that has been set as that of the link target node and
determining the node type of the read-out node by the node type determining step (S1404,S1405)
until the node type indicates a leaf node, and
when the node type indicates a leaf node, the index key is read out by the index key read-out step (S1410).

12. A computer readable storage medium storing the data structure according to claim 11.

13. A bit string search apparatus (900) for searching for index keys based on a tree data structure that holds index keys composed of bit strings or information for accessing those index keys by means of a search key composed of a bit string, comprising:
a coupled node tree (200b) being stored in an array (800, 910) and composed of elements configuring the tree up to the n-th level (n being a positive integer), and having
a root node (801, 210a) which is the starting point of the tree, stored in the array in the array element with array element number 1 and
node pairs (821, 831, 201d, 201e) that are the elements configuring the tree, with two nodes, a primary node (822, 823, 210d, 210e) and a non-primary node (823, 833, 211d, 211e), arranged in adjacent areas of storage,
wherein the nodes do not have an area that holds a node type, which indicates whether the node is a branch node or a leaf node, and
the branch node (822, 210d) having an area that holds a discrimination bit position of the search key (803, 230d) but not having an area that holds an array element number for the array element wherein is disposed the primary node of the immediately lower node pair that is a link target, nor an area wherein is stored an index key or information for accessing the index key, and
the leaf node (832, 833, 210e, 211e) having an area (818, 250e, 251e) that holds an index key or information for accessing the index key but not having an area wherein is stored the discrimination bit position for the search key, and
wherein
each of the index keys has a specific bit value inserted in a specific position in each of original index keys respectively, and
the search key has the specific bit value inserted in the same specific position in the original search key as the specific position in the index keys, and
each primary node is disposed in the coupled node tree in an array element with an array element number whose value is twice that of the array element number for the array element wherein is disposed the branch node at the level immediately above the primary node, and
leaf nodes are positioned only at the n-th level;
a search start position setting means (920) that sets array element number 1 for the array element wherein is disposed the root node, which starts the search, as an array element number of the link target node;
a node read-out means 1 (9301) to a node read-out means n (930n);
a linking means 1 (9601) to a linking means n-1 (960n-1);
an index key read-out means (970); and
wherein
the node read-out means 1 (9301) reads out the root node from the array element with array element number 1 set by the search start position setting means (920) as the array element number of the link target node, and
the linking means 1 (9601) reads out the discrimination bit position from the area wherein is stored the discrimination bit position for the root node read out by node read-out means 1 (9301), and sets a sum of the bit value at the read-out discrimination bit position in the search key and the value that is twice the array element number of the array element wherein is disposed the root node as the array element number of the link target node, and
the node read-out means 2 (9302) to the node read-out means n-1 (930n-1) read out the array elements pointed to by the array element numbers of the link target nodes, set by the linking means 1 (9601) to the linking means n-2 (960n-2), respectively, as branch nodes, and
each of the linking means 2 (9602) to the linking means n-1 (960n-1) reads out the discrimination bit position from the area wherein is stored the discrimination bit position for the branch node, respectively, read out by each of the node read-out means 2 (9302) to the node read-out means n-1 (930n-1), and sets a sum of the bit value at the read-out discrimination bit position in the search key and the value that is twice the array element number of the array element wherein is disposed the branch node as the array element number of the link target node, and
the node read-out means n (930n) reads out, as a leaf node, the array element pointed to by the array element number of the link target node, set by the linking means n-1 (960n-1), and
the index key read-out means (970) reads out an index key either directly from the leaf node read out by the node read-out means n or reads out the index key based on the information for accessing the index key stored in the leaf node.

14. A bit string search method that is executed by the bit string search apparatus (900) according to claim 13, comprising:
a search start position setting step (S1001) that sets array element number 1 for the array element wherein is disposed the root node, which starts the search, as an array element number of the link target node;
a node read-out step 1 (S1002 (S1101)) to a node read-out step n (S100n+1);
a linking step 1 (S1002 (S1101-S1104)) to a linking step n-1 (S100n (S1101-S1104));
an index key read-out step (S100n+1); and
wherein,
the node read-out step 1 (S1002 (S1101)) reads out the root node from the array element with array element number 1 set by the search start position setting step (S1001) as the array element number of the link target node, and
the linking step 1 (S1002 (S1101-S1104)) reads out the discrimination bit position from the area wherein is stored the discrimination bit position for the root node read out by the node read-out step 1 (S1002 (S1101)), and sets a sum of the bit value at the read-out discrimination bit position in the search key and the value that is twice the array element number of the array element wherein is disposed the root node as the array element number of the link target node, and
the node read-out step 2 (S1003 (S1101)) to the node read-out step n-1 (S100n (S1101)) read out the array elements pointed to by the array element numbers of the link target nodes , set by the linking step 1 (S1002 (S1101-S1104)) to the linking step n-2 (S100n-1 (S1101-S1104)), respectively, as branch nodes, and
each of the linking step 2 (S1003 (S1101-S1104)) to the linking step n-1 (S100n (S1101-S1104)) reads out the discrimination bit position from the area wherein is stored the discrimination bit position for the branch node, respectively, read out by each of the node read-out step 2 (S1003 (S1101)) to the node read-out step n-1 (S100n (S1101), and sets a sum of the bit value at the read-out discrimination bit position in the search key and the value that is twice the array element number of the array element wherein is disposed the branch node as the array element number of the link target node, and
the node read-out step n (S100n+1) reads out, as a leaf node, the array element pointed to by the array element number of the link target node, set by the linking step n-1(S100n(S1101-S1104)), and
the index key read-out step (S100n+1) reads out an index key either directly from the leaf node read out by the node read-out step n (S100n+1) or reads out the index key based on the information for accessing the index key stored in the leaf node.

15. A program for executing on a computer the bit string search method according to claim 14.

16. A computer readable storage medium storing a program that executes on a computer the bit string search method according to claim 14.

17. A tree data structure, for the use of bit string searching by a search key composed of a bit string, that holds index keys consisting of bit strings that are the object of searches or information for accessing the index keys, comprising:
a tree (200b) being stored in an array (800, 910) and composed of elements configuring the tree up to the n-th level (n being a positive integer), and having a root node (801, 210a) which is the starting point of the tree, stored in the array in the array element with array element number 1 and
node pairs (821, 831, 201d, 201e) that are the elements configuring the tree,
with two nodes, a primary node (822, 823, 210d, 210e) and a non-primary node (823, 833, 211d, 211e), arranged in adjacent areas of storage,
wherein the nodes do not have an area that holds a node type, which indicates
whether the node is a branch node or a leaf node, and
the branch node (822, 210d) having an area that holds a discrimination bit
position of the search key (803, 230d) but not having an area that holds an array element number for the array element wherein is disposed the primary node of the immediately lower node pair that is a link target, nor an area wherein is stored an index key or information for accessing the index key, and
the leaf node (832, 833, 210e, 211e) having an area (818, 250e, 251e) that holds
an index key or information for accessing the index key but not having an area wherein is stored the discrimination bit position for the search key, and
wherein
each of the index keys has a specific bit value inserted in a specific position in
each of original index keys respectively, and
the search key has the specific bit value inserted in the same specific position
in the original search key as the specific position in the index keys, and each primary node is disposed in the coupled node tree in an array element
with an array element number whose value is twice that of the array element number for the array element wherein is disposed the branch node at the level immediately above the primary node, and
leaf nodes are positioned only at the n-th level; and
wherein by a bit string search apparatus with a storing means for the tree, a search method by the search key is enabled such that
a search start position setting step (S1001) that sets array element number 1 for the array element wherein is disposed the root node, which starts the search, as an array element number of the link target node, and
a node read-out step 1 (S1002 (S1101)) to a node read-out step n (S100n+1), and
a linking step 1 (S1002 (S1101-S1104)) to a linking step n-1 (S100n (S1101-S1104)), and
an index key read-out step (S100n+1), and
wherein,
the node read-out step 1 (S1002 (S1101)) reads out the root node from the array
element with array element number 1 set by the search start position setting step (S1001) as the array element number of the link target node, and
the linking step 1 (S1002 (S1101-S1104)) reads out the discrimination bit position from the area wherein is stored the discrimination bit position for the root node read out by the node read-out step 1, and sets a sum of the bit value at the read-out discrimination bit position in the search key and the value that is twice the array element number of the array element wherein is disposed the root node as the array element number of the link target node, and
the node read-out step 2 (S1003 (S1101-S1104)) to the node read-out step n-1 (S100n (S1101-S1104)) read out the array elements pointed to by the array element numbers of the link target nodes , set by the linking step 1 (S1002 (S1101-S1104)) to the linking step n-2 (S100n-1 (S1101-S1104)), respectively, as branch nodes, and
each of the linking step 2 (S1003 (S1101-S1104)) to the linking step n-1 (S100n (S1101-S1104)) reads out the discrimination bit position from the area wherein is stored the discrimination bit position for the branch node, respectively, read out by each of the node read-out step 2 (S1003 (S1101)) to the node read-out step n-1 (S100n (S1101), and sets a sum of the bit value at the read-out discrimination bit position in the search key and the value that is twice the array element number of the array element wherein is disposed the branch node as the array element number of the link target node, and
the node read-out step n (S100n+1 (S1101)) reads out, as a leaf node, the array element pointed to by the array element number of the link target node, set by the linking step n-1 (S100n(S1101-S1104)), and
the index key read-out step (S100n+1) reads out an index key either directly from the leaf node read out by the node read-out step n (S100n+1) or reads out the index key based on the information for accessing the index key stored in the leaf node.

18. A computer readable storage medium storing the data structure according to claim 17.

19. A bit string search apparatus (900) for searching for index keys based on a tree data structure that holds index keys composed of bit strings or information for accessing those index keys by means of a search key composed of a bit string, comprising:
a coupled node tree (200b) being stored in an array (800a, 910) and composed of elements configuring the tree up to the n-th level (n being a positive integer), and having
a root node (801a, 210a) which is the starting point of the tree, stored in the array in the array element with the array element number (730) computed by adding a base location number (700), which is the array element number determining the position of the root node, and an offset number (710), which is the location of the starting position of nodes at each level in the tree, to value 1 of a node location number (720), and
node pairs (821a, 831a, 201d, 201e) that are the elements configuring the tree, with two nodes, a primary node(822a, 823a, 210d, 210e) and a non-primary node (823a, 833a, 211d, 211e), arranged in adjacent areas of storage,
wherein the nodes do not have an area that holds a node type, which indicates whether the node is a branch node or a leaf node, and
the branch node (822a, 210d) having an area that holds a discrimination bit position of the search key (803a, 230d) but not having an area that holds an array element number for the array element wherein is disposed the primary node of the immediately lower node pair that is a link target, nor an area wherein is stored an index key or information for accessing the index key, and
the leaf node (832a, 833a, 210e, 211e) having an area (818a, 250e, 251e) that
holds an index key or information for accessing the index key but not having an area wherein is stored the discrimination bit position for the search key, and
wherein
each of the index keys has a specific bit value inserted in a specific position in each of original index keys respectively, and
the search key has the specific bit value inserted in the same specific position in the original search key as the specific position in the index keys, and
each primary node is disposed in the coupled node tree in an array element with an array element number whose value is computed by adding a sum of the base location number and the offset number for the next level of the level of the branch node immediately above the primary node to twice that of the node location number for the array element wherein is disposed the branch node immediately above the primary node, and
leaf nodes are positioned only at the n-th level;
a search start position setting means (920) that, based on the node location number 1, an offset number and a base location number of the root node for starting the search, acquires the array element number of the array element wherein is disposed the root node for starting the search and sets the acquired array element number as an array element number of the link target node;
a node read-out means 1 (9301) to a node read-out means n (930n);
a linking means 1 (9601) to a linking means n-1 (960n-1);
an index key read-out means (970); and
wherein,
the node read-out means 1 (9301) reads out the root node from the array element with array element number set by the search start position setting means (920) as the array element number of the link target node, and
the linking means 1 (9601)
reads out the discrimination bit position from the area wherein is stored the discrimination bit position for the root node read out by the node read-out means 1 (9301) and
obtains a node location number of the link target node by computing a sum of double the value of the node location number for the array element wherein is disposed the root node and the bit value at the read-out discrimination bit position in the search key and
sets a sum of the node location number of the link target node, the base location number, and the offset number for the next level of the level of the root node as an array element number of the link target node and,
the node read-out means 2 (9302) to the node read-out means n-1 (930n-1) read out the array elements pointed to by the array element numbers of the link target nodes, set by the linking means 1 (9601) to the linking means n-2 (960n-2), respectively, as branch nodes, and
each of the linking means 2 (9602) to the linking means n-1 (960n-1)
reads out the discrimination bit position from the area wherein is stored the discrimination bit position for the branch node, respectively, read out by each of the node read-out means 2 (9302) to the node read-out means n-1 (930n-1)and
obtains a node location number of the link target node by computing a sum of double the value of the node location number for the array element wherein is disposed the branch node and the bit value at the read-out discrimination bit position in the search key and
sets a sum of the node location number of the link target node, the base location number, and the offset number for the next level of the level of the branch node as an array element number of the link target node and,
the node read-out means n (930) reads out, as a leaf node, the array element pointed to by the array element number of the link target node, set by the linking means n-1 (960n-1), and
the index key read-out means (970) reads out the index key either directly from the leaf node read out by the node read-out means n or reads out the index key based on the information for accessing the index key stored in the leaf node.

20. A bit string search method that is executed by the bit string search apparatus according to claim 19 (900), comprising:
a search start position setting step (S1601a-S1601d) that, based on the node location number 1, an offset number and a base location number of the root node for starting the search, acquires the array element number of the array element wherein is disposed the root node for starting the search and sets the acquired array element number as an array element number of the link target node;
a node read-out step 1 (S 1602 (S1701)) to a node read-out step n (S160n+1);
a linking step 1 (S1602 (S1701-S1704)) to a linking step n-1 (S160n (S1701-S1704));
an index key read-out step (S160n+1); and
wherein,
the node read-out step 1 (S1602 (S1701)) reads out the root node from the array element with array element number set by the search start position setting step (S1601a-S1601d) as the array element number of the link target node, and
the linking step 1 (S1602 (S1701-S1704))
reads out the discrimination bit position from the area wherein is stored the discrimination bit position for the root node read out by the node read-out step 1 (S1602 (S1701)) and
obtains a node location number of the link target node by computing a sum of double the value of the node location number for the array element wherein is disposed the root node and the bit value at the read-out discrimination bit position in the search key and
sets a sum of the node location number of the link target node, the base location number, and the offset number for the next level of the level of the root node as an array element number of the link target node and,
the node read-out step 2 (S1603 (S1701)) to the node read-out step n-1 (S160n (S1701)) read out the array elements pointed to by the array element numbers of the link target nodes , set by the linking step 1 (S1602 (S 1701-S 1704)) to the linking step n-2 (S160n-1 (S1701-S1704)), respectively, as branch nodes, and
each of the linking step 2 (S1603 (S1701-S1704)) to the linking step n-1 (S160n (S1701-S1704))
reads out the discrimination bit positions from the area wherein are stored the discrimination bit positions for the branch node, respectively, read out by each of the node read-out step 2 (S1603 (SS1701)) to the node read-out step n-1 (S160n (S1701)) and
obtains a node location number of the link target node by computing a sum of double the value of the node location number for the array element wherein is disposed the branch node and the bit value at the read-out discrimination bit position in the search key and
sets a sum of the node location number of the link target node, the base location number, and the offset number for the next level of the level of the branch node as an array element number of the link target node and,
the node read-out step n (S160n+1) reads out, as a leaf node, the array element pointed to by the array element number of the link target node, set by the linking step n-1, and
the index key read-out step (S160n+1) reads out the index key either directly from the leaf node read out by the node read-out step n (S160n+1) or reads out the index key based on the information for accessing the index key stored in the leaf node.

21. A program for executing on a computer the bit string search method according to claim 20.

22. A computer readable storage medium storing a program that executes on a computer the bit string search method according to claim 20.

23. A tree data structure, for the use of bit string searching by a search key composed of a bit string, that holds index keys consisting of bit strings that are the object of searches or information for accessing the index keys, comprising:
a tree (200b) being stored in an array (800a, 910) and composed of elements configuring the tree up to the n-th level (n being a positive integer), and having a root node (801a, 210a) which is the starting point of the tree, stored in the array in the array element with the array element number (730) computed by adding a base location number (700), which is the array element number determining the position of the root node, and an offset number (710), which is the location of the starting position of nodes at each level in the tree, to value 1 of a node location number (720), and
node pairs (821a, 831a, 201 d, 201e) that are the elements configuring the tree, with two nodes, a primary node(822a, 823a, 210d, 210e) and a non-primary node (823a, 833a, 211d, 211e), arranged in adjacent areas of storage,
wherein the nodes do not have an area that holds a node type, which indicates whether the node is a branch node or a leaf node, and
the branch node (822a, 210d) having an area that holds a discrimination bit position of the search key (803a, 230d) but not having an area that holds an array element number for the array element wherein is disposed the primary node of the immediately lower node pair that is a link target, nor an area wherein is stored an index key or information for accessing the index key, and
the leaf node (832a, 833a, 210e, 211e) having an area (818a, 250e, 251e) that holds an index key or information for accessing the index key but not having an area wherein is stored the discrimination bit position for the search key, and
wherein
each of the index keys has a specific bit value inserted in a specific position in each of original index keys respectively, and
the search key has the specific bit value inserted in the same specific position in the original search key as the specific position in the index keys, and each primary node is disposed in the coupled node tree in an array element
with an array element number whose value is computed by adding a sum of the base location number and the offset number for the next level of the level of the branch node immediately above the primary node to twice that of the node location number for the array element wherein is disposed the branch node immediately above the primary node, and
leaf nodes are positioned only at the n-th level; and
wherein by a bit string search apparatus with a storing means for the tree, a search method by the search key is enabled such that
a search start position setting step (S1601a-S1601d) that, based on the node location number 1, an offset number and a base location number of the root node for starting the search, acquires the array element number of the array element wherein is disposed the root node for starting the search and sets the acquired array element number as an array element number of the link target node;
a node read-out step 1 (S1602 (SS1701)) to a node read-out step n (S160n+1);
a linking step 1 (S1602 (S1701-S1704)) to a linking step n-1 (S160n (S1701-S1704));
an index key read-out step (S160n+1); and
wherein,
the node read-out step 1 (S1602 (S1701)) reads out the root node from the array element with array element number set by the search start position setting step (S1601a-S1601d) as the array element number of the link target node, and
the linking step 1 (S1602 (S1701-S1704))
reads out the discrimination bit position from the area wherein is stored the discrimination bit position for the root node read out by the node read-out step 1 (S1602 (S1701)) and
obtains a node location number of the link target node by computing a sum of double the value of the node location number for the array element wherein is disposed the root node and the bit value at the read-out discrimination bit position in the search key and
sets a sum of the node location number of the link target node, the base location number, and the offset number for the next level of the level of the root node as an array element number of the link target node and,
the node read-out step 2 (S1603 (S1701)) to the node read-out step n-1 (S 160n (S1701)) read out the array elements pointed to by the array element numbers of the link target nodes , set by the linking step 1 (S 1602 (S1701-S1704)) to the linking step n-2 (S160n-1(S1701-S1704)), respectively, as branch nodes, and
each of the linking step 2 (S1603 (S1701-S1704)) to the linking step n-1 (S160n (S1701-S1704))
reads out the discrimination bit positions from the area wherein are stored the discrimination bit positions for the branch node, respectively, read out by each of the node read-out step 2 (S 1603 (S 1701)) to the node read-out step n-1(S160n(S1701)) and
obtains a node location number of the link target node by computing a sum of double the value of the node location number for the array element wherein is disposed the branch node and the bit value at the read-out discrimination bit position in the search key and
sets a sum of the node location number of the link target node, the base location number, and the offset number for the next level of the level of the branch node as an array element number of the link target node and,
the node read-out step n (S160n+1) reads out, as a leaf node, the array element pointed to by the array element number of the link target node, set by the linking step n-1, and
the index key read-out step (S160n+1) reads out the index key either directly from the leaf node read out by the node read-out step n (S160n+1) or reads out the index key based on the information for accessing the index key stored in the leaf node.

24. A computer readable storage medium storing the tree data structure according to claim 23.

25. A bit string search apparatus (1000) for searching for index keys based on a tree data structure that holds index keys composed of bit strings or information for accessing those index keys by means of a search key composed of a bit string, comprising:
a search tree storing means (1010) wherein is stored
a coupled node tree (200b) that is stored in an array (309a, 309b) and composed of elements configuring the tree up to the n-th level (n being a positive integer), and has
a root node (210a), which is the starting point of the tree, stored in the array in the array element with the array element number (730a) computed by adding a base location number (700a), which is the array element number determining the head position of the array elements in the array (309a) to the value 1 of a node location number (720a), and
node pairs (201b) that are the elements configuring the tree, with two nodes, a primary node (210b) and a non-primary node (211b), arranged in adjacent areas of storage,
wherein the nodes do not have an area that holds a node type, which indicates whether the node is a branch node or a leaf node, and
the branch node (210b, 211b) having an area that holds a discrimination bit position of the search key (230b, 231b) but not having an area that holds an array element number for the array element wherein is disposed the primary node of the immediately lower node pair that is a link target, nor an area wherein is stored an index key or information for accessing the index key, and
the leaf node (2101) having an area (2501) that holds an index key or information for accessing the index key but not having an area wherein is stored the discrimination bit position for the search key, and
wherein
each of the index keys has a specific bit value inserted in a specific position in each of original index keys respectively, and
the search key (280) has the specific bit value inserted in the same specific position in the original search key as the specific position in the index keys, and
each primary node is disposed in the coupled node tree in an array element with an array element number whose value is computed by adding the base location number to twice that of the node location number for the array element wherein is disposed the branch node immediately above the primary node, and
leaf nodes are positioned only at the n-th level;
a branch target information storing means (1070) that holds a branch target array (311) wherein is stored, as branch target information corresponding to each branch node, a bit value in the search key (280) at the discrimination bit position in each branch node respectively;
a branch target information setting execution part (1030) that
reads out, in node location number sequence, branch nodes from the coupled node tree stored in the search tree storing means (1010) and
extracts the branch target information by means of the discrimination bit position in the branch node and the search key (280) and
successively sets the branch target information in each of the array elements in the branch target array (311) starting from the array element with array element number 1;
a next level node branch target information storage position computing execution part (1040) that
reads out the branch target information stored in the array element with array element number 1 set in the branch target array (311) as the branch target information for a node at the first level in the coupled node tree (200b) and
obtains the array element number for the array element in the branch target array (311) wherein is stored the branch target information for a second level node in the coupled node tree (200b) by adding the read-out branch target information to double the value of array element number 1 and thereinafter, taking level 2 to level n-2 as a given level,
repeats the process of
computing a sum of the branch target information for the node at the given level and a value twice that of the array element number of the array element wherein is stored the branch target information for the node at the given level and
making the sum as the array element number for the array element in the branch target array wherein is stored the branch target information for a node at the next level in the coupled node tree, and then obtains the array element number for an array element in the branch target
array wherein is stored the branch target information for a node at the n-1 level in the coupled node tree; and
a leaf node outputting execution part (1060) that
reads out, from the branch target array, the branch target information for the node at the n-1 level in the coupled node tree by means of the array element number obtained by the next level node branch target information storage position computing execution part (1040) and
obtains a storage position wherein is stored the leaf node based on the read-out branch target information and the obtained array element number and
reads out the leaf node stored at the storage position from the coupled node tree stored in the search tree storing means.

26. A bit string search apparatus according to claim 25, wherein
the array wherein is stored the coupled node tree (200b) is configured from a branch node array (309a), wherein are stored branch nodes, and a leaf node array (309b), wherein are stored leaf nodes, and
of the array holding the coupled node tree, the branch node array (309)a matches the part holding the elements configuring the tree up to the n-1 level of the coupled node tree (200b), and
the leaf node outputting execution part (1060)
reads out, from the branch target array (311), the branch target information for the node at the n-1 level in the coupled node tree (200b) by means of the array element number obtained by the next level node branch target information storage position computing execution part (1040) and
obtains a node location number (720b) of the leaf node array (309b) by computing a sum of the read-out branch target information and a value twice that of the obtained array element number and then subtracting from the sum a node location number (720a) with a largest value in the branch node array (309a) and
obtains a storage position for the leaf node (730b) by adding to the node location number (720b) for the leaf node array (309b) the base location number (700b), which number determines the position of the head array element in the leaf node array (309b) and
reads out, from the coupled node tree (200b) stored in the search tree storing means (1010), the leaf node stored at the storage position, and
reads out the index key from the leaf node or reads out the index key based on information for accessing the index key.

27. A bit string search method that is executed by the bit string search apparatus (1000) according to claim 25, comprising:
a branch target information setting step (S2402) that
reads out (S2501(S2510)-S250m(S2510)), in node location number sequence, branch nodes from a coupled node tree (200b) stored in the search tree storing means (1010) and
extracts (S2501(S2511)-S250m(S2511)) the branch target information by means of the discrimination bit position in the branch node and the search key (280) and
successively sets (S2501(S2512)-S250m(S2512)) the branch target information in each of the array elements in the branch target array (311) starting from the array element with array element number 1;
a next level node branch target information storage position computing step
(S2403(S2600-S260n-2)) that
reads out (S2600, S2601(S2611)) the branch target information stored in the array element with array element number 1 set in the branch target array (311) as the branch target information for a node (210a) at the first level in the coupled node tree (200b) and
obtains (S2601(S2612,S2613)) the array element number for the array element in the branch target array (311) wherein is stored the branch target information for a second level node (210b) in the coupled node tree (200b) by adding the read-out branch target information to double the value of array element number 1 and
thereinafter, taking level 2 to level n-2 as a giving level,
repeats (S2602-S260n-2) the process of
computing a sum of the branch target information for the node (210b) at the given level and a value twice that of the array element number of the array element wherein is stored the branch target information for the node (210b) at the given level and
making the sum as the array element number for the array element in the branch target array wherein is stored the branch target information for a node (211c) at the next level in the coupled node tree (200b), and then
obtains the array element number for an array element in the branch target array wherein is stored the branch target information for a node (211d) at the n-1 level in the coupled node tree (200b); and
a leaf node outputting step (S2403(S260n-1), S2404) that
reads out (S260n-1(S2611)), from the branch target array (311), the branch target information for the node (211d) at the n-1 level in the coupled node tree (200b) by means of the array element number obtained by the next level node branch target information storage position computing step (S2403(S2600-S260n-2)) and
obtains (S260n-1(S2612,S2613)) a storage position wherein is stored the leaf node (2101) based on the read-out branch target information and the obtained array element number and
reads out the leaf node (2101) stored at the storage position (720b) from the coupled node tree (200b) stored in the search tree storing means (1010).

28. A bit string search method according to claim 27, wherein
the array wherein is stored the coupled node tree (200b) is configured from a branch node array (309a), wherein are stored branch nodes, and a leaf node array (309b), wherein are stored leaf nodes, and
of the arrays holding the coupled node tree, the branch node array (309a) matches the part holding the elements configuring the tree up to the n-1 level of the coupled node tree (200b), and
the leaf node outputting step (S2403(S260n-1), S2404)
reads out (S260n-1(S2611)), from the branch target array (311), the branch target information for the node (211d) at the n-1 level in the coupled node tree (200b) by means of the array element number obtained by the next level node branch target information storage position computing step(S2403(S2600-S260n-2)) and
obtains (S260n-1(S2612,S2613)) a node location number (720b) of the leaf node array (309b) by computing a sum of the read-out branch target information and a value twice that of the obtained array element number and then subtracting from the sum a node location number (720a) with a largest value in the branch node array (309a) and
obtains a storage position (730b) for the leaf node (2101) by adding to the node location number (720b) for the leaf node array (309b) the base location number (700b), which number determines the position of the head array element in the leaf node array (309b) and
reads out, from the coupled node tree (200b) stored in the search tree storing means (1010), the leaf node (2101) stored at the storage position (720b), and
reads out the index key from the node (2101) or reads out the index key based on information for accessing the index key.

29. A program for executing on a computer the bit string search method according to claim 27.

30. A computer readable storage medium storing a program that executes on a computer the bit string search method according to claim 27.
